(19) Europäisches Patentamt / European Patent Office / Office européen des brevets

(11) **EP 4 535 542 A1**

(12) **EUROPEAN PATENT APPLICATION**
published in accordance with Art. 153(4) EPC

(43) Date of publication:
**09.04.2025 Bulletin 2025/15**

(21) Application number: **23811905.1**

(22) Date of filing: **26.05.2023**

(51) International Patent Classification (IPC):
***H01M 50/451*** *(2021.01)* ***B32B 5/18*** *(2006.01)*
***B32B 27/18*** *(2006.01)* ***B32B 27/32*** *(2006.01)*
***H01G 11/52*** *(2013.01)* ***H01M 50/414*** *(2021.01)*
***H01M 50/417*** *(2021.01)* ***H01M 50/434*** *(2021.01)*
***H01M 50/437*** *(2021.01)* ***H01M 50/443*** *(2021.01)*
***H01M 50/446*** *(2021.01)* ***H01M 50/463*** *(2021.01)*
***H01M 50/489*** *(2021.01)*

(52) Cooperative Patent Classification (CPC):
**B32B 5/18; B32B 27/18; B32B 27/32; H01G 11/52; H01M 50/414; H01M 50/417; H01M 50/434; H01M 50/437; H01M 50/443; H01M 50/446; H01M 50/451; H01M 50/463; H01M 50/489**

(86) International application number:
**PCT/JP2023/019757**

(87) International publication number:
**WO 2023/229033 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.05.2022 JP 2022087215**

(71) Applicant: **Asahi Kasei Battery Separator Corporation**
**Tokyo 100-0006 (JP)**

(72) Inventor: **MISAWA, Kazushi**
**Tokyo 100-0006 (JP)**

(74) Representative: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(54) **SEPARATOR FOR POWER STORAGE DEVICES, AND POWER STORAGE DEVICE COMPRISING SAME**

(57) Provided is a separator for a power storage device, the separator including: a substrate 10 that is a polyolefin microporous membrane containing a polyolefin as a main component; and a coating layer 20 that is arranged on at least one surface of the substrate 10. In this separator, the coating layer 20 contains an inorganic filler 1 and a thermoplastic polymer, the thermoplastic polymer contains a particulate polymer 2 protruding from the surface of an inorganic filler portion L1, and, in the surface observation of the coating layer 20, a coefficient of variation (cv) of the areas ($s_i$) of Voronoi polygons obtained by Voronoi tessellation using the protruding particulate polymer 2 as a generator is 0.10 to 0.60.

Fig. 6

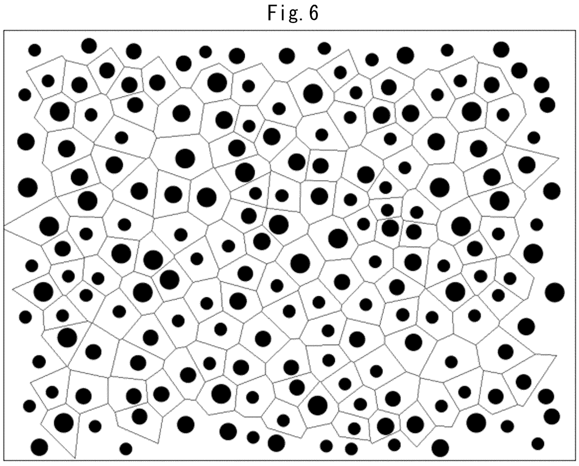

EP 4 535 542 A1

## Description

FIELD

The present invention relates to: a separator for a power storage device; and a power storage device including the same.

BACKGROUND

Power storage devices typified by lithium ion secondary batteries are being actively developed. A power storage device generally includes a positive electrode, a negative electrode, and a microporous membrane separator between the electrodes. The separator has functions of preventing direct contact between the positive electrode and negative electrode, and allowing ions to pass through an electrolyte solution maintained in micropores. The separator is required to have safety performance, such as a property of quickly terminating the battery reaction in the event of abnormal heating (fuse characteristic), and a property of maintaining its shape even at high temperatures to prevent a dangerous situation where the positive electrode and the negative electrode directly react with each other (short-circuit resistance characteristic).

Nonaqueous secondary batteries such as lithium ion secondary batteries are available on the market in various shapes such as cylindrical, prismatic, and pouch shapes, depending on the intended use. Methods of producing these batteries vary depending on the shape of each battery. For example, a method of producing a prismatic battery includes the steps of pressing a laminate of electrodes and separators or a wound body obtained by winding a laminate of electrodes and separators, and inserting the thus pressed laminate or wound body into a rectangular parallelepiped outer casing.

Especially in recent years, for the purpose of increasing the capacity of a power storage device, the volume of the power storage device is reduced by hot-pressing a laminate of electrodes and separators or a wound body obtained by winding a laminate of electrodes and separators. In this process, in order to immobilize the electrodes and the separators after the hot-pressing and maintain their volume during pressing, it is known to employ a technique of arranging a coating layer, which contains a thermoplastic polymer exhibiting an adhesive function under prescribed conditions, on a substrate and thereby improving the adhesion between the entire substrate and the electrodes.

PTL 1 discloses a separator that includes a porous coating layer containing organic polymer particles for the purpose of increasing the bonding strength between the separator and electrodes and thereby enhancing the safety, without performing a humidified phase separation process of an organic binder polymer and a secondary coating process of an adhesive layer. In this separator, the organic polymer particles protrude from the surface of the porous coating layer to a height of 0.1 μm to 3 μm.

PTL 2, which is aimed at providing a separator that exhibits excellent adhesion and heat resistance and improves the electrolyte solution injectability, discloses a separator that includes a functional layer containing inorganic particles and a particulate polymer. In this functional layer, when the surface thereof is observed in a plan view, the ratio of the area occupied by the inorganic particles per unit area of the surface of the functional layer is more than 90%, and the volume-average particle size of the particulate polymer is in a specific range and greater than the thickness of an inorganic particle layer.

PTL 3, which is aimed at providing a functional layer for an electrochemical element that exhibits excellent adhesion and allows an electrochemical element to exert excellent cycle characteristics, discloses a separator that includes a functional layer containing inorganic particles and a particulate polymer. This functional layer for an electrochemical element has a particle-detached portion and, when the surface of the functional layer is observed in a plan view, the ratio of the area of the particle-detached portion in a total area of the particulate polymer and the particle-detached portion is 0.1% to 40.0%, and the volume-average particle size of the particulate polymer is greater than the thickness of an inorganic particle layer containing the inorganic particles.

PTL 4, which relates to a separator in which a thermoplastic polymer layer is arranged on at least one surface of a substrate, describes the use of the areas (Si) of Voronoi polygons obtained by performing Voronoi tessellation for the thermoplastic polymer, from the standpoint of realizing sufficient adhesion between an electrode and the separator even when the thermoplastic polymer layer is a thin film.

[CITATION LIST]

[PATENT LITERATURE]

[PTL 1] Korean Patent Publication No. 10-2016-0118979

[PTL 2] WO 2020/175079
[PTL 3] WO 2021/085144
[PTL 4] WO 2016/047165

SUMMARY

[TECHNICAL PROBLEM]

However, these conventional separators have the following problems. For example, in PTL 1, there is a problem that, due to poor dispersibility of an adhesive polymer in the state of a coating material, parts where the adhesive polymer is aggregated are generated on the separator, and this not only leads to unevenness in the adhesive strength with an electrode and consequently reduces the adhesive strength as a whole, but also causes deterioration of the heat resistance (heat shrinkage resistance). In PTLs 2 and 3, the binding strength of a coating layer is not sufficient, and there is still room for improvement in terms of the inhibition of flaking during the production process, namely the adhesive strength with an electrode.

Further, in association with, for example, improvements in electrode materials and high-density modularization (increase in module volume energy density) of plural nonaqueous secondary batteries (single cells), there is still a demand for improvement in the output characteristics (rate characteristics) and/or cycle characteristics of batteries including separators.

In view of the above-described circumstances, an object of the present disclosure is to provide: a separator for a power storage device, which substrate can achieve not only an improvement in the adhesive strength with an electrode and an improvement in the heat shrinkage resistance, but also an improvement in the rate characteristics and/or cycle characteristics of a power storage device; and a power storage device including the same.

[SOLUTION TO PROBLEM]

Embodiments of the present disclosure are described below.

[1] A separator for a power storage device, including:

a substrate that is a polyolefin microporous membrane containing a polyolefin as a main component; and
a coating layer that is arranged on at least one surface of the substrate,
wherein
the coating layer contains an inorganic filler, and a particulate polymer of a thermoplastic polymer,
the particulate polymer includes a particulate polymer protruding from the surface of the inorganic filler portion, and
in the surface observation of the coating layer, a coefficient of variation (cv) of the areas ($s_i$) of Voronoi polygons obtained by Voronoi tessellation using the protruding particulate polymer as a generator is 0.10 to 0.60.

[2] The separator for a power storage device according to [1], wherein

the coating layer is formed in an inclined manner such that it increases in thickness toward the protruding particulate polymer, and
when the thickness of the inorganic filler portion is defined as L1 and a maximum distance from a substrate-coating layer boundary to the outer surface of the inorganic filler formed in the inclined manner is defined as L2, an average value of the gradient L2/L1 of the coating layer is 1.2 or more.

[3] The separator for a power storage device according to [1] or [2], wherein

the coating layer is formed in an inclined manner such that it increases in thickness toward the protruding particulate polymer, and
when the thickness of the inorganic filler portion is defined as L1, a maximum distance from a substrate-coating layer boundary to the outer surface of the inorganic filler formed in the inclined manner is defined as L2, and a maximum distance from the substrate-coating layer boundary to the outline of the protruding particulate polymer is defined as L3, an average value of the coverage ratio (L2 - L1)/(L3 - L1) of the protruding particulate polymer is 0.4 or more.

[4] The separator for a power storage device according to any one of [1] to [3], wherein 20% or more of the protruding

particulate polymer is in contact with the surface of the substrate.

[5] The separator for a power storage device according to any one of [1] to [4], wherein the coating layer has a 180° peel strength from the substrate of 200 gf/cm or more.

[6] The separator for a power storage device according to any one of [1] to [5], wherein the number of particles of the protruding particulate polymer is 50% or more of a total number of particles of the particulate polymer contained in the coating layer.

[7] The separator for a power storage device according to any one of [1] to [6], wherein the protruding particulate polymer is in the form of primary particles.

[8] The separator for a power storage device according to [7], wherein the primary particles have an average particle size of 1 μm to 10 μm.

[9] The separator for a power storage device according to any one of [1] to [8], having a TD heat shrinkage rate at 130°C in 1 hour of 5% or less.

[10] The separator for a power storage device according to any one of [1] to [9], having a TD heat shrinkage rate at 150°C in 1 hour of 5% or less.

[11] The separator for a power storage device according to any one of [1] to [10], wherein the amount of the particulate polymer is 1 part by mass to 50 parts by mass with respect to 100 parts by mass of the inorganic filler contained in the coating layer.

[12] The separator for a power storage device according to any one of [1] to [11], wherein the protruding particulate polymer protrudes by 0.1 times or more of the thickness of the inorganic filler portion.

[13] The separator for a power storage device according to any one of [1] to [12], wherein the protruding particulate polymer contains at least one selected from the group consisting of copolymers containing a (meth)acrylate as a monomer, styrene-butadiene copolymers, and fluorine atom-containing copolymers.

[14] The separator for a power storage device according to any one of [1] to [13], wherein the protruding particulate polymer contains a copolymer containing (meth)acrylic acid, butyl (meth)acrylate, and ethylhexyl (meth)acrylate as monomers.

[15] The separator for a power storage device according to any one of [1] to [14], wherein the protruding particulate polymer contains a copolymer containing a polyfunctional (meth)acrylate as a monomer.

[16] The separator for a power storage device according to any one of [1] to [15], wherein the methylene chloride-soluble content is 0.05 parts by mass to 0.80 parts by mass with respect to a total mass of the separator for a power storage device.

[17] The separator for a power storage device according to any one of [1] to [16], wherein a total amount of metal cations contained in the coating layer is 0.1 ppm to 100 ppm based on a total mass of the coating layer.

[18] A power storage device, including the separator for a power storage device according to any one of [1] to [17].

## [ADVANTAGEIOUS EFFECTS OF INVENTION]

According to the present disclosure, the following are provided: a separator for a power storage device, which substrate can achieve not only an improvement in the adhesive strength with an electrode and an improvement in the heat shrinkage resistance, but also an improvement in the rate characteristics and/or cycle characteristics of a power storage device; and a power storage device including the same.

## BRIEF DESCRIPTION OF DRAWINGS

FIG. 1 is a schematic drawing of the surface of the coating layer according to the present embodiment.

FIG. 2 is a schematic drawing of an A-A cross section of FIG. 1.

FIG. 3 is a schematic drawing illustrating one example of the surface of the coating layer observed in the present embodiment.

FIG. 4 is one example of the result of identifying the protruding particulate polymer illustrated in FIG. 3.

FIG. 5 is one example of the result of performing Voronoi tessellation in FIG. 4.

FIG. 6 is one example of the result of extracting Voronoi polygons corresponding to closed regions in FIG. 5.

FIG. 7 illustrates one example of a method of setting 10 sections including 95 fields of view.

## DESCRIPTION OF EMBODIMENTS

Exemplary modes for carrying out the present disclosure (hereinafter, simply referred to as "present embodiment") will now be described; however, the present disclosure is not limited thereto.

In the present specification, the term "longitudinal direction (MD)" means a machine direction in continuous molding of a microporous membrane, and the term "width direction (TD)" means a direction that crosses the MD of a microporous membrane at an angle of 90°.

In the present specification, upper limit and lower limit values of each numerical range may be combined as desired. Further, when a certain member contains a specific component as a main component, it means that the content of the specific component constitutes the largest mass in the mass of the member. Unless otherwise specified, all physical properties and numerical values described in the present specification are measured or calculated by the corresponding methods described below in the section of Examples. The scale, the shape, the length, and the like of the parts illustrated in the drawings may be exaggerated for further clarity.

<<Separator for Power Storage Device>>

The separator for a power storage device according to the present embodiment includes: a substrate that is a polyolefin microporous membrane containing a polyolefin as a main component; and a coating layer that is arranged on at least one surface of the substrate. The coating layer contains an inorganic filler, and a particulate polymer of a thermoplastic polymer.

<Amount of Particulate Polymer>

The amount of the particulate polymer is 1 part by mass to 50 parts by mass, preferably 3 parts by mass to 30 parts by mass, more preferably 5 parts by mass to 20 parts by mass, still more preferably 5 parts by mass to 15 parts by mass, with respect to 100 parts by mass of the inorganic filler. When the amount of the particulate polymer is 1 part by mass to 50 parts by mass, the adhesive strength with an electrode can be improved while maintaining ion permeability. From the standpoint of improving the heat shrinkage resistance, the amount of the particulate polymer is preferably 10 parts by mass or less.

<Protrusion Amount of Particulate Polymer>

The particulate polymer may include a particulate polymer protruding by 0.1 times or more of the thickness of the inorganic filler portion of the coating layer.

The term "thickness of the inorganic filler portion" used herein means the distance (L1) between the surface of the polyolefin microporous membrane and the outermost surface of a layer which is laminated on the polyolefin microporous membrane and in which the inorganic filler is piled up (a layer formed by the inorganic filler), and it is measured from a cross-sectional SEM image of the coating layer. The term "inorganic filler portion" used herein means a portion that does not contain the particulate polymer and is at least 1.5D away from the center of each protruding particulate polymer in the horizontal direction (the planar direction of the coating layer), where the diameter of each protruding particulate polymer is defined as D. The measurement conditions will be described below in the section of Examples.

When the protrusion of the particulate polymer is 0.1 times or more of the thickness of the inorganic filler portion, the adhesive strength with an electrode can be improved. Further, when the protrusion of the particulate polymer is 0.1 times or more of the thickness of the inorganic filler portion, voids are formed between the separator and an electrode. The voids can alleviate the effects of expansion and contraction of the electrode caused by charging/discharging and the like of a power storage device, so that distortion of a wound body can be inhibited and the cycle characteristics can be improved. From this standpoint, the protrusion of the particulate polymer is preferably 0.2 times or more, or 0.3 times or more of the thickness of the inorganic filler portion. From the standpoint of inhibiting detachment of the particulate polymer from the separator, the protrusion of the particulate polymer is preferably 5 times or less, more preferably 4 times or less, 3 times or less, 2 times or less, 1 time or less, or 0.4 times or less the thickness of the inorganic filler portion.

The term "protrusion" used herein means that the particulate polymer protrudes toward the surface side of the coating layer, exceeding the "thickness of the inorganic filler portion". A portion of the particulate polymer that is protruding (hereinafter, referred to as "protruding part") may be partially covered with the inorganic filler. From the standpoint of inhibiting detachment of the particulate polymer from the coating layer to obtain a higher adhesive strength, it is preferred that the periphery of the protruding part be partially covered with the inorganic filler. Further, from the standpoint of ensuring a contact area between the particulate polymer and an electrode to obtain a higher adhesive strength, it is preferred that a central portion of the protruding part be exposed on the surface of the coating layer.

In the present specification, a "state in which the particulate polymer protrudes by 0.1 times or more of the thickness of the inorganic filler portion" means that, when the thickness of the inorganic filler portion measured from a cross-sectional SEM image of the coating layer is defined as L1 and a maximum distance from a substrate-coating layer boundary to the outline of the protruding particulate polymer is defined as L3, an average value of the ratio (L3 - L1)/L1 is 0.1 or more. In the present specification, the "maximum distance from a substrate-coating layer boundary to the outline of the

protruding particulate polymer" means the distance from the substrate-coating layer boundary to a point of the outline of the protruding particulate polymer that is the farthest away from the boundary.

In the present specification, a "state in which the particulate polymer protrudes from the coating layer by 0.1 times or more of the thickness of the inorganic filler portion of the coating layer" means, in other words, that the maximum distance (L3) from a substrate-coating layer boundary to the outline of the protruding particulate polymer, which is measured from a cross-sectional SEM image of the coating layer, is 1.1 times or more of the thickness (L1) of the inorganic filler portion of the coating layer.

A ratio of the number of particles of the protruding particulate polymer is preferably 50% or more with respect to a total number of particles of the particulate polymer contained in the coating layer. By this, the actions and effects exerted by the protruding particulate polymer can be obtained in a preferred manner. The ratio of the number of particles of the protruding particulate polymer with respect to a total number of particles of the particulate polymer contained in the coating layer (number of particles of protruding particulate polymer/total number of particles of particulate polymer) is also expressed as "protrusion ratio" and regarded as an index of the degree of protrusion of the particulate polymer contained in the coating layer. The protrusion ratio is more preferably 60% or more, 70% or more, or 80% or more, and an upper limit thereof is theoretically 100%.

<Inclined Form of Coating Layer, Contact Ratio Between Particulate Polymer and Substrate, and 180° Peel Strength>

The separator for a power storage device according to the present embodiment is preferably characterized by one or more of the following features (1) to (3):

(1) the coating layer is formed in an inclined manner such that it increases in thickness toward the protruding particulate polymer;
(2) 20% or more of the protruding particulate polymer is in contact with the surface of the substrate; and
(3) the coating layer has a 180° peel strength from the substrate of 200 gf/cm or more.

Feature (1):

In the separator for a power storage device, it is preferred that the coating layer be formed in an inclined manner such that it increases in thickness toward the protruding particulate polymer. By this, detachment of the particulate polymer from the coating layer is inhibited, so that the adhesive strength with an electrode is improved. The term "inclined" used herein means that, when the thickness of the inorganic filler portion of the coating layer is defined as L1 and a maximum distance from a substrate-coating layer boundary to the outer surface of the inorganic filler of the coating layer formed in an inclined manner is defined as L2, an average value of the gradient L2/L1 of the coating layer is 1.1 (e.g., 1.10) or more.

With regard to the relationship between L1 and L2, reference can be made to the schematic drawing of FIG. 2 as an example. The inclination is preferably formed such that the thickness of the coating layer continuously changes in a manner to gradually increase toward the protruding particulate polymer, without any discontinuous change where the coating layer is absent. Without the absence of the coating layer, the heat resistance and/or the cycle characteristics tend to be improved. The inclination may decrease away from the protruding particulate polymer and increase toward the protruding particulate polymer.

When the inorganic filler covers a portion of the protruding part, the inclination on the protruding part may decrease again toward the center of the protruding part. The average value of the gradient L2/L1 of the coating layer is preferably 1.2 (e.g., 1.20) or more, 1.3 (e.g., 1.30) or more, 1.4 (e.g., 1.40) or more, 1.5 (e.g., 1.50) or more, or 1.7 (e.g., 1.70) or more.

As a result of the coating layer being formed in an inclined manner such that it increases in thickness toward the protruding particulate polymer, the inorganic filler may cover a portion of the protruding part in such a manner that the inorganic filler is piled up along the outline of the particulate polymer. The inorganic filler preferably partially covers the periphery of the protruding part in such a manner that the inorganic filler is piled up along the outline of the particulate polymer.

Further, the vicinity of the center of the protruding part is preferably exposed on the surface of the coating layer. When a maximum distance from the substrate-coating layer boundary to the outline of the protruding particulate polymer (the distance from the substrate-coating layer boundary to a point of the outline of the protruding particulate polymer that is the farthest away from the boundary) is defined as L3, an average value of the coverage ratio (L2 - L1)/(L3 - L1) of the protruding part is preferably 0.4 (e.g., 0.40) or more.

With regard to the relationship of L1, L2, and L3, reference can be made to the schematic drawing of FIG. 2 as an example. When the average value of the gradient L2/L1 is 1.1 or more or the average value of the coverage ratio (L2 - L1)/(L3 - L1) is 0.4 or more, detachment of the particulate polymer from the coating layer is inhibited, so that the adhesive strength with an electrode is improved. From the standpoint of ensuring an adhesion area between the particulate polymer

and an electrode to improve the adhesive strength with the electrode, an upper limit of the average value of the gradient L2/L1 may be 5.0 or less, 4.0 or less, 3.0 or less, 2.8 or less, 2.5 or less, 2.3 or less, 2.0 or less, or 1.8 or less.

Further, an upper limit value of the coverage ratio (L2 - L1)/(L3 - L1) is preferably less than 1.0 (e.g., 1.00), 0.9 (e.g., 0.90) or less, 0.8 (e.g., 0.80) or less, or 0.7 (e.g., 0.70) or less. A coverage ratio of 1.0 or more means that the inorganic filler on the protruding part of the particulate polymer reaches the top of the outline of the protruding particulate polymer (the farthest point from the substrate-coating layer boundary). When the coverage ratio is less than 1.0, a contact area between the particulate polymer and an electrode is ensured, so that the adhesive strength with the electrode is improved. When the coverage ratio is 0.8 or less, the size of the contact area between the particulate polymer and the electrode is further increased, so that the adhesive strength with the electrode is further improved.

Feature (2):

In the separator for a power storage device, the contact ratio between the protruding particulate polymer and the substrate surface is preferably 20% or more, more preferably 50% or more, still more preferably 70% or more. The "contact ratio" is calculated from an image obtained by observing a cross section of the coating layer of the separator for a power storage device under an SEM. An increase in the amount of the particulate polymer that protrudes from the coating layer and is in contact with the substrate, the binding strength between the substrate and the particulate polymer is further increased, so that the 180° peel strength and the adhesive strength with an electrode are improved. An upper limit of the contact ratio between the protruding particulate polymer and the substrate surface may be less than 100%, or may be 100%.

Feature (3):

The separator for a power storage device has a 180° peel strength of preferably 200 gf/cm or more, more preferably 230 gf/cm or more, still more preferably 250 gf/cm or more. The "180° peel strength" refers to the strength measured when the coating layer is peeled off in such a manner that its surface facing the substrate forms an angle of 180° with respect to the substrate. When the 180° peel strength is 200 gf/cm or more, the adhesive strength with an electrode is improved, and heat shrinkage is inhibited. An upper limit of the 180° peel strength may be 500 gf/cm or less.

The separator for a power storage device according to the present embodiment may have any combination of the above-described features (1) to (3), i.e. a combination of: (1) and (2); (1) and (3); (2) and (3); or (1), (2), and (3). Among these combinations, from the standpoint of obtaining a higher adhesive strength and a lower heat shrinkage rate, a combination of (1), (2), and (3) is preferred, i.e. it is preferred that: the coating layer be formed in an inclined manner such that it increases in thickness toward the protruding particulate polymer; the contact ratio between the protruding particulate polymer and the substrate surface be 20% or more; and the 180° peel strength be 200 gf/cm or more.

It is noted here that the separator for a power storage device according to the present embodiment also has the following feature (4) separately from the above-described features (1) to (3), or along with any combination of the above-described features (1) to (3).

Feature (4):

In the separator for a power storage device, a coefficient of variation (cv) of the areas ($s_i$) of Voronoi polygons obtained by Voronoi tessellation using the protruding particulate polymer as a generator in the surface observation of the coating layer is 0.10 to 0.60. In the coating layer having a coefficient of variation (cv) in this range, the distribution of the protruding particulate polymer is highly uniform. The coefficient of variation (cv) is preferably 0.20 or more, 0.25 or more, or 0.30 or more, but preferably 0.55 or less, 0.50 or less, or 0.45 or less.

In the separator having the above-described feature (4), since the distribution of the protruding particulate polymer is highly uniform, the distribution of regions between particles of the protruding particulate polymer is also highly uniform. Therefore, by using the separator having the feature (4), the uniformity of the in-plane distribution of lithium ion migration via the regions between electrodes can be improved, as a result of which the rate characteristics and/or the cycle characteristics can be improved.

Further, in the separator having the feature (4), since the distribution of the protruding particulate polymer is highly uniform, the distribution of contact areas between the protruding particulate polymer and an electrode before or after a hot pressing process is also highly uniform. Therefore, by using the separator having the feature (4), the uniformity of the in-plane distribution of the stress applied to the electrode from the protruding particulate polymer can be improved, as a result of which the adhesion with the electrode can be improved.

Moreover, in the separator having the feature (4), since the distribution of the protruding particulate polymer is highly uniform, the distribution of the inorganic filler having a heat resistance function is also highly uniform. Therefore, by using the separator having the feature (4), the uniformity of the in-plane distribution of the heat resistance attributed to the

inorganic filler can be improved, as a result of which the heat shrinkage resistance can be improved.

It is conventionally thought that the "adhesion with an electrode" and the "heat shrinkage resistance" have a trade-off relationship in some cases, and that the "adhesion with an electrode and the "rate characteristics" and/or the "cycle characteristics" also have a trade-off relationship in some cases. Specifically, since a particulate polymer does not have sufficient heat resistance, it has been thought that an increase in the content of such a particulate polymer for improvement of the "adhesion with an electrode" makes it difficult to improve the "heat shrinkage resistance". Further, since the presence of such a particulate polymer acts as resistance for ions, it has been thought that an increase in the content of such a particulate polymer makes it difficult to improve the "rate characteristics" and/or the "cycle characteristics". In these respects, according to the present embodiment, by adjusting the above-described coefficient of variation (cv) to be in the prescribed range, not only an improvement in the adhesive strength with an electrode and an improvement in the heat shrinkage resistance, but also an improvement in the rate characteristics and/or cycle characteristics of a power storage device can be achieved as described above.

As a means for adjusting the coefficient of variation (cv) to be in the above-described range, the coefficient of variation (cv) can be adjusted by changing, for example, the particle size and the content of the thermoplastic polymer in a coating liquid to be applied to the substrate, the viscosity and the amount of the coating liquid, as well as the coating method and the coating conditions. For example, the viscosity of the coating liquid to be applied to the substrate is adjusted to be in a prescribed range; the particle size of the thermoplastic polymer in the coating liquid is reduced; the coating liquid is stirred by turbulence at the time of supplying the coating liquid to the substrate in the coating step; and the coating liquid applied onto the substrate is ultrasonicated.

The "Voronoi tessellation" refers to an operation in which, with respect to plural points (generators) arranged at arbitrary positions in a certain metric space, an area is partitioned on the basis of to which generator other points in the same space are close. A diagram containing the thus obtained regions is referred to as "Voronoi diagram". In the Voronoi diagram, boundaries of plural regions each constitute a part of a bisector between generators, and each region forms a polygon (Voronoi polygon). It is noted here that, in the present specification, the generators are each the "protruding particulate polymer", more specifically, the center point of the protruding part of the protruding particulate polymer in surface observation.

In an observation field of the coating layer, a single particle of the protruding particulate polymer is regarded as a single circle having an average diameter (1). Perpendicular bisectors are drawn between plural adjacent particles of the protruding particulate polymer and, with regard to each polymer particle, a polygon surrounded by the perpendicular bisectors is referred to as "Voronoi polygon". When Voronoi tessellation is performed in the observation field, unclosed regions are not taken into account. Examples of the unclosed regions include those regions obtained by performing Voronoi tessellation for a polymer when the polymer exists on the boundary of the observation field and its protruding part is not entirely observed.

The areas ($s_i$) of Voronoi polygons can be actually measured by image analysis as required, and the average value (m) of the areas ($s_i$) can be obtained by dividing a total value of the areas ($s_i$) of Voronoi polygons by a total number (n) of Voronoi polygons to be processed. Further, from the areas ($s_i$) of Voronoi polygons, the total number (n) of Voronoi polygons to be processed, and the average value (m), the standard deviation (sd) of the areas ($s_i$) of Voronoi polygons can be determined. The coefficient of variation (cv) of the areas ($s_i$) of Voronoi polygons is calculated by the following equation:

$$\text{Coefficient of variation (cv)} = \text{Standard deviation (sd)}/\text{Average value (m)}$$

The coefficient of variation (cv) is believed to represent an in-plane distribution or aggregation state of the protruding particulate polymer. When the coefficient of variation (cv) is 0.10 or more, it can be evaluated that the protruding particulate polymer is randomly dispersed and arranged on the surface of the coating layer. When the coefficient of variation (cv) is 0.60 or less, it can be evaluated that the protruding particulate polymer is not excessively aggregated.

A means for observing the coating layer is preferably selected as appropriate in accordance with the dimensions, the distribution state, or the like of the thermoplastic polymer. As a microscope, any of an electron microscope, an atomic force microscope, an optical microscope, a differential interference microscope, and the like can be used and, thereamong, it is preferred to use an electron microscope or an atomic force microscope when dealing with such a distribution state of dispersed particles as in the present embodiment. As a means for observing the coating layer, particularly the method described below in the section of Examples is employed.

In an observation field, an average observation field of the coating layer should be ensured. Further, the projected area in the observation field should be adjusted as appropriate such that an average distribution state of the protruding particulate polymers can be grasped. For example, the number of particles of the protruding particulate polymer to be observed is preferably about 80 to 200 per field. This observation field can be obtained by observing the coating layer using a preset observation means and magnification. For example, FIG. 3 is a schematic drawing illustrating one example of the surface of the coating layer observed using a scanning electron microscope as an observation means at a magnification of

×1,000. Such a dispersion state of thermoplastic polymer particles can be analyzed by Voronoi tessellation.

In the observation under a scanning electron microscope, a magnification appropriate for analysis by Voronoi tessellation is set in accordance with the particle size of the thermoplastic polymer particles. Specifically, the magnification is set such that the number of the thermoplastic polymer particles observed in one field of view is preferably 40 to 300, more preferably 60 to 240, still more preferably 80 to 200. This enables performing the analysis by Voronoi tessellation in an appropriate manner. For the analysis by Voronoi tessellation, for example, when the content of the thermoplastic polymer particles having a particle size of about 2.0 μm is 10 parts by mass or so with respect to 100 parts by mass of the inorganic filler in the coating layer, it is appropriate to set the magnification at ×5,000, while when the content of the thermoplastic polymer particles having a particle size of about 3.5 μm is 10 parts by mass or so with respect to 100 parts by mass of the inorganic filler in the coating layer, it is appropriate to set the magnification at about ×1,000.

The protruding particulate polymer contained in the observation field obtained by the above-described observation method is identified. The protruding particulate polymer is identified from the observation field, for example, with the naked eye or using an image processing software. FIG. 4 is one example of the result of identifying the protruding particulate polymer contained in the observation field of FIG. 3 using an image processing software.

For the protruding particulate polymer thus identified by the surface observation of the coating layer, Voronoi tessellation can be performed as defined above. Specifically, after applying a coating liquid containing the thermoplastic polymer to the substrate, the surface of the resulting coating film is photographed to obtain an image. Voronoi polygons can be drawn by performing Voronoi tessellation in which the protruding part of the protruding particulate polymer identified in the obtained image is regarded as a circle having an average diameter (1). The Voronoi polygons may be drawn, for example, manually or using an image processing software. Subsequently, the areas ($s_i$) of the thus drawn Voronoi polygons are calculated.

For example, FIG. 5 is one example of the result of obtaining Voronoi polygons by Voronoi tessellation using particles of the protruding particulate polymer identified in FIG. 4 as generators. FIG. 6 illustrates the result of automatically extracting those Voronoi polygons depicted in FIG. 5 that correspond to closed regions, using an image processing software.

By the above-described observation method and image processing method, the total number of particles of the protruding particulate polymer and the areas ($s_i$) of the Voronoi polygons in the observation field are determined. Then, the coefficient of variation (cv) can be calculated in the above-described manner. The distribution of the protruding particulate polymer may vary depending on the observation field. Therefore, as the coefficient of variation (cv), it is preferred to use an average of the values calculated for each of plural observation fields. The number of the observation fields is preferably three or more.

It is particularly preferred to use an average of the values calculated for 10 fields of view that are determined as follows.

i) Each measurement field of view: an image photographed under a scanning electron microscope

ii) Method of setting fields of view:

  a) set a starting field of view, and

  b) set a total of 10 fields of view as measurement fields of view, which consist of the starting field of view and 9 fields of view composed of regions sequentially adjacent to one another at 5-mm intervals in a uniaxial direction with respect to the starting field of view.

The measurement fields of view are each preferably a photographed image obtained by setting the magnification such that the number of particles of the protruding particulate polymer observed per field of view is 80 to 200.

A preferred method of setting 10 fields of view in the present embodiment will now be described referring to FIG. 7.

i) As the photographed image, an image captured under a scanning electron microscope at a magnification of ×1,000 can be used as described above. In the image of FIG. 7, first, a starting point field of view (I) is set. Since a single field of view consists of an image captured under a scanning electron microscope at a magnification of ×1,000, the scale of a single field of view is about 100 μm × 100 μm, which is suitable for evaluation by Voronoi tessellation based on the protruding particulate polymer. Next, 9 fields of view (II to X), which are sequentially adjacent to one another at 5-mm intervals in a uniaxial direction with respect to the starting field of view (I) are set. These fields of view (II to X) each consist of an image captured at the same magnification as the starting field of view (I).

The observation of the surface of the coating layer is preferably performed for a region that is not involved in ion conduction. For example, the observation can be made for the coating layer in the separator that has just been produced and is yet to be integrated into a power storage element. During or after the use of the power storage element, it is also a preferred mode of the present embodiment to observe a so-called "ear" portion of the separator (a region in the vicinity of

the outer edge of the separator, which region is not involved in ion conduction). As understood from the above-described evaluation method, when observing 10 fields of view, a separator piece of about 45 mm in length is used as a measurement object and, therefore, the dispersion state of the thermoplastic polymer on its surface can be accurately evaluated.

The fact that Voronoi tessellation can be performed in the above-described manner is presumed to indicate that, in the coating layer, the particulate polymer exists in the form of a single layer of particles that do not substantially overlap each other. For example, when the particles of the particulate polymer overlap each other in multiple layers in the coating layer, Voronoi tessellation cannot be performed since the concept of an area occupied by single particles is not established.

In the separator according to the present embodiment, it is preferred that the particles of the particulate polymer in the coating layer be arranged without substantially overlapping each other, and that the above-described requirements be adjusted in the above-described respective ranges.

As for the form (pattern) of the coating layer existing on the substrate, it is preferred that the particles of the particulate polymer be mutually dispersed over the entire surface of the substrate. The particulate polymer may form clusters in some regions; however, the particulate polymer is preferably dispersed to such an extent that the above-described coefficient of variation (cv) is satisfied as a whole.

<Methylene Chloride-Soluble Content>

In the separator for a power storage device according to the present embodiment, the methylene chloride-soluble content is preferably 0.05% by mass to 0.80% by mass, more preferably 0.10% by mass to 0.60% by mass, still more preferably 0.15% by mass to 0.50% by mass, based on a total mass of the separator for a power storage device. The term "methylene chloride-soluble content" used herein refers to a component that is extracted into methylene chloride when the separator is immersed in methylene chloride. Mainly, a plasticizer that is mixed in the production of the substrate is extracted as the methylene chloride-soluble content. By controlling the methylene chloride-soluble content to be 0.10% by mass or more, the binding strength between the substrate and the coating layer is further increased, making it easier to adjust 180° peel strength to be 200 gf/cm or more. When the methylene chloride-soluble content is 0.60% by mass or less, the battery internal resistance can be reduced. As a method of adjusting the methylene chloride-soluble content to be 0.05% by mass to 0.80% by mass, for example, in the plasticizer extraction step in the production of the substrate, the extraction time, the type and the temperature of an extraction solvent, the number of extraction processes, and the like may be adjusted in the case of a batchwise method, or the extraction time, the type and the temperature of an extraction solvent, the amount of the extraction solvent to be supplied, and the like may be adjusted in the case of a continuous method.

<Metal Cations>

In the separator for a power storage device according to the present embodiment, a total amount of metal cations contained in the coating layer is preferably 0.1 ppm to 100 ppm, more preferably 0.1 ppm to 70 ppm, still more preferably 0.1 ppm to 50 ppm, based on a total mass of the coating layer. When the total amount of the metal cations is adjusted to be small, the inorganic filler and the particulate polymer are likely to be uniformly dispersed and applied in the formation of the coating layer. Examples of the metal cations include a sodium ion ($Na^+$), a calcium ion ($Ca^{2+}$), and a magnesium ion ($Mg^{2+}$). One example of a method of adjusting the total amount of the metal cations to be 0.1 ppm to 100 ppm is a method of washing the filler, which is used as a raw material of the coating layer, with water before use. The washing may be performed once or plural times; however, a greater number of washing operations leads to a smaller total amount of the metal cations contained in the filler.

<Heat Shrinkage Rate>

The separator for a power storage device according to the present embodiment has a TD heat shrinkage rate of preferably 5% or less, more preferably 0% to 3%, still more preferably 0% to 1%, at 130°C in 1 hour.

The separator for a power storage device according to the present embodiment also has a TD heat shrinkage rate of preferably 5% or less, more preferably 0% to 3%, still more preferably 0% to 1%, at 150°C in 1 hour. When the TD heat shrinkage rate is 5% or less, the occurrence of a short circuit at a spot other than those spots where an external force is applied due to heat generation caused by a short circuit during a collision test can be inhibited more effectively. This enables to more reliably prevent an increase in the temperature of the whole battery as well as fuming and ignition that may occur as a result. The heat shrinkage rate of the separator can be adjusted by appropriately combining a stretching operation and a heat treatment of the substrate. At the same time with reducing the TD heat shrinkage rate, the MD heat shrinkage rate is also preferably 5% or less, more preferably 0% to 3%, still more preferably 0% to 1%.

<Air Permeability of Separator>

The separator for a power storage device has an air permeability of preferably 10 sec/100 $cm^3$ to 10,000 sec/100 $cm^3$, more preferably 40 sec/100 $cm^3$ to 500 sec/100 $cm^3$, still more preferably 50 sec/100 $cm^3$ to 250 sec/100 $cm^3$, particularly preferably 60 sec/100 $cm^3$ to 200 sec/100 $cm^3$. By this, a high ion permeability can be obtained. The air permeability is the degree of air permeation resistance that is measured in accordance with JIS P8117.

<Substrate>

The substrate is a polyolefin microporous membrane containing a polyolefin as a main component, and preferably has the following aspects (1) or (2), or a combination thereof: (1) the polyolefin microporous membrane has a thickness of 1 μm to 30 μm, an air permeability of 500 sec/100 $cm^3$ or less, and a post-compression porosity, which is measured in a compression test conducted at a temperature of 70°C and a pressure of 8 Ma for a compression time of 3 minutes, of 30% or higher; and (2) the crystal long period of the polyolefin microporous membrane, which is determined by small-angle X-ray scattering (SAXS) method, is 37.0 nm or longer.

Aspect (1):

Without being bound by a theory, when the polyolefin microporous membrane has a thickness in a range of 1 μm to 30 μm, an air permeability of 500 sec/100 $cm^3$ or less, and a post-compression porosity of 30% or higher, it is believed that, for example, in the production of a nonaqueous secondary battery using the polyolefin microporous membrane as a separator, the electrical resistance of the polyolefin microporous membrane can be reduced or an increase in the electrical resistance can be inhibited after the pressing step, whereby a high output and excellent cycle characteristics can be achieved in the resulting nonaqueous secondary battery. The inhibition of an increase in the resistance by the polyolefin microporous membrane is prominent when an electrode that readily expands and contracts is used in a cell of the nonaqueous secondary battery, and it is more prominent when a high-capacity electrode or a silicon (Si)-containing negative electrode, which is used in vehicle-mounted batteries and the like, is used.

The post-compression porosity is believed to be associated with the structure of a main component of the polyolefin microporous membrane that plays a role in reducing the resistance and/or inhibiting an increase in the resistance in a nonaqueous secondary battery. From this standpoint, the post-compression porosity of the polyolefin microporous membrane is preferably 31% or higher, more preferably 32% or higher, still more preferably 33% or higher. An upper limit value of the post-compression porosity of the polyolefin microporous membrane can be determined in accordance with the pre-compression porosity and may be, for example, preferably 60% or lower, more preferably 50% or lower.

The post-compression porosity of the polyolefin microporous membrane can be adjusted to be in the above-described numerical range by controlling, in the production process of the polyolefin microporous membrane, for example, the molecular weight of a polyolefin raw material, the molecular weight and the content ratio of a polyethylene raw material, the stretching ratio in the biaxial stretching step, the preheating coefficient in the biaxial stretching step, the stretching coefficient in the biaxial stretching step, the MD/TD stretching temperature in the biaxial stretching step, and the heat setting temperature. Alternatively, the post-compression porosity of the polyolefin microporous membrane can be adjusted to be in the above-described numerical range by controlling, for example, the molecular weight of a polyolefin raw material, the molecular weight and the content ratio of a polyethylene raw material, the stretching ratio in the biaxial stretching step, the preheating coefficient in the biaxial stretching step, the stretching coefficient in the biaxial stretching step, and the ratio of the preheating coefficient with respect to the stretching coefficient.

With regard to the polyolefin microporous membrane, it is preferred to compare the porosity before and after a compression test from the standpoint of specifying the structure of the main component of the membrane that enables to achieve a high output and excellent cycle characteristics in a nonaqueous secondary battery through a reduction in the resistance and/or inhibition of an increase in the resistance. A preferred numerical range of the porosity of the polyolefin microporous membrane prior to a compression test (hereinafter, simply referred to as "porosity") will be described below.

Aspect (2):

Without being bound by a theory, when the polyolefin microporous membrane has a crystal long period of 37.0 nm or longer, surprisingly, the structural homogeneity and the compression resistance of the polyolefin microporous membrane are improved and, in association with this, the reaction homogeneity in a nonaqueous secondary battery is improved as well. As a result, it is believed that, for example, even after the pressing step in the production of a nonaqueous secondary battery using the polyolefin microporous membrane as a separator, a high output and excellent cycle characteristics can be achieved in the resulting nonaqueous secondary battery. The improvements in the structural

homogeneity and the compression resistance of the polyolefin microporous membrane are prominent when an electrode that readily expands and contracts is used in a cell of the nonaqueous secondary battery, and it is more prominent when a high-capacity electrode or a silicon (Si)-containing negative electrode, which is used in vehicle-mounted batteries and the like, is used.

Without being bound by a theory, the crystal long period determined by SAXS measurement is believed to be associated with the structure of a polyethylene that improves the structural homogeneity and the compression resistance of the membrane and the reaction homogeneity in a nonaqueous secondary battery. In addition, the crystal long period of the polyolefin microporous membrane is believed to be correlated with the post-compression porosity of the membrane. From these standpoints, the crystal long period of the polyolefin microporous membrane is preferably 37.0 nm to 60.0 nm, 38.0 nm to 55.0 nm, 40.0 nm to 50.0 nm, or 42.0 nm to 50.0 nm.

The crystal long period of the polyolefin microporous membrane can be adjusted to be in the above-described numerical range by controlling, in the production process of the polyolefin microporous membrane, for example, the molecular weight of a polyolefin raw material, the molecular weight and the content ratio of a polyethylene raw material, the stretching ratio in the biaxial stretching step, the preheating coefficient in the biaxial stretching step, the stretching coefficient in the biaxial stretching step, the MD/TD stretching temperature in the biaxial stretching step, and the heat setting temperature.

The separator for a power storage device according to the present embodiment includes a substrate that is a polyolefin microporous membrane containing a polyolefin as a main component. The phrase "containing ... as a main component" used herein means that the mass of the component of interest (polyolefin) constitutes the largest mass in the whole substrate. The content of the polyolefin in the polyolefin microporous membrane is, based on a total mass of the substrate, for example, more than 50 parts by mass, preferably 75 parts by mass or more, more preferably 85 parts by mass or more, still more preferably 90 parts by mass or more, yet still more preferably 95 parts by mass or more, particularly preferably 98 parts by mass or more, and may be 100 parts by mass.

A polyolefin exhibits excellent coatability when coating a film thereof with a coating liquid; therefore, it not only is advantageous for a further reduction in the thickness of the separator, but also allows an increase in the active material ratio in a power storage device and the capacity per volume. As the polyolefin microporous membrane, one that is used as a substrate of a conventional separator can be used, and it is preferably a porous membrane having a fine pore size, which has ionic conductivity but not electron conductivity and is highly resistant to organic solvents.

The polyolefin may be any polyolefin that can be used in ordinary extrusion, injection, inflation, blow molding, and the like. Examples of the polyolefin include: homopolymers formed of monomers, such as ethylene, propylene, 1-butene, 4-methyl-1-pentene, 1-hexene, and 1-octene; and copolymers and multistage polymers of two or more kinds of these monomers. Such homopolymers, copolymers, and multistage polymers may be used singly, or in combination of two or more kinds thereof.

Particularly, from the standpoint of inhibition of a decrease or increase in the electrical resistance of the membrane as well as the compression resistance and the structural homogeneity of the membrane, the polyolefin is, for example, a polyethylene, a polypropylene, or a polybutene, and more specific examples thereof include low-density polyethylenes, linear low-density polyethylenes, medium-density polyethylenes, high-density polyethylenes, ultrahigh-molecular-weight polyethylenes, isotactic polypropylenes, atactic polypropylenes, ethylene-propylene random copolymers, polybutenes, and ethylene-propylene rubbers.

These polyolefins may be used singly, or in combination of two or more kinds thereof. Thereamong, from the standpoint of the shutdown property that pores are closed by heat fusion, the polyolefin is preferably at least one selected from the group consisting of low-density polyethylenes, linear low-density polyethylenes, medium-density polyethylenes, high-density polyethylenes, and ultrahigh-molecular-weight polyethylenes. Particularly, a high-density polyethylene is preferred because of its low melting point and high strength, and a polyethylene having a density of 0.93 g/cm$^3$ or higher as measured in accordance with JIS K7112 is more preferred. Examples of a polymerization catalyst used for the production of these polyethylenes include Ziegler-Natta catalysts, Phillips catalysts, and metallocene catalysts. The main component of the polyolefin is preferably a polyethylene, and the content ratio of the polyethylene is preferably 50 parts by mass or more with respect to a total mass of the polyolefin in the substrate.

In order to improve the heat resistance of the substrate, the polyolefin microporous membrane more preferably contains a polypropylene and a polyolefin other than the polypropylene. Examples of the polyolefin resin other than the polypropylene include: homopolymers formed of monomers, such as ethylene, 1-butene, 4-methyl-1-pentene, 1-hexene, and 1-octene; and copolymers and multistage polymers of two or more kinds of these monomers.

The amount of the polypropylene with respect to a total mass of the polyolefin in the substrate (polypropylene/polyolefin) may be 0% and is not particularly limited; however, from the standpoint of achieving both heat resistance and good shutdown function, it is preferably 1 part by mass to 35 parts by mass, more preferably 3 parts by mass to 20 parts by mass, still more preferably 4 parts by mass to 10 parts by mass. From the same standpoint, the content ratio of an olefin resin other than polypropylene, for example, a polyethylene, with respect to a total mass of the polyolefin in the polyolefin microporous membrane (olefin resin other than polypropylene/polyolefin) is preferably 65 parts by mass to 99 parts by

mass, more preferably 80 parts by mass to 97 parts by mass, still more preferably 90 parts by mass to 96 parts by mass.

From the standpoint of crystallinity, high strength, compression resistance, and the like in the formation of the polyolefin microporous membrane for a nonaqueous secondary battery, the polyolefin microporous membrane is preferably a porous membrane formed of a polyethylene composition in which a polyethylene accounts for 50% by mass to 100% by mass of resin components constituting the microporous membrane. The ratio of the polyethylene in the resin components constituting the porous membrane is more preferably 60% by mass to 100% by mass, still more preferably 70% by mass to 100% by mass, yet still more preferably 90% by mass to 100% by mass.

The polyolefin has a viscosity-average molecular weight of preferably 30,000 to 6,000,000, more preferably 80,000 to 3,000,000, still more preferably 150,000 to 2,000,000. When the viscosity-average molecular weight is 30,000 or more, the strength tends to be further increased due to entanglement of polymers, which is preferred. Meanwhile, a viscosity-average molecular weight of 6,000,000 or less is preferred from the standpoint of making it easier to perform melt-kneading uniformly and improving the moldability in the extrusion and stretching steps. Further, the viscosity-average molecular weight is preferably less than 1,000,000 since this makes pores likely to be closed when the temperature is increased, so that a superior shutdown function tends to be obtained.

When the polyolefin microporous membrane contains polyethylenes as main components, from the standpoint of the orientation and the rigidity of the membrane, a lower limit value of the viscosity-average molecular weight (Mv) of at least one polyethylene is preferably not less than 600,000, more preferably not less than 700,000, and an upper limit value of the Mv of the polyethylene may be, for example, 2,000,000 or less. From the same standpoint, the ratio of a polyethylene having an Mv of 700,000 or more in the polyolefin resin constituting the polyolefin microporous membrane is preferably not less than 50% by mass, more preferably not less than 60% by mass, still more preferably not less than 70% by mass, and it may be 100% by mass. From the standpoint of reduction in fluidity during melting of the membrane and short circuit resistance in a nail penetration test, the ratio of a polyethylene having an Mv of 600,000 or more in the polyolefin resin constituting the polyolefin microporous membrane is preferably not less than 30% by mass, more preferably not less than 50% by mass, still more preferably not less than 60% by mass, yet still more preferably not less than 70% by mass, and it may be 100% by mass.

The viscosity-average molecular weight (Mv) is calculated by the following equation from the limiting viscosity [η] measured at 135°C using decalin as a solvent, based on ASTM-D4020.

Polyethylene:

$$[\eta] = 6.77 \times 10^{-4}\ \mathrm{Mv}^{0.67}\ \text{(Chiang formula)}$$

Polypropylene:

$$[\eta] = 1.10 \times 10^{-4}\ \mathrm{Mv}^{0.80}$$

For example, instead of using only a polyolefin having a viscosity-average molecular weight of less than 1,000,000, a mixture of a polyolefin having a viscosity-average molecular weight of 2,000,000 and a polyolefin having a viscosity-average molecular weight of 270,000, which mixture has a viscosity-average molecular weight of less than 1,000,000, may be used as well.

In addition to the polyolefin(s), the substrate may also contain other resin, such as polyethylene terephthalate, polycycloolefin, polyether sulfone, polyamide, polyimide, polyimide amide, polyaramid, nylon, or polytetrafluoroethylene.

The substrate may contain additives as desired. Examples of the additives include, but not particularly limited to: plasticizers; polymers other than polyolefins; inorganic fillers; phenolic, phosphorus-based, or sulfur-based antioxidants; metallic soaps, such as calcium stearate and zinc stearate; ultraviolet absorbers; light stabilizers; antistatic agents; antifogging agents; and color pigments. The total content of these additives is preferably 20 parts by mass or less, more preferably 10 parts by mass or less, still more preferably 5 parts by mass or less, with respect to 100 parts by mass of the polyolefin resin in the polyolefin microporous membrane.

The substrate preferably contains a plasticizer. When the substrate contains a plasticizer, the binding strength between the substrate and the coating layer is improved, and it is easier to control the 180° peel strength to be 200 gf/cm or more. The amount of the plasticizer is preferably 0.1 parts by mass to 1.6 parts by mass, more preferably 0.2 parts by mass to 1.2 parts by mass, still more preferably 0.3 parts by mass to 1.0 parts by mass, based on a total mass of the substrate. By controlling the amount of the plasticizer to be in this range, the binding strength between the substrate and the coating layer can be improved while reducing the battery internal resistance. Examples of the plasticizer include: hydrocarbons, such as liquid paraffins; esters, such as dioctyl phthalate and dibutyl phthalate; and higher alcohols, such as oleyl alcohol and stearyl alcohol. Thereamong, the plasticizer is preferably a liquid paraffin.

The substrate has a porosity of preferably 30% to 65%, more preferably 35% to 60%. The porosity is still more

preferably 35% to 50%, and may be 40% to 50%. This allows the micropores of the substrate to be moderately impregnated with the coating layer, and makes it easier to control the 180° peel strength to be 200 gf/cm or more. The porosity is calculated by the following equation from the volume ($cm^3$), the mass (g), and the membrane density ($g/cm^3$) of a sample of the substrate:

$$\text{Porosity} = (\text{Volume - Mass/Membrane density})/\text{Volume} \times 100$$

In the case of a polyolefin microporous membrane formed of a polyethylene, for example, the porosity can be calculated assuming that the membrane density is 0.95 $g/cm^3$. The porosity can be adjusted by, for example, changing the stretching ratio of the polyolefin microporous membrane.

The substrate has an air permeability of preferably 10 sec/100 $cm^3$ to 450 sec/100 $cm^3$, more preferably 40 sec/100 $cm^3$ to 300 sec/100 $cm^3$, still more preferably 50 sec/100 $cm^3$ to 250 sec/100 $cm^3$, particularly preferably 60 sec/100 $cm^3$ to 200 sec/100 $cm^3$. The air permeability may be 60 sec/100 $cm^3$ to 150 sec/100 $cm^3$. This allows the micropores of the substrate to be moderately impregnated with the coating layer, and makes it easier to control the 180° peel strength to be 200 gf/cm or more. The air permeability is the degree of air permeation resistance that is measured in accordance with JIS P8117. The air permeability can be adjusted by, for example, changing the stretching temperature and/or stretching ratio of the substrate.

The substrate has an average pore size of preferably 0.15 μm or less, more preferably 0.1 μm or less, but preferably 0.01 μm or more. The average pore size is preferably 0.15 μm or less from the standpoint of inhibiting self-discharge of a power storage device to prevent a reduction in capacity. The average pore size can be adjusted by, for example, changing the stretching ratio in the production of the substrate.

The substrate has a puncture strength of preferably 200 gf or more, more preferably 300 gf or more, still more preferably 400 gf or more, but preferably 2,000 gf or less, more preferably 1,000 gf or less. The puncture strength is preferably 200 gf or more, not only from the standpoint of inhibiting the membrane breakage caused by detachment of an active material or the like when the separator is wound together with an electrode but also from the standpoint of reducing the concern of short circuit caused by expansion and contraction of the electrode associated with charging and discharging. Meanwhile, the puncture strength is preferably 2,000 gf or less from the standpoint of reducing the widthwise shrinkage caused by orientation relaxation during heating. The puncture strength is measured in accordance with the method described below in the section of Examples. The puncture strength can be adjusted by adjusting, for example, the stretching ratio and/or stretching temperature of the substrate.

The type, the molecular weight, and the composition of the polyolefin resin constituting the polyolefin microporous membrane can be adjusted by controlling, for example, the type, the molecular weight, the blending ratio, and the like of a polymer material such as polyolefin in the production process of the polyolefin microporous membrane. Further, a multilayer polyolefin resin microporous membrane having a structure in which polyolefin resin microporous membranes of the same kind or different kinds are laminated in two or more layers can also be adjusted in the above-described manner.

The polyolefin microporous membrane has a porous structure in which a large number of extremely small pores together form dense communicating pores and, therefore, exhibits a very excellent ion permeability and a high strength at the same time in a state of containing an electrolyte solution.

The thickness of the substrate (hereinafter, referred to as "substrate thickness") is preferably 2 μm or more, more preferably 5 μm or more, still more preferably 6 μm or more, particularly preferably 7 μm or more, but preferably 100 μm or less, more preferably 60 μm or less, still more preferably 50 μm or less, particularly preferably 16 μm or less. The substrate thickness is preferably 2 μm or more from the standpoint of improving the mechanical strength. Meanwhile, the substrate thickness is preferably 100 μm or less since this reduces the volume occupied by the separator in a power storage device and thus tends to be advantageous in increasing the capacity of the power storage device.

<Coating Layer>

The separator for a power storage device according to the present embodiment includes a coating layer that is arranged on at least one surface of the substrate. In other words, the coating layer may be arranged only on one surface of the substrate, or may be arranged on both surfaces of the substrate. The expression "arranged on surface" used herein means that the coating layer may be arranged on the entire surface of the substrate, or may be arranged on a part of the substrate. The coating layer is intended to be directly adhered to an electrode. It is preferred that the coating layer be arranged such that the coating layer is directly adhered to the electrode, or the substrate and the electrode are adhered via the coating layer. The coating layer is preferably a layer formed by a method of applying a coating liquid containing an inorganic filler and a particulate polymer to the substrate.

The coating layer contains an inorganic filler and a particulate polymer of a thermoplastic polymer. The coating layer may further contain, for example, a resin binder, a water-soluble polymer, and other additives. The coating layer may

have at least two Tg values, which are a Tg based on the particulate polymer formed of the thermoplastic polymer and a Tg based on the thermoplastic polymer that is a binder.

(Inorganic Filler)

The inorganic filler is preferably one which not only has a melting point of 200°C or higher or a thermal decomposition temperature of 200°C or higher and exhibits high electrical insulation, but also is electrochemically stable in the working range of a power storage device such as a lithium ion secondary battery. Examples of such an inorganic filler include: inorganic oxides (oxide-based ceramics), such as alumina, silica, titania, zirconia, magnesia, ceria, yttria, zinc oxide, and iron oxide; inorganic nitrides (nitride-based ceramics), such as silicon nitride, titanium nitride, and boron nitride; ceramics, such as silicon carbide, calcium carbonate, magnesium sulfate, aluminum sulfate, barium sulfate, aluminum hydroxide, aluminum hydroxide oxide (boehmite), potassium titanate, talc, kaolinite, dickite, nacrite, halloysite, pyrophyllite, montmorillonite, sericite, mica, amesite, bentonite, asbestos, zeolite, calcium silicate, magnesium silicate, diatomaceous earth, and silica sand; and glass fibers. These inorganic fillers may be used singly, or in combination of two or more kinds thereof. Particularly, the inorganic filler is preferably at least one selected from the group consisting of alumina, barium sulfate, and aluminum hydroxide oxide (boehmite).

A lower limit value of the average particle size of the inorganic filler is preferably 50 nm or more, 100 nm or more, 150 nm or more, 200 nm or more, 250 nm or more, 300 nm or more, 350 nm or more, or 400 nm or more, while an upper limit value is preferably 2,000 nm or less, 1,100 nm or less, 800 nm or less, 450 nm or less, 400 nm or less, 350 nm or less, or 300 nm or less. The average particle size of the inorganic filler is preferably 50 nm or more from the standpoint of maintaining voids for permeation of ions through the coating layer to improve the rate characteristics. The average particle size of the inorganic filler is preferably 2,000 nm or less from the standpoint of increasing the filling rate of the inorganic filler in the coating layer to improve the heat shrinkage resistance. It is preferred that the average particle size of the inorganic filler be, for example, 180 nm to 300 nm. This is because, especially when the thickness of the coating layer is small, the coating layer is formed at a uniform thickness and the heat shrinkage resistance is improved. It is also preferred that the average particle size of the inorganic filler be, for example, 150 nm to 500 nm, or 200 nm to 450 nm. This is because both the rate characteristics and the heat shrinkage resistance can thereby be obtained at high levels. The "average particle size" of the inorganic filler is determined by the method described below in the section of Examples. One example of a method of adjusting the particle size and the particle size distribution of the inorganic filler is a method of reducing the particle size by pulverizing the inorganic filler using an appropriate pulverizer, such as a ball mill, a bead mill, or a jet mill. The particle size distribution of the inorganic filler can be adjusted to have a single peak in a graph of frequency plotted against particle size. It is noted here, however, that the particle size distribution may give a trapezoidal chart that has two peaks or no peak. The coefficient of variation of the particle size distribution of the inorganic filler is preferably 0.55 or less, more preferably 0.50 or less, still more preferably 0.45 or less. The coefficient of variation of the particle size distribution is preferably 0.55 or less from the standpoint of inhibiting deformation at a temperature that exceeds the melting point of the substrate, as well as the standpoint of increasing the gradient of the coating layer to improve the adhesive strength with an electrode.

Examples of the shape of the inorganic filler include a plate shape, a scaly shape, a needle shape, a columnar shape, a spherical shape, a polyhedral shape, and a lump (block) shape. Plural kinds of inorganic fillers having these shapes may be used in combination. From the standpoint of increasing the gradient of the coating layer to improve the adhesive strength with an electrode, the inorganic filler preferably has a block shape.

The inorganic filler has an aspect ratio of preferably 1.0 to 2.5, more preferably 1.1 to 2.0. The aspect ratio is preferably 2.5 or lower from the standpoint of reducing the amount of moisture adsorbed to the separator and inhibiting capacity deterioration with repeated cycles, as well as the standpoint of inhibiting deformation at a temperature that exceeds the melting point of the substrate and the standpoint of increasing the gradient of the coating layer to improve the adhesive strength with an electrode. The reason why the gradient is increased when the aspect ratio of the inorganic filler is 1.0 to 2.5 is believed to be because a layered structure is likely to be formed due to low orientation of particles in the coating layer.

The particle size distribution of the inorganic filler, which is determined by dividing the standard deviation SD of the volume-average particle size of the inorganic filler by the value of D50, is preferably 0.55 or less, more preferably 0.50 or less, still more preferably 0.45 or less. The particle size distribution is preferably 0.55 or less from the standpoint of inhibiting deformation at a temperature that exceeds the melting point of the substrate, as well as the standpoint of increasing the gradient of the coating layer to improve the adhesive strength with an electrode. The reason by the gradient is increased when the particle size distribution of the inorganic filler is 0.55 or less is believed to be because the uniformity of particles is increased and the contact ratio between the particles is thereby improved, as a result of which a layered structure is likely to be formed.

The amount of the inorganic filler is, for example, 20 parts by mass or more but less than 100 parts by mass, 30 parts by mass to 80 parts by mass, 35 parts by mass to 70 parts by mass, or 40 parts by mass to 60 parts by mass, with respect to a total mass of the coating layer.

(Particulate Polymer)

The particulate polymer is in the form of particles of a thermoplastic polymer. From the standpoint of improving the adhesion between the separator and an electrode, the particulate polymer preferably contains a thermoplastic polymer having a glass transition temperature or melting point of 20°C to 200°C. The glass transition temperature refers to the midpoint glass transition temperature prescribed in JIS K7121, and is determined from a DSC curve obtained by differential scanning calorimetry (DSC). Specifically, the temperature at which the curve of a portion of stepwise change in glass transition intersects with a straight line drawn at an equal distance in the ordinate direction from both a straight line obtained by extending the baseline on the low-temperature side of the DSC curve to the high-temperature side and a straight line obtained by extending the baseline on the high-temperature side of the DSC curve to the low-temperature side can be adopted as the glass transition temperature. More specifically, the glass transition temperature may be determined in accordance with the method described below in the section of Examples. Further, "glass transition" refers to a change in heat flow rate that occurs on the endothermic side due to a change in the state of a polymer used as a test piece in DSC. Such a change in heat flow rate is observed in the form of a stepwise change in the DSC curve. The term "stepwise change" used herein refers to a transitional portion of the DSC curve from a previous baseline on the low-temperature side to a new baseline on the high-temperature side. It is noted here that a stepwise change also encompasses a combination of a stepwise change and a peak. When the upper side of the portion of stepwise change is defined as the exothermic side, the glass transition temperature can also be expressed as "a point at which an upwardly convex curve changes to a downwardly convex curve". The term "peak" used herein refers to a portion of the DSC curve in which the curve departs from the baseline on the low-temperature side and returns back to the same baseline. The term "baseline" used herein refers to the DSC curve in a temperature range where neither transition nor reaction occurs in the test piece.

The glass transition temperature (Tg) of the particulate polymer is preferably 20°C to 110°C, more preferably 50°C or higher, still more preferably 80°C or higher, yet still more preferably 90°C or higher, and it is particularly preferably higher than 90°C from the standpoint of improving the adhesive strength after the injection of an electrolyte solution. The glass transition temperature (Tg) of the particulate polymer may be 92°C or higher since this enables maintaining the shape stability up to a higher temperature. The Tg of the particulate polymer is preferably 20°C or higher from the standpoint of storage and transport of the separator for a power storage device, as well as the standpoint of inhibiting agglutination (blocking) of the separators adjacently arranged via the coating layer during the production process of a power storage device. Meanwhile, the Tg of the particulate polymer is preferably 110°C or lower from the standpoint of obtaining a good adhesive strength with an electrode. The Tg of the particulate polymer can be adjusted as appropriate by changing, for example, the type of a monomer used for the production of the particulate polymer or, when the particulate polymer is a copolymer, the blending ratio of its monomers. In other words, the glass transition temperature can be roughly estimated from the Tg values of homopolymers that are generally indicated for the respective monomers used in the production of the particulate polymer (e.g., "Polymer Handbook" (A Wiley-Interscience Publication), and the blending ratio of the monomers. For example, a copolymer that is obtained by copolymerizing monomers each giving a homopolymer having a Tg of about 100°C, such as methyl methacrylate, acrylonitrile, and methacrylic acid, at a high ratio has a high Tg, while a copolymer that is obtained by copolymerizing monomers each giving a homopolymer having a Tg of about -50°C, such as n-butyl acrylate and 2-ethylhexyl acrylate, at a high ratio has a low Tg. The Tg of a copolymer can also be roughly estimated using the following Fox equation:

$$1/Tg = W_1/Tg_1 + W_2/Tg_2 + \cdots + W_i/Tg_i + \cdots W_n/Tg_n$$

In this equation, Tg (K) represents the Tg of the copolymer; $Tg_i$ (K) represents the Tg of a homopolymer of monomer i; $W_i$ represents the mass fraction of each monomer; i represents an integer of 1 to n; and n represents the number of the types of monomers constituting the copolymer. It is noted here, however, that a value measured by a method using the above-described DSC is adopted as the glass transition temperature Tg of the particulate polymer according to the present embodiment.

From the standpoint of the adhesion between the separator and an electrode and the standpoint of inhibiting detachment of the particulate polymer from the coating layer, the average particle size of the particulate polymer is preferably 0.5 times to 5 times, more preferably 1 time to 2 times, still more preferably 1.1 times or more but less than 1.5 times, particularly preferably 1.2 times to 1.4 times the thickness of the coating layer. In the present disclosure, the "average particle size" of the particulate polymer means the volume-average particle size determined by the method described below in the section of Examples. The term "primary particles" used herein for the particulate polymer means independent particles that are integrated by covalent bonds. Meanwhile, the term "secondary particles" refers to aggregates each formed by two or more primary particles in contact with each other.

The particle size distribution MV/MN of the particulate polymer, which is determined by dividing the volume-average particle size MV of the particulate polymer by the number-average particle size MN, is preferably 1.60 or less,

more preferably 1.30 or less, still more preferably 1.20 or less, yet still more preferably 1.10 or less, particularly preferably less than 1.10. The particle size distribution of the particulate polymer is preferably in this range from the standpoint of ensuring uniformity in the thickness of the coating layer and thereby improving the cycle characteristics and the adhesive strength with an electrode, as well as the standpoint of reducing the amount of the particulate polymer on the smaller particle size side of the distribution, which are embedded in the coating layer, and thereby increasing the adhesive strength with an electrode and improving the heat resistance, and the standpoint of reducing the total thickness of the separator. A lower limit of the particle size distribution MV/MN of the particulate polymer is not particularly limited; however, it may be, for example, 1.01 or more, or 1.01.

The particulate polymer contained in the coating layer is preferably in the form of primary particles. The primary particles of the particulate polymer have an average particle size of preferably 1 μm to 10 μm, more preferably 1 μm to 5 μm, still more preferably 2 μm to 5 μm. A feature that the particulate polymer is in the form of primary particles means that the particulate polymer is uniformly dispersed in the coating layer, and this improves the 180° peel strength and the adhesive strength with an electrode and inhibits heat shrinkage, so that uniformity in the thickness of the coating layer can be ensured. When the average particle size of the primary particles is 1 μm to 10 μm, a structure in which the particulate polymer protrudes from the surface of the coating layer is likely to be formed, so that the adhesive strength with an electrode is improved, and heat shrinkage is inhibited.

Examples of the thermoplastic polymer include (meth)acrylic polymers, conjugated diene-based polymers, polyvinyl alcohol-based resins, and fluorine-containing resins.

From the standpoint of obtaining high adhesion with an electrode and low heat shrinkage rate, the thermoplastic polymer more preferably contains a (meth)acrylic polymer. The term "(meth)acrylic polymer" used herein means a polymer or copolymer that contains a (meth)acrylic compound as a monomer. The (meth)acrylic compound can be represented by the following general formula:

$$CH_2=CR^{Y1}-COO-R^{Y2}$$

In this formula, $R^{Y1}$ represents a hydrogen atom or a methyl group, and $R^{Y2}$ represents a hydrogen atom or a monovalent hydrocarbon group. When $R^{Y2}$ is a monovalent hydrocarbon group, it optionally has a substituent and a heteroatom. Examples of the monovalent hydrocarbon group include a chain alkyl group that may be linear or branched, a cycloalkyl group, and an aryl group. Examples of the substituent include a hydroxyl group and a phenyl group, and examples of the heteroatom include a halogen atom and an oxygen atom. The (meth)acrylic compound may be used singly, or in combination of two or more kinds thereof. Examples of the (meth)acrylic compound include (meth)acrylic acid, a linear alkyl (meth)acrylate, a cycloalkyl (meth)acrylate, a hydroxyl group-containing (meth)acrylate, and a (meth)acrylic acid aryl ester.

More specifically, examples of the linear alkyl (meth)acrylate include (meth)acrylates containing: a linear alkyl group having 1 to 3 carbon atoms, such as a methyl group, an ethyl group, an n-propyl group, or an isopropyl group; or a linear alkyl group having 4 or more carbon atoms, such as an n-butyl group, an isobutyl group, a t-butyl, an n-hexyl group, a 2-ethylhexyl group, or a lauryl group. Examples of the (meth)acrylic acid aryl ester include phenyl (meth)acrylate.

Specific examples of the (meth)acrylates include: (meth)acrylates containing a linear alkyl group, such as methyl acrylate, ethyl acrylate, propyl acrylate, isopropyl acrylate, butyl acrylate, isobutyl acrylate, t-butyl acrylate, n-hexyl acrylate, 2-ethylhexyl acrylate, lauryl acrylate, methyl methacrylate, ethyl methacrylate, propyl methacrylate, isopropyl methacrylate, butyl methacrylate, isobutyl methacrylate, t-butyl methacrylate, n-hexyl methacrylate, 2-ethylhexyl methacrylate, and lauryl methacrylate; and (meth)acrylates containing an aromatic ring, such as phenyl (meth)acrylate and benzyl (meth)acrylate.

The conjugated diene-based polymers, which are polymers containing a conjugated diene compound as a monomer unit, are readily compatible with an electrode and thus preferred. Examples of the conjugated diene compound include 1,3-butadiene, 2-methyl-1,3-butadiene, 2,3-dimethyl-1,3-butadiene, 2-chloro-1,3-butadiene, substituted linear conjugated pentadienes, and substituted and side chain-conjugated hexadienes, and these conjugated diene compounds may be used singly, or in combination of two or more thereof. Thereamong, 1,3-butadiene is particularly preferred. The conjugated diene-based polymers may also contain the below-described (meth)acrylic compound or other monomer as a monomer unit. Examples of the monomer include styrene-butadiene copolymers and hydrides thereof, acrylonitrile-butadiene copolymers and hydrides thereof, and acrylonitrile-butadiene-styrene copolymers and hydrides thereof.

Examples of the polyvinyl alcohol-based resins include polyvinyl alcohols and polyvinyl acetates.

A fluorine-containing resin is preferred from the standpoint of voltage resistance, and examples thereof include polyvinylidene fluorides, polytetrafluoroethylenes, and fluorine atom-containing copolymers, such as vinylidene fluoride-hexafluoropropylene copolymers, vinylidene fluoride-hexafluoropropylene-tetrafluoroethylene copolymers, and ethylene-tetrafluoroethylene copolymers. The fluorine-containing resin is preferably a fluorine atom-containing copolymer.

Among the above-exemplified thermoplastic polymers, the particulate polymer preferably contains at least one selected from the group consisting of a copolymer containing a (meth)acrylate as a monomer, a styrene-butadiene

copolymer, and a fluorine atom-containing copolymer. The copolymer containing a (meth)acrylate as a monomer more preferably contains (meth)acrylic acid, butyl (meth)acrylate, and ethylhexyl (meth)acrylate as monomers. When the particulate polymer contains any of these specific thermoplastic polymers, a separator for a power storage device that has a higher adhesive strength with an electrode and a lower heat shrinkage rate can be provided.

The particulate polymer preferably contains a crosslinkable monomer. Examples of the crosslinkable monomer include, but not particularly limited to, monomers having two or more radically polymerizable double bonds, and monomers having a functional group that gives a self-crosslinking structure during or after polymerization. These monomers may be used singly, or in combination of two or more kinds thereof.

Examples of the monomers having two or more radically polymerizable double bonds include divinylbenzene and polyfunctional (meth)acrylates, among which a polyfunctional (meth)acrylate is preferred. The polyfunctional (meth) acrylate may be at least one selected from the group consisting of bifunctional (meth)acrylates, trifunctional (meth) acrylates, and tetrafunctional (meth)acrylates. Specific examples thereof include polyoxyethylene diacrylate, polyoxyethylene dimethacrylate, polyoxypropylene diacrylate, polyoxypropylene dimethacrylate, neopentyl glycol diacrylate, neopentyl glycol dimethacrylate, butanediol diacrylate, butanediol dimethacrylate, trimethylolpropane triacrylate, trimethylolpropane trimethacrylate, pentaerythritol tetraacrylate, and pentaerythritol tetramethacrylate. These may be used singly, or in combination of two or more kinds thereof. Thereamong, from the same standpoint as described above, at least one of trimethylolpropane triacrylate or trimethylolpropane trimethacrylate is preferred.

(Resin Binder)

The coating layer preferably contains a resin binder for binding the inorganic filler particles with each other and the inorganic filler particles with the substrate. The type of a resin of the resin binder is not particularly limited, and any resin that is insoluble in an electrolyte solution of a power storage device such as a lithium ion secondary battery and electrochemically stable in the working range of the power storage device such as a lithium ion secondary battery can be used.

Specific examples of the resin of the resin binder include: polyolefins, such as polyethylene and polypropylene; fluorine-containing resins, such as polyvinylidene fluoride and polytetrafluoroethylene; fluorine-containing rubbers, such as vinylidene fluoride-hexafluoropropylene-tetrafluoroethylene copolymers and ethylene-tetrafluoroethylene copolymers; rubbers, such as styrene-butadiene copolymers and hydrides thereof, acrylonitrile-butadiene copolymers and hydrides thereof, acrylonitrile-butadiene-styrene copolymers and hydrides thereof, methacrylate-acrylate copolymers, styrene-acrylate copolymers, acrylonitrile-acrylate copolymers, ethylene-propylene rubbers, polyvinyl alcohols, and polyvinyl acetates; cellulose derivatives, such as ethyl cellulose, methyl cellulose, hydroxyethyl cellulose, and carboxymethyl cellulose; and resins having a melting point of 180°C or higher and resins having a decomposition temperature of 200°C or higher without a melting point, such as polyphenylene ethers, polysulfones, polyether sulfones, polyphenylene sulfides, polyether imides, polyamide imides, polyamides, and polyesters. These resin binders may be used singly, or in combination of two or more kinds thereof.

The resin binder may contain, for example, a resin latex binder. As the resin latex binder, for example, a copolymer of an unsaturated carboxylic acid monomer and other monomer copolymerizable therewith can be used. Examples of an aliphatic conjugated diene monomer include butadiene and isoprene, examples of the unsaturated carboxylic acid monomer include (meth)acrylic acid, and examples of the other monomer include styrene. A polymerization method of such a copolymer is not particularly limited; however, emulsion polymerization is preferred. A method of emulsion polymerization is not particularly limited, and any known method may be employed. A method of adding the monomers and other components is also not particularly limited, and any of a batch addition method, a divided addition method, and a continuous addition method may be employed. As the polymerization method, single-stage polymerization or multi-stage polymerization performed in two or more stages may be employed.

Specific examples of the resin binder include the following (1) to (7):

(1) polyolefins, such as polyethylenes, polypropylenes, ethylene-propylene rubbers, and modified products of these polyolefins;
(2) conjugated diene-based polymers, such as styrene-butadiene copolymers and hydrides thereof, acrylonitrile-butadiene copolymers and hydrides thereof, and acrylonitrile-butadiene-styrene copolymers and hydrides thereof;
(3) acrylic polymers, such as methacrylate-acrylate copolymers, styrene-acrylate copolymers, and acrylonitrile-acrylate copolymers;
(4) polyvinyl alcohol-based resins, such as polyvinyl alcohols and polyvinyl acetates;
(5) fluorine-containing resins, such as polyvinylidene fluorides, polytetrafluoroethylenes, vinylidene fluoride-hexafluoropropylene-tetrafluoroethylene copolymers, and ethylene-tetrafluoroethylene copolymers;
(6) cellulose derivatives, such as ethyl cellulose, methyl cellulose, hydroxyethyl cellulose, and carboxymethyl cellulose; and

(7) resins having a melting point and/or a glass transition temperature of 180°C or higher, and polymers having a decomposition temperature of 200°C or higher without a melting point, such as polyphenylene ethers, polysulfones, polyether sulfones, polyphenylene sulfides, polyether imides, polyamide imides, polyamides, and polyesters.

When the resin binder is a resin latex binder, its volume-average particle size (D50) may be, for example, 50 nm to 500 nm, 60 nm to 460 nm, or 80 nm to 250 nm. The volume-average particle size of the resin binder can be controlled by, for example, adjusting the polymerization time, the polymerization temperature, the raw material composition ratio, the order of adding raw materials, the pH, and the like.

From the standpoint of improving the 180° peel strength, the glass transition temperature of the resin binder is preferably 25°C or lower, more preferably 10°C or lower, still more preferably -15°C or lower. From the standpoint of permeability, the glass transition temperature of the resin binder is preferably -60°C or higher.

From the standpoint of improving the 180° peel strength, the volume-average particle size (D50) of the resin binder is preferably at least equal to, more preferably 2 times or more, still more preferably 2.5 times or more the average pore size of the polyolefin microporous membrane. By selecting the volume-average particle size (D50) of the resin binder in this manner, the resin binder can be retained on the surface of the polyolefin microporous membrane, so that the 180° peel strength is improved. From the standpoint of improving the rate characteristics, the volume-average particle size (D50) of the resin binder is preferably 10 times or less the average pore size of the polyolefin microporous membrane. From the standpoint of maintaining the permeability to be low and inhibiting blocking, the content ratio of the resin binder in the coating layer may be, for example, more than 0 parts by mass but 50 parts by mass or less, 1 part by mass to 20 parts by mass, 2 parts by mass to 10 parts by mass, or 3 parts by mass to 5 parts by mass, with respect to a total amount of the coating layer.

From the standpoint of wettability to the substrate, bindability between the substrate and the particulate polymer, bindability between the coating layer and the particulate polymer, bindability between the substrate and the coating layer, and adhesion with an electrode, the Tg of the resin binder is more preferably lower than 40°C. From the standpoint of ion permeability, the Tg of the resin binder is more preferably -100°C or higher, still more preferably -50°C or higher, particularly preferably -40°C or higher and, from standpoint of bindability between the substrate and the particulate polymer, the Tg of the resin binder is more preferably lower than 20°C, still more preferably lower than 15°C, particularly preferably lower than 0°C.

(Water-Soluble Polymer)

The coating layer may further contain a water-soluble polymer in addition to the inorganic filler, and the particulate polymer of the thermoplastic polymer. The water-soluble polymer may be non-compatible with the thermoplastic polymer constituting the particulate polymer. Generally, a water-soluble polymer functions as a dispersant in a coating liquid used for the formation of a coating layer containing an inorganic filler and a particulate polymer of a thermoplastic polymer, and functions as a dispersant and/or a humectant when the coating liquid is an aqueous coating material.

The content of the water-soluble polymer in the coating layer is preferably 0.04 parts by mass or more but less than 2 parts by mass, more preferably 0.04 parts by mass to 1.5 parts by mass, still more preferably 0.1 parts by mass to 1 part by mass, with respect to 100 parts by mass of the inorganic filler. When the content of the water-soluble polymer in the coating layer is 0.04 parts by mass or more, the bindability of inorganic components with each other is improved, so that heat shrinkage can be further inhibited. In addition, precipitation of components during the preparation of a slurry for the coating layer can be inhibited, and the components can be stably dispersed. When the content of the water-soluble polymer in the coating layer is 5 parts by mass or less, the generation of streaks and irregularities during the formation of the coating layer can be inhibited.

The water-soluble polymer also contributes to the bindability of the inorganic filler particles with each other in the coating layer. From the standpoint of inhibiting heat shrinkage of the separator, the water-soluble polymer preferably has a weight reduction rate of less than 10% at 150°C when the weight at 50°C in thermogravimetric measurement is defined as 100%.

The water-soluble polymer may be a naturally-derived polymer, a synthetic product, a semisynthetic product, or the like; however, from the standpoint of forming a coating material, particularly an aqueous coating material, from inorganic and organic components, the water-soluble polymer is preferably an anionic, cationic, amphoteric, or nonionic polymer, more preferably an anionic, cationic, or amphoteric polymer.

Examples of the anionic polymer include: modified starches, such as carboxymethyl starch and starch phosphate; anionic cellulose derivatives, such as carboxymethylcellulose; ammonium salts and alkali metal salts of polyacrylic acid; gum arabic; carrageenan; sodium chondroitin sulfate; sulfonic acid compounds, such as sodium polystyrene sulfonate, sodium polyisobutylene sulfonate, and naphthalene sulfonic acid condensates; and polyethyleneimine xanthate. Thereamong, from the standpoint of achieving an appropriate balance of rigidity, rate characteristics, and cycle characteristics for a power storage device, an anionic polymer containing a metal salt as a counter cation is

preferred, and an anionic cellulose derivative as well as an ammonium salt or alkali metal salt of polyacrylic acid are also preferred. From the standpoint of the balance between heat resistance and rate characteristics, the anionic polymer is more preferably an alkali metal salt of polyacrylic acid, still more preferably sodium polyacrylate.

The "ammonium salt or alkali metal salt of polyacrylic acid" refers to a polymer in which at least one of $-COO^-$ moieties derived from plural carboxylic acid groups forms a salt with an ammonium ion or an alkali metal ion. Examples of the alkali metal ion include a sodium ion ($Na^+$) and a potassium ion ($K^+$).

The ammonium salt or alkali metal salt of polyacrylic acid may be at least one of the following (I) to (III):

(I) a homopolymer of a monomer ($C_i$) having one ammonium salt or alkali metal salt of a carboxylic acid, or a copolymer of plural monomers ($C_i$) and other monomer(s);
(II) a homopolymer of a monomer ($C_{ii}$) having plural ammonium salts or alkali metal salts of a carboxylic acid, or a copolymer of a monomer ($C_{ii}$) and other monomer(s); and
(III) an ammonium salt or alkali metal salt of a polymer or copolymer obtained by polymerization or copolymerization of one or more carboxylic acid-containing monomers.

Examples of the monomer ($C_i$) having one ammonium salt or alkali metal salt of a carboxylic acid include sodium (meth)acrylate and ammonium (meth)acrylate.

Examples of the monomer ($C_{ii}$) having plural ammonium salts or alkali metal salts of a carboxylic acid include: an ammonium salt or sodium salt of 11-(methacryloyloxy)undecane-1,1-dicarboxylic acid; an ammonium salt, monosodium salt, or disodium salt of an ethylenically unsaturated dicarboxylic acid such as fumaric acid, maleic acid, itaconic acid, or citraconic acid; and a (meth)acryloyl group-containing alicyclic polycarboxylic acid.

Examples of monomers copolymerizable with the monomer ($C_i$) or monomer ($C_{ii}$) include: (meth)acrylamide; ethylenically unsaturated dicarboxylic acids, such as fumaric acid, maleic acid, itaconic acid, and citraconic acid; and ethylenically unsaturated dicarboxylic acid anhydrides, such as maleic anhydride, itaconic anhydride, and citraconic anhydride.

Examples of the ammonium salt or alkali metal salt of a polymer or copolymer obtained by polymerization or copolymerization of one or more carboxylic acid-containing monomers include sodium polyacrylate and ammonium polyacrylate.

The structures of the ammonium salts or alkali metal salts of polyacrylic acid that are described above in (I) to (III) may be redundant with each other. The ammonium salts or alkali metal salts of polyacrylic acid that are described above in (I) to (III) desirably give a low polyvalent cation content when dissolved in water. Examples of the polyvalent cation include a magnesium ion, a calcium ion, and an iron ion. By reducing the content of these ions, the dispersibility of the particulate polymer in a mixed slurry formed with the particulate polymer is stabilized.

Examples of the cationic polymer include: cationic starch; chitosan; gelatin; homopolymers and copolymers of dimethylaminoethyl (meth)acrylate quaternary salt; homopolymers and copolymers of dimethylallyl ammonium chloride; polyamidine and copolymers thereof; polyvinylimidazoline; dicyandiamide-based condensates; epichlorohydrin-dimethylamine condensates; and polyethyleneimine.

Examples of the amphoteric polymer include dimethylaminoethyl (meth)acrylate quaternary salt-acrylic acid copolymers, and polyacrylamide Hoffmann decomposition products.

Examples of the nonionic polymer include: starch and derivatives thereof; cellulose derivatives, such as methyl cellulose, hydroxyethyl cellulose, and hydroxypropyl cellulose, and ammonium salts and alkali metal salts thereof; gums such as guar gum, and modified products thereof; and synthetic polymers, such as polyvinyl alcohol, polyacrylamide, polyethylene glycol, polymethyl vinyl ether, polyisopropyl acrylamide, and copolymers of vinyl alcohol and other monomer, and modified products thereof.

The water-soluble polymer may or may not have an amide bond-containing cyclic structure. The water-soluble polymer having an amide bond-containing cyclic structure refers to a homopolymer or copolymer that contains a group having an amide bond-containing cyclic structure and has a skeleton derived from a polymerizable double bond. The water-soluble polymer having an amide bond-containing cyclic structure may have one or more amide bond-containing cyclic structures.

Examples of the group having an amide bond-containing cyclic structure include the group represented by the following Formula (2):

[Chem. 1]

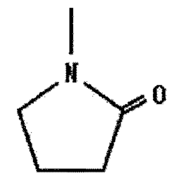

(2)

Specific examples of the water-soluble polymer having an amide bond-containing cyclic structure include: homopolymers of a monomer that contains a group having an amide bond-containing cyclic structure and a polymerizable double bond, such as poly(N-vinylcaprolactam) that is a homopolymer of N-vinylcaprolactam, and polyvinylpyrrolidone (PVP) that is a homopolymer of vinylpyrrolidone; copolymers of two or more monomers that contain a group having an amide bond-containing cyclic structure and a polymerizable double bond (e.g., *N*-vinylcaprolactam and vinylpyrrolidone); and copolymers of one or more monomers that contain a group having an amide bond-containing cyclic structure and a polymerizable double bond (e.g., N-vinylcaprolactam and vinylpyrrolidone), and one or more monomers that contain other polymerizable double bond (monomers other than the monomers that contain a group having an amide bond-containing cyclic structure and a polymerizable double bond).

Examples of monomers copolymerizable with the monomers that contain a group having an amide bond-containing cyclic structure and a polymerizable double bond include: vinyl acyclic amides; (meth)acrylic acid and esters thereof; (meth)acrylamide and derivatives thereof; styrene and derivatives thereof; vinyl esters, such as vinyl acetate; $\alpha$-olefins; basic unsaturated compounds, such as vinylimidazole and vinylpyridine, and derivatives thereof; carboxyl group-containing unsaturated compounds and acid anhydrides thereof; vinylsulfonic acid and derivatives thereof; vinylethylene carbonate and derivatives thereof; and vinyl ethers.

(Additives)

The coating layer may consist only of the inorganic filler, the particulate polymer of the thermoplastic polymer, and the optional water-soluble polymer, or may further contain additives in addition thereto. Examples of the additives include: low-molecular-weight dispersants other than water-soluble polymers; thickeners; antifoaming agents; and pH modifiers such as ammonium hydroxide. Specific examples of the low-molecular-weight dispersants include the monomer ($C_{ii}$) having plural ammonium salts or alkali metal salts of a carboxylic acid, and non-polymerizable compounds having plural ammonium salts or alkali metal salts of a carboxylic acid (e.g., sodium alginate and sodium hyaluronate).

Specific examples of the antifoaming agents include surfactants containing ethoxylated acetylene glycol (acetylene-based surfactants) represented by the following Formula (A):

[Chem. 2]

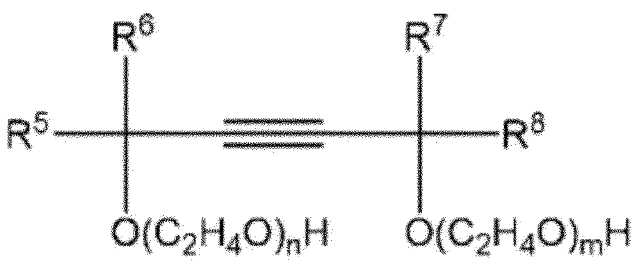

(A)

{wherein, $R^5$ to $R^8$ each independently represent an alkyl group having 1 to 10 carbon atoms; and n and m each independently represent an integer of 0 or larger, provided that n + m = 0 to 40}.

Specific examples of the alkyl group having 1 to 10 carbon atoms include linear, branched, and cyclic alkyl groups, such as a methyl group, an ethyl group, an n-propyl, an isopropyl group, an *n*-butyl group, a *sec*-butyl group, a *tert*-butyl group, an *n*-pentyl group, an *n*-hexyl group, an *n*-heptyl group, an *n*-octyl group, an *n*-nonyl group, and an *n*-decyl group.

Specific examples of acetylene glycol represented by Formula (A) include ethoxylated forms of 2,5,8,11-tetramethyl-6-dodecyne-5,8-diol, 5,8-dimethyl-6-dodecyne-5,8-diol, 2,4,7,9-tetramethyl-5-decyne-4,7-diol, 4,7-dimethyl-5-decyne-4,7-diol, 2,3,6,7-tetramethyl-4-octyne-3,6-diol, 3,6-dimethyl-4-octyne-3,6-diol, 2,5-dimethyl-3-hexyne-2,5-diol, and 2,4,7,9-tetramethyl-5-decyne-4,7-diol (number of moles of added ethylene oxide: 1.3), ethoxylated 2,4,7,9-tetramethyl-5-decyne-4,7-diol (number of moles of added ethylene oxide: 4), ethoxylated 3,6-dimethyl-4-octyne-3,6-diol (number of moles of added ethylene oxide: 4), ethoxylated 2,5,8,11-tetramethyl-6-dodecyne-5,8-diol (number of moles of added ethylene oxide: 6), ethoxylated 2,4,7,9-tetramethyl-5-decyne-4,7-diol (number of moles of added ethylene oxide: 10), ethoxylated 2,4,7,9-tetramethyl-5-decyne-4,7-diol (number of moles of added ethylene oxide: 30), and ethoxylated 3,6-dimethyl-4-octyne-3,6-diol (number of moles of added ethylene oxide: 20). These antifoaming agents may be used singly, or in combination of two or more kinds thereof.

Acetylene-based surfactants are available as commercial products, and examples thereof include OLFINE SPC (manufactured by Nisshin Chemical Industry Co., Ltd., active ingredient: 80 parts by mass, pale yellow liquid), OLFINE AF-103 (manufactured by Nisshin Chemical Industry Co., Ltd., pale brown liquid), OLFINE AF-104 (manufactured by Nisshin Chemical Industry Co., Ltd., pale brown liquid), OLFINE SK-14 (manufactured by Nisshin Chemical Industry Co., Ltd., pale yellow viscous liquid), OLFINE AK-02 (manufactured by Nisshin Chemical Industry Co., Ltd., pale yellow viscous liquid), OLFINE AF-201F (manufactured by Nisshin Chemical Industry Co., Ltd., pale yellow viscous liquid), OLFINE D-10PG (manufactured by Nisshin Chemical Industry Co., Ltd., active ingredient: 50 parts by mass, pale yellow liquid), OLFINE E-1004 (manufactured by Nisshin Chemical Industry Co., Ltd., active ingredient: 100 parts by mass, pale yellow liquid), OLFINE E-1010 (manufactured by Nisshin Chemical Industry Co., Ltd., active ingredient: 100 parts by mass, pale yellow liquid), OLFINE E-1020 (manufactured by Nisshin Chemical Industry Co., Ltd., active ingredient: 100 parts by mass, pale yellow liquid), OLFINE E-1030W (manufactured by Nisshin Chemical Industry Co., Ltd., active ingredient: 75 parts by mass, pale yellow liquid), SURFYNOL 420 (manufactured by Nisshin Chemical Industry Co., Ltd., active ingredient: 100 parts by mass pale yellow viscous liquid), SURFYNOL 440 (manufactured by Nisshin Chemical Industry Co., Ltd., active ingredient: 100 parts by mass, pale yellow viscous liquid), and SURFYNOL 104E (manufactured by Nisshin Chemical Industry Co., Ltd., active ingredient: 50 parts by mass, pale yellow viscous liquid).

As an additive surfactant, a polyether-based surfactant and/or a silicone-based surfactant can also be used instead of or together with an acetylene surfactant. Representative examples of the polyether-based surfactant include polyethylene glycol, polypropylene glycol, polytetramethylene glycol, polyoxyethylene oleyl ether, polyoxyethylene stearyl ether, polyoxyethylene lauryl ether, polyoxyethylene dodecyl ether, polyoxyethylene nonylphenyl ether, polyoxyethylene octylphenyl ether, and polyoxyethylene-polyoxypropylene block copolymers. Thereamong, polyethylene glycol is particularly preferred. These surfactants may be used singly, or in combination of two or more kinds thereof.

Polyether-based surfactants are available as commercial products, and examples thereof include E-D052, E-D054, and E-F010 (manufactured by San Nopco Ltd.).

The silicone-based surfactant may be linear, branched, or cyclic as long as it contains at least a silicone chain, and the silicone-based surfactant may contain a hydrophobic group or a hydrophilic group. Specific examples of the hydrophobic group include: alkyl groups, such as a methyl group, an ethyl group, an n-propyl group, an isopropyl group, an n-butyl group, a *sec*-butyl group, a tert-butyl group, an n-pentyl group, an n-hexyl group, an n-heptyl group, an n-octyl group, an n-nonyl group, and an n-decyl group; cyclic alkyl groups, such as a cyclohexyl group; and aromatic hydrocarbon groups, such as a phenyl group. Specific examples of the hydrophilic group include an amino group, a thiol group, a hydroxy group, an alkoxy group, a carboxylic acid group, a sulfonic acid group, a phosphoric acid group, organic and inorganic salts thereof, an ester group, an aldehyde group, a glycerol group, and a heterocyclic group. Representative examples of the silicone-based surfactant include dimethylsilicone, methylphenylsilicone, chlorophenylsilicone, alkyl-modified silicone, fluorine-modified silicone, amino-modified silicone, alcohol-modified silicone, phenol-modified silicone, carboxy-modified silicone, epoxy-modified silicone, fatty acid ester-modified silicone, and polyether-modified silicone.

Silicone-based surfactants are available as commercial products, and examples thereof include: BYK-300, BYK-301, BYK-302, BYK-306, BYK-307, BYK-310, BYK-313, BYK-320, BYK-333, BYK-341, BYK-345, BYK-346, BYK-347, BYK-348, and BYK-349 (all of which are trade names, manufactured by BYK Japan K.K.); KM-80, KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (all of which are trade names, manufactured by Shin-Etsu Chemical Co., Ltd.); SH-28PA, SH8400, SH-190, and SF-8428 (all of which are trade names, manufactured by Dow Corning Toray Co., Ltd.); POLYFLOW KL-245, POLYFLOW KL-270, and POLYFLOW KL-100 (all of which are trade names, manufactured by Kyoeisha Chemical Co., Ltd.); and SILFACE SAG002, SILFACE SAG005, and SILFACE SAG0085 (all of which are trade names, manufactured by Nissin Chemical Industry Co., Ltd.).

(Amount of Coating Layer)

The amount of the coating layer with respect to the substrate, i.e. the amount of the coating layer per unit area of one surface of the substrate is, in terms of weight, preferably 0.5 $g/m^2$ or more, more preferably 1.0 $g/m^2$ or more, and it is, in terms of volume, preferably 0.15 $cm^3/m^2$ or more, more preferably 0.30 $cm^3/m^2$ or more. An upper limit of the amount of the coating layer is, in terms of weight, preferably 10.0 $g/m^2$ or less, more preferably 7.0 $g/m^2$ or less, and it is, in terms of

volume, preferably 3.50 $cm^3/m^2$ or less, more preferably 2.50 $cm^3/m^2$ or less. The amount of the coating layer is preferably equal to or more than the above-described lower limit value from the standpoint of improving the adhesive strength between the coating layer and an electrode, as well as the standpoint of inhibiting heat shrinkage. The amount of the coating layer is preferably equal to or less than the above-described upper limit value from the standpoint of inhibiting a reduction in the ion permeability.

(Thickness of Coating Layer)

The thickness of the coating layer arranged on at least one surface of the substrate (thickness of inorganic filler portion) is preferably 0.3 μm to 5.0 μm, more preferably 0.5 μm to 2.5 μm, still more preferably 0.7 μm to 1.3 μm. When the thickness of the coating layer is 0.3 μm or more, heat shrinkage can be further inhibited, and a uniform adhesive strength is likely to be obtained between an electrode and the substrate, as a result of which the properties of a power storage device can be improved.

The thickness is preferably 1.3 μm or less since this enables to inhibit a reduction in the ion permeability and to obtain a thin separator for a power storage device. In other words, by reducing the thickness of the separator, a power storage device having a large capacity per volume can be produced. Meanwhile, from the standpoint of further inhibiting heat shrinkage and preventing the particulate polymer from detaching from the coating layer, the thickness of the coating layer is preferably 1.6 μm or more, or 2.1 μm or more. The thickness can be adjusted by, for example, changing the type or the concentration of the particulate polymer in the coating liquid applied to the substrate, the amount of the coating liquid to be applied, the application method, the application conditions, and the like. It is noted here, however, that the method of adjusting the thickness of the coating layer is not limited to the above.

FIG. 1 is a schematic drawing of the surface of the coating layer of the separator for a power storage device according to the present embodiment. As schematically illustrated in FIG. 1, the surface of a coating layer (10) includes: an inorganic filler (1); and a particulate polymer (2) of a thermoplastic polymer, which protrudes from an inorganic filler portion. In FIG. 1, the particulate polymer exists in the state of primary particles, without aggregating with other particles of the particulate polymer.

FIG. 2 is a cross-sectional view taken along a line A-A of the separator for a power storage device in FIG. 1. As schematically illustrated in FIG. 2, the coating layer (20) is formed in an inclined manner such that it continuously increases in thickness toward the protruding particulate polymer (2), starting from the inorganic filler portion that is at least 1.5D away from the center of volume of each particle of the particulate polymer in the horizontal direction (the planar direction of the coating layer). The gradient of the inclined coating layer decreases away from the protruding particulate polymer and increases toward the protruding particulate polymer. The inorganic filler (1) partially covers the periphery of the protruding part in such a manner that the inorganic filler (1) is piled up along the outline of the particulate polymer, and the vicinity of the center of the protruding part is exposed on the surface of the coating layer.

<<Method of Producing Separator for Power Storage Device>>

<Method of Producing Substrate>

As a method of producing the substrate, any known production method, for example, a wet porosification method or a dry porosification method, may be employed. For example, when the substrate is a polyolefin microporous membrane, examples of the wet porosification method include: a method of melt-kneading a polyolefin resin composition and a plasticizer, molding the resultant into the form of a sheet, optionally stretching the sheet, and then extracting the plasticizer to form pores; a method of melt-kneading a polyolefin resin composition containing a polyolefin-based resin as a main component, extruding the resultant at a high draw ratio, and then heat-treating and stretching the thus extruded product to cause detachment of polyolefin crystal interfaces and thereby form pores; a method of melt-kneading a polyolefin resin composition and an inorganic filler, molding the resultant into the form of a sheet, and then stretching the thus extruded product to cause detachment of the interfaces between the polyolefin and the inorganic filler and thereby form pores; and a method of dissolving a polyolefin resin composition, subsequently immersing the resultant into a poor solvent for the polyolefin, and then solidifying the polyolefin while simultaneously removing the solvent to form pores.

Examples of the method of producing the substrate include: a chemical bond method in which a web is immersed in a binder and then dried to generate bonds between fibers; a thermal bond method in which heat-fusible fibers are mixed into a web, and the fibers are partially melted to generate bonds between fibers; a needle punching method in which a web is repeatedly pierced with a puncturing needle to mechanically entangle fibers; and a hydroentangling method in which a high-pressure water stream is sprayed from a nozzle onto a web through a net (screen) to entangle fibers.

As one example of a method of producing the polyolefin microporous membrane, a method of melt-kneading a polyolefin resin composition and a plasticizer, molding the resultant into the form of a sheet, and then extracting the plasticizer will now be described. The polyolefin resin composition and the plasticizer are melt-kneaded. As a melt-kneading method, for example, a method of adding a polyolefin resin and, if necessary, other additives to a resin kneading apparatus such as an extruder, a kneader, a LABO-PLASTOMILL, a kneading roll, or a Banbury mixer, and introducing thereto the plasticizer at an arbitrary ratio while heat-melting the resin component, followed by kneading, may be employed. In this case, the polyolefin resin, the other additives, and the plasticizer are preferably pre-kneaded in advance at a prescribed ratio using a Henschel mixer or the like before being added to the resin kneading apparatus. More preferably, only a portion of the plasticizer is added in the pre-kneading process, and the subsequent kneading is performed while side-feeding the remainder of the plasticizer to the resin kneading apparatus.

As the plasticizer, a nonvolatile solvent capable of forming a homogeneous solution at a temperature equal to or higher than the melting point of the polyolefin can be used.

Examples of the plasticizer include: hydrocarbons, such as liquid paraffins and paraffin waxes; esters, such as dioctyl phthalate and dibutyl phthalate; and higher alcohols, such as oleyl alcohol and stearyl alcohol. Thereamong, a liquid paraffin is preferred.

A ratio of the polyolefin resin composition and the plasticizer is not particularly limited as long as it is in a range in which these materials can be uniformly melt-kneaded and molded into the form of a sheet. For example, the mass fraction of the plasticizer in a composition composed of the polyolefin resin composition and the plasticizer is preferably 30 parts by mass to 80 parts by mass, more preferably 40 parts by mass to 70 parts by mass. The mass fraction of the plasticizer is preferably in this range from the standpoint of attaining both satisfactory melt tension during melt-molding and satisfactory formability of a uniform and fine pore structure.

The melt-kneaded product obtained by hot-melting and kneading in the above-described manner is molded into the form of a sheet. One example of a method of producing a sheet-form molded body is a method of extruding the melt-kneaded product into the form of a sheet through a T-die or the like, and bringing the thus extruded sheet into contact with a thermal conductor to cool the sheet to a temperature sufficiently lower than the crystallization temperature of the resin component and thereby solidify the sheet. Examples of the thermal conductor used for this cooling and solidification include metals, water, air, and the plasticizer itself, and metal rolls are preferred because of their high heat conduction efficiency. In this case, at the time of bringing the extruded melt-kneaded product into contact with the metal rolls, it is more preferred to sandwich the melt-kneaded product between the rolls since this not only further improves the heat conduction efficiency but also increases the membrane strength through orientation of the resulting sheet, and improves the surface smoothness of the sheet. The die lip gap at the time of extruding the melt-kneaded product through a T-die into the form of a sheet is preferably 400 μm to 3,000 μm, more preferably 500 μm to 2,500 μm.

Subsequently, the thus obtained sheet-form molded body is preferably stretched. For this stretching treatment, both uniaxial stretching and biaxial stretching can be suitably employed. Biaxial stretching is preferred from the standpoint of the strength and the like of the resulting microporous membrane. When the sheet-form molded body is stretched at a high ratio in the biaxial directions, the molecules are oriented in the planar direction, so that the eventually obtained porous substrate is unlikely to be torn and has a high puncture strength. Examples of a stretching method include simultaneous biaxial stretching, sequential biaxial stretching, multistage stretching, and repetitive stretching. Simultaneous biaxial stretching is preferred from the standpoint of improving the puncture strength and obtaining superior stretching uniformity and shutdown properties.

The stretching ratio is preferably in a range of 20 to 100, more preferably in a range of 25 to 50, in terms of area ratio. As for the stretching ratio in each axial direction, the stretching ratio is preferably in a range of 4 to 10 in MD and 4 to 10 in TD, more preferably in a range of 5 to 8 in MD and 5 to 8 in TD. The stretching ratio is preferably in this range from the standpoint of not only providing a more sufficient strength, but also inhibiting membrane breakage in the stretching step and thereby obtaining a high productivity. It is noted here that "MD" means the machine direction in, for example, continuous molding of a polyolefin microporous membrane, and "TD" means the direction that crosses MD at an angle of 90°.

Further, the sheet-form molded body obtained in the above-described manner may be rolled as well. This rolling can be performed by, for example, a press method using a double belt press machine or the like. By the rolling, particularly the orientation of a surface layer portion of the sheet-form molded body can be enhanced. The rolling area ratio is preferably higher than 1 but 3 or lower, more preferably higher than 1 but 2 or lower. The rolling ratio is preferably in this range from the standpoint of increasing the membrane strength of the eventually obtained porous substrate, and allowing the formation of a porous structure that is more uniform in the membrane thickness direction.

Subsequently, the plasticizer is removed from the sheet-form molded body to obtain a porous substrate. One example of a method of removing the plasticizer is a method of immersing the sheet-form molded body in an extraction solvent to extract the plasticizer, and subsequently thoroughly drying the molded body. A method of extracting the plasticizer may be a batch process or a continuous process. In order to prevent the resulting porous substrate from shrinking, it is preferred to restrain the ends of the sheet-form molded body during the series of the immersion and drying operations.

The removal of the plasticizer can be controlled such that the amount of the plasticizer is preferably 0.1 parts by mass to 1.6 parts by mass, more preferably 0.2 parts by mass to 1.2 parts by mass, or 0.3 parts by mass to 1.0 parts by

mass, based on a total mass of the resulting substrate. When the amount of the plasticizer is in this range, the binding strength between the substrate and the coating layer can be improved while reducing the battery internal resistance.

As the extraction solvent, it is preferred to use a solvent which is a poor solvent for the polyolefin resin but a good solvent for the plasticizer and has a boiling point lower than the melting point of the polyolefin resin. Examples of such an extraction solvent include: hydrocarbons, such as n-hexane and cyclohexane; halogenated hydrocarbons, such as methylene chloride and 1,1,1-trichloroethane; non-chlorine-based halogenated solvents, such as hydrofluoroethers and hydrofluorocarbons; alcohols, such as ethanol and isopropanol; ethers, such as diethyl ether and tetrahydrofuran; and ketones, such as acetone and methyl ethyl ketone. These extraction solvents may be recovered and recycled by an operation such as distillation.

In order to inhibit shrinking of the porous substrate, a heat treatment such as heat setting or thermal relaxation may be performed after the stretching step or after the formation of the porous substrate. The porous substrate may also be post-treated by, for example, a hydrophilization treatment with a surfactant or the like, or a crosslinking treatment with ionizing radiation.

The following is an example of a dry porosification method different from the above-described wet porosification method.

First, a film is produced by melt-kneading materials in an extruder without the use of a solvent and then directly stretching and orienting the film, after which the annealing step, the cold stretching step, and the hot stretching step are sequentially performed to produce a microporous membrane. The dry porosification method is not particularly limited and may be, for example, a method of stretching and orienting a molten resin extruded from an extruder through a T-die, or an inflation method.

<Method of Arranging Coating Layer>

The coating layer is arranged on at least one surface of the substrate produced in the above-described manner. One example of a method of arranging the coating layer is a method of applying a coating liquid that contains the inorganic filler and the particulate polymer of the thermoplastic polymer onto the substrate, and subsequently removing the below-described medium.

As the coating liquid, a dispersion obtained by dispersing the inorganic filler and the particulate polymer in a solvent or a dispersion medium (hereinafter, simply referred to as "medium") that does not dissolve the particulate polymer can be used. Preferably, the particulate polymer is synthesized by emulsion polymerization, and an emulsion obtained by the emulsion polymerization can be directly used as the coating liquid.

The medium of the coating liquid is preferably one which can uniformly and stably disperse or dissolve the inorganic filler, the particulate polymer and, if necessary, the water-soluble polymer, and examples of the medium include N-methylpyrrolidone, N,N-dimethylformamide, N,N-dimethylacetamide, water, ethanol, methanol, toluene, hot xylene, methylene chloride, and hexane.

The medium of the coating liquid is preferably water or a mixed medium composed of water and a water-soluble organic medium.

Examples of the water-soluble medium include, but not particularly limited to, ethanol and methanol. Among the above-exemplified media, water is more preferred.

If the coating liquid infiltrates to the interior of the substrate when applied to the substrate, the particulate polymer containing a polymer is likely to block the surfaces and the interiors of the substrate pores and reduce the permeability. In this respect, an aqueous dispersion in which water is used as the medium of the coating liquid is preferred since it makes the coating liquid hardly infiltrate to the interior of the substrate and the particulate polymer containing a polymer more likely to exist mainly on the outer surface of the substrate, so that a reduction in permeability can be more efficiently inhibited.

In the coating liquid, the volume-average particle size (D50) of the particulate polymer may be, for example, 1.0 μm to 12 μm. From the standpoint of obtaining a preferred distribution state of the protruding particulate polymer in the coating layer, the volume-average particle size (D50) is preferably 1.5 μm or more, but preferably 10 μm or less, 6.0 μm or less, 5.0 μm or less, 3.5 μm or less, 3.0 μm or less, or 2.5 μm or less. When the volume-average particle size (D50) is equal to or more than the above-described lower limit value, aggregation of the particulate polymer is likely to be inhibited in a preferred manner. Further, when the volume-average particle size (D50) is equal to or less than the above-described upper limit value, the difference in particle size from the inorganic filler can be kept within a prescribed range, and it is thus easy to control the precipitation of the particulate polymer in the coating liquid in a preferred manner. The volume-average particle size of the resin binder can be controlled by, for example, adjusting the polymerization time, the polymerization temperature, the raw material composition ratio, the order of adding raw materials, the pH, and the like for obtaining the particulate polymer.

The coating liquid may also contain additives as desired. Examples of the additives of the coating liquid include: dispersants, such as surfactants; thickeners; wetting agents; antifoaming agents; and pH modifiers containing an acid or an alkali.

Examples of a method of dispersing or dissolving the inorganic filler, the particulate polymer and, if necessary, the water-soluble polymer in the medium of the coating liquid include mechanical stirring using a ball mill, a bead mill, a planetary ball mill, a vibrating ball mill, a sand mill, a colloid mill, an attritor, a roll mill, a high-speed impeller disperser, a disperser, a homogenizer, a high-speed impact mill, an ultrasonic disperser, a stirring blade, or the like.

As a procedure for preparing the coating liquid, it is preferred to first add the water-soluble polymer to a coating liquid in which the inorganic filler has been dispersed, and then add the resin binder and the particulate polymer. By preparing the coating liquid in this order, metal ions contained in the inorganic filler are adsorbed and protected by the water-soluble polymer, so that aggregation of the resin binder and the particulate polymer can be inhibited.

From the standpoint of obtaining a preferred distribution state of the protruding particulate polymer in the coating layer, the viscosity of the coating liquid is preferably 10 mPa·s or more, or 20 mPa·s or more. An upper limit value of the viscosity of the coating liquid is preferably 100 mPa·s or less, 80 mPa·s or less, 60 mPa·s or less, or 40 mPa·s or less.

In the present embodiment, the thermoplastic polymer contained in the coating liquid is preferably in the form of particles having a large particle size of 1 $\mu$m to 10 $\mu$m. Therefore, when the viscosity of the coating liquid is 10 mPa·s or more, the precipitation of the thermoplastic polymer in the coating liquid can be inhibited. Meanwhile, when the viscosity of the coating liquid is 100 mPa·s or less, turbulence is likely to occur in the liquid during stirring, and this improves the dispersion of the particulate polymer in the flow of the coating liquid, making it easier to control the coefficient of variation (CV) of the areas (si) of Voronoi polygons to be in the above-described range.

Further, the viscosity of the coating liquid is preferably 10 mPa·s to 100 mPa·s from the standpoint of controlling the precipitation of the thermoplastic polymer in the coating liquid in a preferred manner, increasing the gradient of the coating layer, and increasing the contact ratio between the particulate polymer and the substrate surface, in the process of removing solvents from a coating film after the application of the coating liquid to form the coating layer. Examples of a means for controlling the viscosity of the coating liquid include adjusting the aspect ratio of the inorganic filler, the coefficient of variation of the particle size distribution of the inorganic filler, the type of a thickener, and the like. By using such means, the viscosity of the coating liquid can be reduced and the meniscus of the coating liquid on the particulate polymer (wettability) can be improved in the process of immobilizing the coating liquid (forming the coating layer by drying), as a result of which the gradient of the coating layer can be increased, and the adhesive strength with an electrode can be improved.

The substrate may be surface-treated before applying the coating liquid thereto. It is preferred to perform a surface treatment since this not only makes it easier to apply the coating liquid to the substrate but also improves the adhesion between the substrate and the thermoplastic polymer, so that the 180° peel strength is likely to be controlled at 200 gf/cm or more.

Examples of a method of the surface treatment include a corona discharge treatment method, a plasma treatment method, a mechanical roughening method, a solvent treatment method, an acid treatment method, and a UV oxidation method. The surface treatment may be, for example, a corona discharge treatment.

A method of applying the coating liquid onto the substrate is not particularly limited as long as it can realize the desired coating pattern, coating thickness, and coating area.

Examples of the application method include a gravure coater method, a small-diameter gravure coater method, a reverse roll coater method, a transfer roll coater method, a kiss coater method, a dip coater method, a knife coater method, an air doctor coater method, a blade coater method, a rod coater method, a squeeze coater method, a cast coater method, a die coater method, a screen printing method, a spray coating method, and an ink-jet coating method. Thereamong, a gravure coater method or a spray coating method is preferred from the standpoint of obtaining a high degree of freedom for the coating shape of the particulate polymer and easily obtaining a preferred area ratio.

The coating liquid is preferably applied at a high shear rate by a gravure coater method or the like, and the shear rate is preferably 40,000 $sec^{-1}$ to 120,000 $sec^{-1}$. When the shear rate is in this range, the dispersion of the primary particles of the particulate polymer is improved, and it is easier to control the 180° peel strength to be 200 gf/cm or more.

Before and during the application, the coating liquid may be stirred such that the coating liquid can be applied in a state where the particulate polymer is uniformly dispersed therein. Examples of a stirring method include:

a method of stirring the coating liquid using turbulence in a supply tank; and
a method of performing ultrasonication (a vibration-stirring treatment with ultrasonic waves) of the coating liquid immediately before the application.

It is preferred to perform the stirring since it is advantageous from the standpoint of obtaining a preferred distribution state of the protruding particulate polymer in the resulting coating layer.

A method of removing the medium from a coated film after the application is not particularly limited as long as it does not adversely affect the substrate and the resulting coating layer. Examples of such a method include: a method of drying the substrate at a temperature of not higher than its melting point while immobilizing the substrate; a method of vacuum-drying the substrate at a low temperature; and a method of immersing the substrate into a medium that is a poor

solvent for the particulate polymer and then solidifying the particulate polymer in the form of particles while simultaneously extracting out the medium.

<Production of Wound Body of Separator>

The thus obtained separator for a power storage device is preferably wound into a wound body. By preparing the separator as a wound body, the separator can be rapidly and easily reeled out, so that the productivity can be improved in the production process of a power storage device.

<<Power Storage Device>>

The power storage device according to the present embodiment includes the separator for a power storage device according to the present embodiment. Examples of the power storage device include, but are not particularly limited to, batteries such as nonaqueous electrolyte secondary batteries, condensers, and capacitors. Thereamong, in order to take advantage of the separator for a power storage device according to the present embodiment, the power storage device is preferably a battery, more preferably a nonaqueous electrolyte secondary battery, still more preferably a lithium ion secondary battery.

The lithium ion secondary battery includes: a positive electrode; a negative electrode; the separator for a power storage device according to the present embodiment, which is arranged between the positive electrode and the negative electrode; and a nonaqueous electrolyte solution. The power storage device according to the present embodiment, by including the separator for a power storage device, exhibits excellent properties such as power storage performance, and has excellent battery characteristics when it is a lithium ion secondary battery.

When the power storage device according to the present embodiment is a lithium ion secondary battery, the positive electrode, the negative electrode, and the nonaqueous electrolyte solution are not limited, and any known ones can be used.

As the positive electrode, a positive electrode that has a positive electrode active material layer containing a positive electrode active material on a positive electrode current collector can be preferably used. One example of the positive electrode current collector is an aluminum foil. Examples of the positive electrode active material include lithium-containing composite oxides, such as LiCoO2, LiNiO2, spinel-type $LiMnO_4$, and olivine-type $LiFePO_4$. If appropriate, the positive electrode active material layer may also contain a binder, a conductive material, and the like, in addition to the positive electrode active material.

As the negative electrode, a negative electrode that has a negative electrode active material layer containing a negative electrode active material on a negative electrode current collector can be preferably used. One example of the negative electrode current collector is a copper foil. Examples of the negative electrode active material include: carbon materials, such as graphite, non-graphitizable carbon materials, easily graphitizable carbon materials, and composite carbon materials; and silicon, tin, metal lithium, and various alloy materials.

The nonaqueous electrolyte solution is not particularly limited, and any electrolyte solution in which an electrolyte is dissolved in an organic solvent can be used. Examples of the organic solvent include propylene carbonate, ethylene carbonate, dimethyl carbonate, diethyl carbonate, and ethyl methyl carbonate. Examples of the electrolyte include lithium salts, such as $LiClO_4$, $LiBF_4$, and $LiPF_6$.

<<Method of Producing Power Storage Device>>

A method of producing a power storage device using the separator of the present embodiment is not particularly limited. One example thereof is the following.

First, the separator of the present embodiment is produced by the above-described method. As for the size and the shape of the separator, the separator may have an elongated shape with a width of 10 mm to 500 mm, preferably 80 mm to 500 mm, and a length of 200 m to 10,000 m, preferably 1,000 m to 6,000 m.

Next, a positive electrode, the separator, and a negative electrode are disposed in layers in the order of positive electrode-separator-negative electrode-separator or negative electrode-separator-positive electrode-separator, and the resultant is wound into a circular or flat spiral shape to obtain a wound body. This wound body is housed in a device can (e.g., a battery can), and an electrolyte solution is injected thereto, whereby a power storage device can be produced. Alternatively, a power storage device can be produced by a method of placing a wound body obtained by folding electrodes and the separator in a device container (e.g., an aluminum film), and subsequently injecting thereto an electrolyte solution.

In this process, the wound body may be pressed. Specifically, for example, a method of stacking the separator with a current collector and electrodes having an active material layer formed on at least one side of the current collector such that the coating layer and the active material layer face each other, and subsequently pressing the resultant may be employed.

The pressing temperature is preferably equal to or higher than $T_{1.00}$ as a temperature at which adhesiveness can be effectively exerted. It is noted here that $T_{1.00}$ is a temperature at which DDSC in a range of 0°C to 150°C is minimum, where DDSC is defined as a value obtained by differentiating the heat flux difference per unit time measured by DSC (differential scanning calorimetry) with respect to temperature.

By performing the pressing at a temperature equal to or higher than $T_{1.00}$, the coating layer is sufficiently deformed, and good adhesive strength can be obtained. For example, the pressing temperature is preferably 35°C or higher. From the standpoint of inhibiting clogging or heat shrinkage of the pores in the separator caused by hot pressing, the pressing temperature is preferably lower than the melting points of the materials contained in the substrate, more preferably 130°C or lower.

From the standpoint of inhibiting clogging of the pores in the separator, the pressing pressure is preferably 20 MPa or lower. The pressing time may be 1 second or shorter in the case of using a roll press. In the case of using a surface press, the pressing time may be several hours, and it is preferably 2 hours or shorter from the standpoint of productivity.

By using the separator for a power storage device according to the present embodiment in the above-described production process, a press-back can be inhibited at the time of press-molding the wound body composed of the electrodes and the separator. Therefore, a reduction in yield in the device assembly step can be inhibited, and the production process time can be shortened.

Adhesiveness may be imparted to the wound body without pressing. Specifically, when the wound body is housed in a device can and an electrolyte solution is injected thereto to produce a power storage device, for example, a method of imparting adhesiveness between the electrodes facing the coating layer of the separator by means of the pressure generated in the device can, or the pressure associated with expansion and contraction of the electrodes caused by charging and discharging of the power storage device, may be employed.

The power storage device, particularly lithium ion secondary battery, that is produced in the above-described manner is highly adhesive with an electrode and provided with the separator of the present embodiment having a low heat shrinkage rate; therefore, it exhibits excellent battery characteristics (rate characteristics) and long-term continuous operational durability (cycle characteristics).

EXAMPLES

Embodiments of the present disclosure will now be described by way of Examples and Comparative Examples; however, the present disclosure is not limited to the below-described Examples and Comparative Examples.

<<Measurement and Evaluation Methods>>

<Thickness of Inorganic Filler Portion of Coating Layer, Gradient of Coating Layer, and Protrusion Amount of Particulate Polymer>

A separator of interest was freeze-fractured, and a cross section thereof was observed under an SEM (model S-4800, manufactured by Hitachi, Ltd.). In the thus obtained field of view, the thickness of the inorganic filler portion of the coating layer, the gradient of the coating layer, and the protrusion amount of the particulate polymer were measured. Specifically, a sample of the separator was cut out in a size of about 1.5 mm × 2.0 mm and stained with ruthenium. The thus stained sample was placed in a gelatin capsule along with ethanol, frozen in liquid nitrogen, and then fractured using a hammer.

<180° Peel Strength>

The separator was cut out in a size of 2 mm × 7 mm, and the surface thereof on the opposite side of the coating layer to be measured was attached to a glass plate using a double-sided adhesive tape, after which a tape (product name "Mending Tape MP-12", manufactured by 3M Company) was attached to the coating layer. One end of the tape was peeled off by 5 mm and, using a tensile tester (model "AG-IS, SLBL-1kN", manufactured by Shimadzu Corporation), the end of the tape was held by a chuck such that the tape could be peeled off at an angle of 180° with respect to the planar direction of the separator. A tensile test was conducted at a tensile speed of 50 mm/sec, a temperature of 25°C, and a relative humidity of 40% to measure the tensile strength (gf/cm).

The fractured sample was vapor-deposited with osmium, and observed at a magnification of ×5,000 with an acceleration voltage of 1.0 kV. As schematically illustrated in FIG. 2, in an SEM image of a cross section of the fractured sample, the distance from the substrate-coating layer boundary to the outer surface of the coating layer in the inorganic filler portion of the coating layer was measured as the thickness L1 (μm) of the inorganic filler portion of the coating layer.

Further, the maximum distance L2 (μm) from the substrate-coating layer boundary to the outer surface of the inorganic filler of the coating layer formed in an inclined manner, and the maximum distance L3 (μm) from the substrate-

coating layer boundary to the outline of the protruding particulate polymer were measured, and the gradient (L2/L1) of the coating layer, the coverage ratio (L2 - L1)/(L3 - L1) of the protruding portion, and the protrusion amount (L3 - L1) of the particulate polymer were calculated. The gradient (L2/L1) of the coating layer, the coverage ratio (L2 - L1)/(L3 - L1) of the protruding portion, and the protrusion amount (L3 - L1) of the particulate polymer were measured at 200 spots, and average values thereof were determined.

As a method of measuring L1, L2, and/or L3, it is also possible to employ a method of determining the L1 value while polishing each cross section to be observed under an SEM.

<Contact Ratio Between Protruding Particulate Polymer and Substrate>

The separator was freeze-fractured, and a cross section thereof was observed under an SEM (model S-4800, manufactured by Hitachi, Ltd.). In the thus obtained field of view, the thickness of a thermoplastic polymer-containing layer was measured. Specifically, a sample of the separator was cut out in a size of about 1.5 mm × 2.0 mm and stained with ruthenium. The thus stained sample was placed in a gelatin capsule along with ethanol, frozen in liquid nitrogen, and then fractured using a hammer. The fractured sample was vapor-deposited with osmium, and observed at a magnification of ×5,000 with an acceleration voltage of 1.0 kV. In an SEM image, for 200 particles of the particulate polymer having a fractured surface among particles of the particulate polymer protruding from the thickness of the inorganic filler portion, the number of particles in contact with the substrate was measured and defined as the contact ratio between the protruding particulate polymer and the substrate.

<Number Ratio of Particulate Polymer Protruding from Thickness of Inorganic Filler Portion of Coating Layer>

The separator was freeze-fractured, and a cross section thereof was observed under an SEM (model S-4800, manufactured by Hitachi, Ltd.). In the thus obtained field of view, the thickness of a thermoplastic polymer-containing layer was measured. Specifically, a sample of the separator was cut out in a size of about 1.5 mm × 2.0 mm and stained with ruthenium. The thus stained sample was placed in a gelatin capsule along with ethanol, frozen in liquid nitrogen, and then fractured using a hammer. The fractured sample was vapor-deposited with osmium, and observed at a magnification of ×5,000 with an acceleration voltage of 1.0 kV. In an SEM image, 200 particles of the particulate polymer existing at a fractured surface were observed, and the number of particles of the particulate polymer protruding from the thickness of the inorganic filler portion of the coating layer among the 200 particles was measured and defined as the number ratio of the particulate polymer protruding from the thickness of the inorganic filler portion of the coating layer.

<Methylene Chloride-Soluble Content>

The methylene chloride-soluble content in the substrate and that in the separator was measured by the following method. The substrate or the separator sampled in a size of 100 mm × 100 mm was neutralized and weighed using a precision balance ($W_0$ (g)). Subsequently, 200 ml of methylene chloride was added to a sealed container, and the separator was immersed therein at room temperature for 15 minutes. Thereafter, the separator was taken out, dried at room temperature for 3 hours, neutralized in the same manner as described above, and then weighed using a precision balance ($W_1$ (g)). The methylene chloride-soluble content was calculated using the following equation:

$$\text{Methylene chloride-soluble content (\% by mass)} = \{(W_1 - W_0)/W_0\} \times 100$$

<Total Amount of Metal Cations>

The separator in an amount of 0.60 g was placed in a TEFLON (registered trademark) pressure decomposition container, and 10 ml of sulfuric acid was added thereto, after which the container was tightly sealed and heat-treated in a 200°C air bath for 15 hours. After cooling, the solution in the container was transferred to a resin-made 100-ml volumetric flask and diluted to prepare a sample solution. This sample solution was measured by inductively-coupled plasma atomic emission spectrometry (ICP-OES) (model "ICPE-9000", manufactured by Shimadzu Corporation), and the content of each element was calculated using a calibration curve prepared from a standard solution.

<Heat Shrinkage Rate>

As a sample, the separator was cut into a piece of 100 mm in MD and 100 mm in TD, and left to stand in an oven at 130°C or 150°C. In this process, the sample was sandwiched between two sheets of paper such that the sample was not

directly exposed to hot air. The sample was subsequently taken out of the oven and cooled, after which the length (mm) was measured, and the heat shrinkage rate was calculated using the following equation. The measurement was performed in both MD and TD, and the value obtained for TD was indicated as the heat shrinkage rate.

$$\text{Heat shrinkage rate (\%)} = \{(100 - \text{Length after heating})/100\} \times 100$$

<Basis Weight (g/m$^2$)>

The term "basis weight" used herein refers to the weight (g) of a polyolefin microporous membrane per unit area (1 m$^2$). The polyolefin microporous membrane was sampled at a size of 1 m × 1 m, and the weight thereof was subsequently measured using an electronic scale (AUW120D) manufactured by Shimadzu Corporation. When the polyolefin microporous membrane could not be sampled at a size of 1 m × 1 m, a piece having an appropriate area was cut out from the polyolefin microporous membrane, and the weight of this piece was measured and then converted into the weight (g) per unit area (1 m$^2$).

<Thickness of Substrate or Separator>

A 10 cm × 10 cm square sample was cut out from the substrate or separator, 9 spots (3 spots × 3 spots) were selected in a lattice pattern, and the thickness (μm) was measured using a microthickness meter (Type KBM, manufactured by Toyo Seiki Seisaku-sho, Ltd.) at a room temperature of 23 ± 2°C. An average of the values thus measured at the 9 spots was calculated as the thickness of the substrate or separator.

<Porosity of Substrate>

A 10 cm × 10 cm square sample was cut out from the substrate, and the volume (cm$^3$) and the mass (g) of the sample were measured. Using these values, the porosity was calculated by the following equation, assuming the density of the substrate to be 0.95 (g/cm$^3$):

$$\text{Porosity (\%)} = (1 - \text{Mass/Volume}/0.95) \times 100$$

<Density (g/cm$^3$)>

The density of a sample was measured by a density gradient column method (23°C) in accordance with JIS K7112:1999.

<Air Permeability>

For the substrate and the separator for a power storage device, the degree of air permeation resistance measured in accordance with JIS P8117 using a Gurley air permeability tester G-B2 (model name) manufactured by Toyo Seiki Seisaku-sho, Ltd. was defined as the air permeability. When the coating layer exists on only one side of the substrate, a needle can be pierced from the side having the coating layer.

<Puncture Strength>

Using a handy compression tester KES-G5 (model name) manufactured by Kato Tech Co., Ltd., the substrate was immobilized on a sample holder having an opening of 11.3 mm in diameter. Subsequently, a puncture test was conducted on a center portion of the substrate using a needle with a tip having a radius of curvature of 0.5 mm at a puncture rate of 2 mm/sec in a 25°C atmosphere to measure the maximum puncture load, which was defined as the puncture strength (gf). When the coating layer exists on only one side of the substrate, the needle can be pierced from the side having the coating layer.

<Average Pore Size of Polyolefin Microporous Membrane>

It is known that a fluid inside a capillary follows a Knudsen flow when the mean free path of the fluid is larger than the pore diameter of the capillary, while the fluid follows a Poiseuille flow when the mean free path of the fluid is smaller than the pore diameter of the capillary. It is therefore assumed that the air flow in the measurement of the air permeability of a

thermoplastic polymer-containing layer follows a Knudsen flow, and that the water flow in the measurement of the water permeability of the substrate follows a Poiseuille flow.

The average pore size d (μm) of the polyolefin microporous membrane was calculated using the following equation from the air permeation rate constant $R_{gas}$ ($m^3/(m^2 \cdot sec \cdot Pa)$), the water permeation rate constant $R_{liq}$ ($m^3/(m^2 \cdot sec \cdot Pa)$), the air molecular velocity v (m/sec), the water viscosity η (Pa·sec), the standard pressure Ps (= 101,325Pa), the porosity ε (%), and the membrane thickness L (μm):

$$d = 2\nu \times (R_{liq}/R_{gas}) \times (16\eta/3Ps) \times 10^6$$

$R_{gas}$ was calculated from the air permeability (sec) using the following equation:

$$R_{gas} = 0.0001/(\text{Air permeability} \times (6.424 \times 10^{-4}) \times (0.01276 \times 101{,}325))$$

Further, $R_{liq}$ was calculated from the water permeability ($cm^3/(cm^2 \cdot sec \cdot Pa)$) using the following equation:

$$R_{liq} = \text{Water permeability}/100$$

The water permeability was determined as follows. A thermoplastic polymer-containing layer that had been immersed in ethanol in advance was set in a stainless steel liquid-permeable cell having a diameter of 41 mm, and the ethanol on this layer was washed with water, after which water was allowed to permeate through the layer at a pressure difference of about 50,000 Pa and, from the amount ($cm^3$) of permeated water after a lapse of 120 seconds, the amount of permeated water per unit time, unit pressure, and unit area was calculated and defined as the water permeability.

Further, v was calculated using the following equation from the gas constant R (= 8.314), the absolute temperature T (K), the circular constant π, and the average molecular weight of air M (= 2.896 × $10^{-2}$ kg/mol):

$$\nu = ((8R \times T)/(\pi \times M))^{1/2}$$

<Glass Transition Temperature of Thermoplastic Polymer>

An appropriate amount of an aqueous dispersion containing the thermoplastic polymer (solid content = 38 parts by mass to 42 parts by mass, pH = 9.0) was placed in an aluminum pan and left to stand at normal temperature for 24 hours to obtain a dry film. Approximately 17 mg of this dry film was packed into an aluminum container for measurement, and a DSC curve and a DDSC curve were obtained in a nitrogen atmosphere using a DSC measuring apparatus (model name "DSC 6220", manufactured by Shimadzu Corporation). The measurement conditions were as follows.

Stage 1 heating program: the temperature was raised at a rate of 10°C/min starting at 30°C, and maintained for 5 hours after reaching 150°C.

Stage 2 heating program: the temperature was lowered from 110°C at a rate of 10°C/min, and maintained for 5 minutes after reaching -50°C.

Stage 3 heating program: the temperature was raised from -50°C to 150°C at a rate of 10°C/min, and the DSC and DDSC data were obtained in this stage 3.

The glass transition temperature was determined from the thus obtained DSC curve by the method prescribed in JIS K7121. Specifically, the glass transition temperature (Tg) was defined as the temperature at which the curve of a portion of stepwise change in glass transition intersects with a straight line drawn at an equal distance in the ordinate direction from both a straight line obtained by extending the baseline on the low-temperature side of the DSC curve to the high-temperature side and a straight line obtained by extending the baseline on the high-temperature side of the DSC curve to the low-temperature side.

<Aspect Ratio of Inorganic Filler in Coating Layer>

The surface of the separator for a power storage device, which had been vapor-deposited with osmium, was measured by observation under a scanning electron microscope (SEM) (model "S-4800", manufactured by Hitachi, Ltd.) at a magnification of ×10,000 with an acceleration voltage of 1.0 kV. In an SEM image, the inorganic filler in the coating layer was image-processed to determine the aspect ratio. When the inorganic filler particles were bonded to each other, individual inorganic filler particles having clearly recognizable length and width were selected, and the aspect ratio was

calculated based on the values thereof. Specifically, 10 particles having clearly recognizable length and width were selected, and an average of the values obtained by dividing the long-axis length of each inorganic filler particle by the short-axis length was determined as the aspect ratio. When a single field of view contained less than 10 particles having clearly recognizable length and width, 10 particles were selected from images of multiple fields of view.

<Particle Size Distribution of Inorganic Filler>

The particle size distribution of the inorganic filler was measured using a particle size analyzer (manufactured by Nikkiso Co., Ltd., product name "MICROTRAC UPA150"). A dispersion yet to be applied was used as a sample solution to be measured, and the measurement conditions were set as follows: loading index = 0.20 and measurement time = 30 seconds. The standard deviation SD value of the volume-average particle size in the thus obtained data was divided by the D50 value to calculate the particle size distribution (Cv value) of the inorganic filler.

<Volume-Average Particle Size (D50) of Thermoplastic Polymer in Aqueous Dispersion>

The volume-average particle size (D50) of the thermoplastic polymer in an aqueous dispersion was measured using a particle size analyzer (manufactured by Nikkiso Co., Ltd., product name "MICROTRAC UPA150"). The measurement conditions were set as follows: loading index = 0.20 and measurement time = 30 seconds, and the value of the particle size (D50) at a cumulative volume of 50% in the thus obtained data was recorded as the volume-average particle size (D50).

<Particle Size Distribution of Particulate Polymer in Coating Layer>

A cross section of the separator for a power storage device, which substrate had been vapor-deposited with osmium, was measured by observation under a scanning electron microscope (SEM) (model "S-4800", manufactured by Hitachi, Ltd.) at a magnification of ×5,000 with an acceleration voltage of 1.0 kV. Specifically, the area circle equivalent diameter was measured for 200 arbitrary particles of the particulate polymer and, from the thus measured values, the number-average particle size MN and the volume-average particle size MV were determined to calculate the particle size distribution of the particulate polymer as MV/MN.

<Surface Observation of Coating Layer and Voronoi Tessellation>

For the surface of the separator for a power storage device, which had been vapor-deposited with osmium, element mapping was performed using a scanning electron microscope (SEM) (model "SU-8220", manufactured by Hitachi, Ltd.) and an energy dispersive X-ray (EDX) spectrometer (model "ULTIM EXTREME", manufactured by Oxford Instruments Holdings 2013 Inc.). In this process, an SEM detector selected secondary electrons, and the mapping of carbon atoms on the surface of the coating layer on the separator was performed in 10 fields of view as illustrated in FIG. 7, with the acceleration voltage being 3 kV and the number of mapping integrations being 20 at a magnification of ×500 or ×3,000 depending on the particle size of the particulate polymer.

With regard to the protruding particulate polymer contained in these 10 fields of view, the areas ($s_i$) and the total number (n) of Voronoi polygons, as well as the average value (m), the standard deviation (sd), and the coefficient of variation (cv) were each determined as an average of the 10 fields of view.

Specifically, a carbon atom mapping image was smoothened by Gaussian Blur processing (sigma = 5) using an image processing software (ImageJ), subsequently binarized using the Threshold function (Auto), and further treated by watershed processing.

On the resulting processed image, Voronoi tessellation was performed using the cv2.Subdiv2D.getVoronoiFacetList method of the opencv-python library (version 4.5.4.60) of the Python programming language. In this Voronoi tessellation of the observation field, unclosed regions were not used for the calculation of the areas of Voronoi polygons.

<Rate Characteristics>

a. Production of Positive Electrode

A slurry was prepared by mixing 90.4 parts by mass of nickel-manganese-cobalt composite oxide (NMC) (Ni:Mn:Co = 1:1:1 (element ratio), density: 4.70 g/cm$^3$) as a positive electrode active material with 1.6 parts by mass of graphite powder (KS6) (density: 2.26 g/cm$^3$, number-average particle size: 6.5 μm) and 3.8 parts by mass of acetylene black powder (AB) (density: 1.95 g/cm$^3$, number-average particle size: 48 nm) as conductive aids and 4.2 parts by mass of polyvinylidene fluoride (PVdF) (density: 1.75 g/cm$^3$) as a binder, and dispersing the resulting mixture in N-methylpyrrolidone (NMP). The thus obtained slurry was applied to one side of a 20 μm-thick aluminum foil serving as a positive electrode current collector using a die coater, and subsequently dried at 130°C for 3 minutes, after which the resultant was compression-molded using a roll press to produce a positive electrode. In this process, the amount of the applied positive electrode active material was 109 g/m$^2$.

b. Production of Negative Electrode

A slurry was prepared by dispersing, in purified water, 87.6 parts by mass of graphite powder A (density: 2.23 g/cm$^3$, number-average particle size: 12.7 μm) and 9.7 parts by mass of graphite powder B (density: 2.27 g/cm$^3$, number-average particle size: 6.5 μm) as negative electrode active materials, along with 1.4 parts by mass (in terms of solid content) of carboxymethylcellulose ammonium salt (aqueous solution having a solid concentration of 1.83 parts by mass) and 1.7 parts by mass (in terms of solid content) of diene rubber-based latex (aqueous solution having a solid concentration of 40 parts by mass) as binders.

The thus obtained slurry was applied to one side of a 12 μm-thick copper foil serving as a negative electrode current collector using a die coater, and subsequently dried at 120°C for 3 minutes, after which the resultant was compression-molded using a roll press to produce a negative electrode. In this process, the amount of the applied negative electrode active materials was 5.2 g/m$^2$.

c. Preparation of Nonaqueous Electrolyte Solution

A nonaqueous electrolyte solution was prepared by dissolving $LiPF_6$ as a solute at a concentration of 1.0 mol/L in a mixed solvent of ethylene carbonate: ethyl methyl carbonate = 1:2 (volume ratio).

d. Battery Assembly

A separator or substrate was cut out into a circular piece of 24 mmφ, and the positive electrode and the negative electrode were each cut out into a circular piece of 16 mmφ. The negative electrode, the separator or substrate, and the positive electrode were stacked in this order such that the active material surfaces of the positive electrode and the negative electrode faced each other, and the resultant was placed in a stainless steel container provided with a lid. The container and the lid were insulated, and the container was in contact with the negative electrode copper foil while the lid was in contact with the positive electrode aluminum foil. The above-obtained nonaqueous electrolyte solution in an amount of 0.4 ml was injected into the container, and the container was then tightly sealed, whereby a battery was assembled.

e. Evaluation of Rate Characteristic

The simple battery assembled in d. was initially charged at 25°C for a total of about 6 hours by a method of charging the battery to a battery voltage of 4.2 V with a current value of 3 mA (about 0.5 C) and then starting to reduce the current value from 3 mA while maintaining a battery voltage of 4.2 V. The battery was subsequently discharged to a battery voltage of 3.0 V at a current value of 3 mA. Thereafter, the battery was charged at 25°C for a total of about 3 hours by a method of charging the battery to a battery voltage of 4.2 V with a current value of 6 mA (about 1.0 C) and then starting to reduce the current value from 6 mA while maintaining a battery voltage of 4.2 V. The discharge capacity during the subsequent discharge to a battery voltage of 3.0 V at a current value of 6 mA was defined as the 1C discharge capacity (mAh).

Next, the battery was charged at 25°C for a total of about 3 hours by a method of charging the battery to a battery voltage of 4.2 V with a current value of 6 mA (about 1.0 C) and then starting to reduce the current value from 6 mA while maintaining a battery voltage of 4.2 V. The discharge capacity during the subsequent discharge to a battery voltage of 3.0 V at a current value of 12 mA (about 2.0 C) was defined as the 2C discharge capacity (mAh). The ratio of the 2C discharge capacity with respect to the 1C discharge capacity was calculated, and this value was defined as a rate characteristic.

$$\text{Rate characteristic (\%)} = (\text{2C discharge capacity}/\text{1C discharge capacity}) \times 100$$

Evaluation Criteria of Rate Characteristic (%)

A (good): The rate characteristic was higher than 85%.
B (fair): The rate characteristic was higher than 80% but 85% or lower.

C (poor): The rate characteristic was 80% or lower.

<Adhesive Strength with Electrode (Before Injection of Electrolyte Solution)>

The separator was cut into a rectangular piece of 20 mm in width × 70 mm in length, and stacked with the positive electrode cut into a size of 15 mm × 60 mm to obtain a laminate of the separator and the electrode, and this laminate was pressed under the following conditions.

Temperature: 90°C
Press pressure: 1 MPa
Press time: 5 seconds

The peel strength of the pressed separator and electrode was measured by conducting a 90° peel test at a peel rate of 50 mm/min using force gauges ZP5N and MX2-500N (product names) manufactured by IMADA Co., Ltd. In this case, the average value of the peel strength measured in the peel test conducted for a length of 40 mm under the above-described conditions was adopted as the peel strength.

Evaluation Criteria of Adhesive Strength

A (exceptional): The peel strength was 5 N/m or more.
B (excellent): The peel strength was 2 N/m or more but less than 5 N/m.
C (good): The peel strength was 1 N/m or more but less than 2 N/m.
D (unacceptable): The peel strength was less than 1 N/m.

<Adhesive Strength with Electrode (After Injection of Electrolyte Solution)>

The separator was cut into a rectangular piece of 20 mm in width × 70 mm in length, and stacked with the positive electrode cut into a size of 15 mm × 60 mm to obtain a laminate of the separator and the electrode, and this laminate was inserted into an aluminum laminate film, after which 0.4 ml of an electrolyte solution (a mixture of EC/DEC = 1/2, containing 1 mol/L of $LiPF_6$) was added thereto. The resultant was sealed, left to stand for 12 hours, and then pressed under the following conditions.

Temperature: 90°C
Press pressure: 1 MPa
Press time: 1 minute

The peel strength of the pressed separator and electrode was measured by conducting a 90° peel test at a peel rate of 50 mm/min using force gauges ZP5N and MX2-500N (product names) manufactured by IMADA Co., Ltd. In this case, the average value of the peel strength measured in the peel test conducted for a length of 40 mm under the above-described conditions was adopted as the peel strength.

Evaluation Criteria of Adhesion

A (good): The peel strength was 5 N/m or more.
B (fair): The peel strength was 2 N/m or more but less than 5 N/m.
C (poor): The peel strength was 1 N/m or more but less than 2 N/m.
D (unacceptable): The peel strength was less than 1 N/m.

<Flaking>

A tape of 12 mm in width × 100 mm in length (manufactured by 3M Japan, Ltd.) was attached to the coating layer surface of the separator. The force required for peeling the tape from a sample at a rate of 50 mm/min was measured using a 90° peel strength tester (manufactured by IMADA Co., Ltd., product name: IP-5N). Based on the thus obtained measurement results, the adhesive strength was evaluated according to the following evaluation criteria.

A (good): 59 N/m (6 gf/mm) or more
B (acceptable): 40 N/m or more but less than 59 N/m
C (poor): less than 40 N/m

<Cycle Characteristics>

a. Production of Positive Electrode

A slurry was prepared by mixing 100 parts by mass of nickel-cobalt-aluminum composite oxide (NCA) (Ni:Co:Al = 90:5:5 (element ratio), density: 3.50 g/$cm^3$) as a positive electrode active material with 1.25 parts by mass of acetylene black powder (AB) as a conductive aid and 1.0 parts by mass of polyvinylidene fluoride (PVdF) as a binder, and dispersing the resulting mixture in N-methylpyrrolidone (NMP). The thus obtained slurry was applied to both sides of a 15 μm-thick aluminum foil serving as a positive electrode current collector using a die coater, and subsequently dried at 130°C for 3 minutes, after which the resultant was compression-molded using a roll press to produce a positive electrode. In this process, the amount of the applied positive electrode active material was 456 g/$m^2$.

b. Production of Negative Electrode

A slurry was prepared by dispersing, in purified water, 86.0 parts by mass of graphite powder and 4.5 parts by mass of silicon oxide (SiO) as negative electrode active materials, along with 1 part by mass of carboxymethylcellulose sodium salt and 1.0 parts by mass of styrenebutadiene rubber (SBR) as binders. The thus obtained slurry was applied to both sides of a 7.5 μm-thick copper foil serving as a negative electrode current collector using a die coater, and subsequently dried at 120°C for 3 minutes, after which the resultant was compression-molded using a roll press to produce a negative electrode. In this process, the amount of the applied negative electrode active materials was 266 g/$m^2$.

c. Preparation of Nonaqueous Electrolyte Solution

A nonaqueous electrolyte solution was prepared by dissolving $LiPF_6$ as a solute at a concentration of 1.4 mol/L in a mixed solvent of ethylene carbonate: dimethyl carbonate: ethyl methyl carbonate = 25:70:5 (weight ratio).

d. Battery Assembly

The positive electrode (63 mm in width), the negative electrode (64 mm in width), and a separator (67 mm in width) were disposed in layers and spirally wound to prepare a wound body. This wound body was placed in a cylindrical battery can having an outer diameter of 21 mm and a height of 70 mm, and the nonaqueous electrolyte solution was injected thereto, after which the battery can was tightly sealed, whereby a battery was assembled.

e. Evaluation of Cycle Characteristic

The battery assembled in d. was charged at 25°C to a battery voltage of 4.2 V with a current value of 3 mA (about 0.5 C), and further charged to a current value of 50 mA while maintaining a battery voltage of 4.2 V. The battery was then discharged to a battery voltage of 2.5 V at 0.2 C to determine the initial capacity. Thereafter, the battery was charged to a battery voltage of 4.2 V at 0.3 C, and further charged to a current value of 50 mA while maintaining a battery voltage of 4.2 V, after which the battery was discharged to a battery voltage of 2.5 V at 1 C. Taking these operations as one cycle, the battery was repeatedly charged and discharged. The capacity retention rate after 500 cycles with respect to the initial capacity (the capacity in the first cycle) was used to evaluate the cycle characteristic based on the following criteria.

A (good): The capacity retention rate was 80% or more.
B (fair): The capacity retention rate was 75% or more but less than 80%.
C (unacceptable): The capacity retention rate was less than 75%.

<<Substrate Production Examples>>

<Production of Polyolefin Microporous Membrane B1>

Using a tumbler blender, 45 parts by mass of a high-density polyethylene homopolymer having an Mv of 700,000 and 45 parts by mass of a high-density polyethylene having an Mv of 300,000 were dry-blended with 10 parts by mass of a mixture of a polypropylene homopolymer having an Mv of 400,000 and a polypropylene homopolymer having an Mv of

150,000 (mass ratio = 4:3). To 99 parts by mass of the thus obtained polyolefin mixture, 1 part by mass of tetrakis [methylene-(3',5'-di-*t*-butyl-4'-hydroxyphenyl)propionate]methane was added as an antioxidant, and the resultant was dry-blended again using a tumbler blender to obtain a mixture. The thus obtained mixture was supplied to a twin-screw extruder in a nitrogen atmosphere using a feeder.

Further, a liquid paraffin (kinematic viscosity at 37.78°C: $7.59 \times 10^{-5} m^2/s$) was injected into the cylinder of the extruder using a plunger pump. The operating conditions of the feeder and the pump were adjusted such that the ratio of the liquid paraffin would be 65 parts by mass, i.e. the ratio of a resin composition would be 35 parts by mass, in 100 parts by mass of the whole mixture to be extruded.

Subsequently, the above-described materials were melt-kneaded in the twin-screw extruder with heating at 230°C, and the resulting melt-kneaded product was extruded through a T-die onto a cooling roll controlled to have a surface temperature of 80°C, after which the extruded product was molded (cast) in contact with the cooling roll and thereby cooled and solidified to obtain a 1.5 mm-thick sheet-form molded product. This sheet was stretched at 120°C by a factor of $7 \times 6.4$ using a simultaneous biaxial stretching machine and then immersed in methylene chloride, and the liquid paraffin was removed by extraction, after which the sheet was stretched at 130°C by a factor of 1.8 in the transverse direction using a tenter stretching machine. Thereafter, this stretched sheet was allowed to relax by about 10% in the width direction and then heat-treated, whereby a polyolefin microporous membrane B1 was obtained as a substrate. The thus obtained polyolefin microporous membrane was evaluated in accordance with the above-described methods. The evaluation results are shown in Table below.

<Production of Polyolefin Microporous Membrane B2>

A polyolefin microporous membrane B2 was produced in the same manner as the polyolefin microporous membrane B1, except that the thickness of the sheet-form molded product was changed to 0.5 mm. The results of measuring and evaluating the polyolefin microporous membrane B2 in the same manner are shown in Table 1.

[Table 1]

| Polyolefin microporous membrane | B1 | B2 |
|---|---|---|
| Basis weight ($g/m^2$) | 6.4 | 3.5 |
| Thickness (μm) | 12 | 6 |
| Porosity (%) | 44 | 37 |
| Air permeability (sec/100 $cm^3$) | 150 | 140 |
| Puncture strength (gf) | 500 | 255 |
| Average pore size (nm) | 50 | 50 |
| Methylene chloride-soluble content (% by mass) | 0.7 | 0.5 |

<<Preparation Examples of Particulate Polymer Aqueous Dispersion>>

<Preparation of Particulate Polymer Aqueous Dispersion A1>

To a reactor equipped with a stirrer, a reflux condenser, a dropping tank, and a thermometer, 70.4 parts by mass of ion-exchanged water, 0.5 parts by mass of "AQUALON KH1025" (registered trademark, manufactured by DKS Co. Ltd., 25% aqueous solution, denoted as "KH1025" in Tables; the same applies below), and 0.5 parts by mass of "ADEKA REASOAP SR1025" (registered trademark, manufactured by ADEKA Corporation, 25% aqueous solution, denoted as "SR1025" in Tables; the same applies below) were loaded, and the internal temperature of the reactor was raised to 95°C. Subsequently, while maintaining the internal temperature of the reactor at 95°C, 7.5 parts by mass of ammonium persulfate (2% aqueous solution) (denoted as "APS (aq)" in Tables; the same applies below) was added.

Separately, a mixture of 71.5 parts by mass of methyl methacrylate (MMA), 18.9 parts by mass of n-butyl acrylate (BA), 2 parts by mass of 2-ethylhexyl acrylate (EHA), 0.1 parts by mass of methacrylic acid (MAA), 0.1 parts by mass of acrylic acid (AA), 2 parts by mass of 2-hydroxyethyl methacrylate (HEMA), 5 parts by mass of acrylamide (AM), 0.4 parts by mass of glycidyl methacrylate (GMA), 0.4 parts by mass of trimethylolpropane triacrylate (A-TMPT) (manufactured by Shin-Nakamura Chemical Co., Ltd.), 0.3 parts by mass of $\gamma$-methacryloxypropyltrimethoxysilane (AcSi), 3.0 parts by mass of KH1025, 3.0 parts by mass of SR1025, 0.05 parts by mass of sodium *p*-styrenesulfonate (NaSS), 7.5 parts by mass of ammonium persulfate (2% aqueous solution), and 52 parts by mass of ion-exchanged water was mixed for 5 minutes using a homomixer to prepare an emulsified liquid. The thus obtained emulsified liquid was added dropwise to the reactor from

the dropping tank. This dropwise addition was initiated 5 minutes after the addition of the aqueous ammonium persulfate solution to the reactor, and the whole amount of the emulsified liquid was added dropwise over a period of 150 minutes. During the dropwise addition of the emulsified liquid, the internal temperature of the reactor was maintained at 80°C. In this process, a stirring bar provided in the reactor was constantly stirred using a magnetic stirrer.

After the completion of the dropwise addition of the emulsified liquid, the internal temperature of the reactor was maintained at 80°C for 90 minutes, and the reactor was subsequently cooled to room temperature to obtain an emulsion. The thus obtained emulsion was adjusted to a pH of 9.0 with an aqueous ammonium hydroxide solution (25% aqueous solution), whereby an acrylic copolymer latex having a concentration of 40 parts by mass (particulate polymer aqueous dispersion A1) was obtained. For the thus obtained aqueous dispersion A1, the glass transition temperature (Tg) and the volume-average particle size (D50) of the thermoplastic polymer contained therein were evaluated by the above-described methods. The results thereof are shown in Table below.

<Preparation of Particulate Polymer Aqueous Dispersions A2 to A5>

Aqueous dispersions A2 to A5 were obtained in the same manner as the aqueous dispersion A1, except that the composition of the emulsified liquid was changed as shown in Tables below, and the physical properties were evaluated. The results thereof are shown in Tables below.

<Preparation of Particulate Polymer Aqueous Dispersion A1-1>

An aqueous dispersion A1-1 was synthesized by performing multistage polymerization using a portion of the aqueous dispersion A1 as a seed polymer. Specifically, first, a mixture of 20 parts by mass (in terms of solid content) of the aqueous dispersion A1 and 70.4 parts by mass of ion-exchanged water was loaded to a reactor equipped with a stirrer, a reflux condenser, a dropping tank, and a thermometer, and the internal temperature of the reactor was raised to 80°C. Subsequently, while maintaining the internal temperature of the reactor at 80°C, 7.5 parts by mass of ammonium persulfate (2% aqueous solution) was added. These operations constitute the initial preparation.

Separately, a mixture of 71.5 parts by mass of methyl methacrylate (MMA), 18.9 parts by mass of n-butyl acrylate (BA), 2 parts by mass of 2-ethylhexyl acrylate (EHA), 0.1 parts by mass of methacrylic acid (MAA), 0.1 parts by mass of acrylic acid (AA), 2 parts by mass of 2-hydroxyethyl methacrylate (HEMA), 5 parts by mass of acrylamide (AM), 0.4 parts by mass of glycidyl methacrylate (GMA), 0.4 parts by mass of trimethylolpropane triacrylate (A-TMPT), 0.3 parts by mass of $\gamma$-methacryloxypropyltrimethoxysilane (AcSi), 3 parts by mass of KH1025, 3 parts by mass of SR1025, 0.05 parts by mass of sodium *p*-styrenesulfonate (NaSS), 7.5 parts by mass of ammonium persulfate (2% aqueous solution), and 52 parts by mass of ion-exchanged water was mixed for 5 minutes using a homomixer to prepare an emulsified liquid. The thus obtained emulsified liquid was added dropwise to the reactor from the dropping tank. This dropwise addition was initiated 5 minutes after the addition of the aqueous ammonium persulfate solution to the reactor, and the whole amount of the emulsified liquid was added dropwise over a period of 150 minutes. During the dropwise addition of the emulsified liquid, the internal temperature of the reactor was maintained at 80°C. In this process, a stirring bar provided in the reactor was constantly stirred using a magnetic stirrer.

After the completion of the dropwise addition of the emulsified liquid, the internal temperature of the reactor was maintained at 80°C for 90 minutes with stirring, and the reactor was subsequently cooled to room temperature to obtain an emulsion. The thus obtained emulsion was adjusted to a pH of 9.0 with an aqueous ammonium hydroxide solution (25% aqueous solution), whereby an acrylic copolymer latex having a concentration of 40 parts by mass (aqueous dispersion A1-1) was obtained. The thus obtained aqueous dispersion A1-1 was evaluated by the above-described methods. The results thereof are shown in Table 2.

<Preparation of Particulate Polymer Aqueous Dispersions A2-1, A3-1 to A3-8, A4-1, and A5-1>

Copolymer latexes (aqueous dispersions A2-1, A3-1 to A3-8, A4-1, and A5-1) were obtained in the same manner as the aqueous dispersion A1-1, except that the composition of the seed polymer, monomers, and other raw materials, as well as the number of the multistage polymerization operations and the polymerization conditions were changed as shown in Table 2. The thus obtained aqueous dispersions were each evaluated by the above-described methods. The results thereof are shown in Table 2.

<Particulate Polymer Aqueous Dispersion A6>

PVdF-HFP (product name LBG, manufactured by Arkema K.K.), which had a primary particle size of 200 nm and in which 2,030-nm secondary particles were formed by aggregation of primary particles, was used as an aqueous dispersion A6.

[Table 2-1]

| | Type | Name of raw material | Ratio of active ingredient | Unit | Aqueous dispersion | | | |
|---|---|---|---|---|---|---|---|---|
| | | | | | A1 | A1-1 | A2 | A2-1 |
| Initial preparation | Seed polymer type | | --- | --- | - | A1 | - | A2 |
| | Seed polymer diameter | | --- | (nm) | - | 132 | - | 122 |
| | Seed polymer amount | | 100% by mass | (parts by mass) | - | 20 | - | 20 |
| | Emulsifier | KH1025 | 25% by mass | (parts by mass) | 0.5 | - | 0.5 | - |
| | | SR1025 | 25% by mass | (parts by mass) | 0.5 | - | 0.5 | - |
| | Ion-exchanged water | | --- | (parts by mass) | 70.4 | 70.4 | 70.4 | 70.4 |
| | Initiator | APS (aq) | 2% by mass | (parts by mass) | 7.5 | 7.5 | 7.5 | 7.5 |
| | Acid monomer | MAA | 100% by mass | (parts by mass) | 0.1 | 0.1 | 1.0 | 1.0 |
| | | AA | 100% by mass | (parts by mass) | 0.1 | 0.1 | 1.0 | 1.0 |
| | (Meth)acrylate | MMA | 100% by mass | (parts by mass) | 71.5 | 71.5 | 51.0 | 51.0 |
| | | BA | 100% by mass | (parts by mass) | 18.9 | 18.9 | 37.0 | 37.0 |
| | | BMA | 100% by mass | (parts by mass) | 0 | 0 | 0 | 0 |
| | | EHA | 100% by mass | (parts by mass) | 2 | 2 | 0 | 0 |
| | | CHMA | 100% by mass | (parts by mass) | 0 | 0 | 0 | 0 |
| | Aromatic vinyl monomer | St | 100% by mass | (parts by mass) | 0 | 0 | 0 | 0 |
| | Cyano group-containing monomer | AN | 100% by mass | (parts by mass) | 0 | 0 | 10 | 10 |

(continued)

| | Type | Name of raw material | Ratio of active ingredient | Unit | Aqueous dispersion | | | |
|---|---|---|---|---|---|---|---|---|
| | | | | | A1 | A1-1 | A2 | A2-1 |
| Emulsified liquid | Functional group-containing monomer | HEMA | 100% by mass | (parts by mass) | 2 | 2 | 0 | 0 |
| | | AM | 100% by mass | (parts by mass) | 5 | 5 | 0 | 0 |
| | Cross-linkable monomer | GMA | 100% by mass | (parts by mass) | 0.4 | 0.4 | 0 | 0 |
| | | A-TMPT | 100% by mass | (parts by mass) | 0.4 | 0.4 | 1.0 | 1.0 |
| | | AcSi | 100% by mass | (parts by mass) | 0.3 | 0.3 | 0.5 | 0.5 |
| | Emulsifier | KH1025 | 25% by mass | (parts by mass) | 3.0 | 3.0 | 2.0 | 2.0 |
| | | SR1025 | 25% by mass | (parts by mass) | 3.0 | 3.0 | 0 | 0 |
| | | NaSS | 100% by mass | (parts by mass) | 0.05 | 0.05 | 0 | 0 |
| | Initiator | APS (aq) | 2% by mass | (parts by mass) | 7.5 | 7.5 | 7.5 | 7.5 |
| | Ion-exchanged water | | --- | (parts by mass) | 52 | 52 | 52 | 52 |
| Physical properties | Glass transition temperature (Tg) | | --- | (°C) | 60 | 60 | 24.8 | 24.8 |
| | Volume-average particle size (D50) | | --- | (nm) | 132 | 3460 | 122 | 1350 |
| Form of polymer after coating layer formation | | | --- | --- | particles | particles | coating film | coating film |
| Particle size of polymer after coating layer formation | | | --- | (nm) | - | 3470 | - | - |
| Particle size distribution of polymer after coating layer formation | | | --- | --- | 1.10 | 1.08 | 1.13 | 1.06 |

[Table 2-2]

| | Type | Name or raw material | Ratio of active ingredient | Unit | Aqueous dispersion | | | | | | | | | | | | | |
|---|---|---|---|---|---|---|---|---|---|---|---|---|---|---|---|---|---|---|
| | | | | | A3 | A3-1 | A3-2 | A3-3 | A3-4 | A3-5 | A3-6 | A3-7 | A3-8 | A4 | A4-1 | A5 | A5-1 | A6 |
| Initial preparation | Seed polymer tvpe | | --- | --- | - | A3 | A3 | A3 | A3 | A3 | A3 | A3 | A3 | - | A4 | - | A3 | |
| | Seed polymer diameter | | --- | (nm) | - | 131 | 131 | 131 | 131 | 131 | 131 | 131 | 131 | - | 127 | - | 131 | |
| | Seed polymer amount | | 100% by mass | (parts by mass) | - | 20 | 20 | 20 | 20 | 20 | 20 | 20 | 20 | - | 20 | - | 20 | |
| | Fmulsifier | KH1025 | 25% by mass | (parts by mass) | 0.5 | - | - | - | - | - | - | - | - | 0.5 | - | 0.5 | - | |
| | | SR1025 | 25% by mass | (parts by mass) | 0.5 | - | - | - | - | - | - | - | - | 0.5 | - | 0.5 | - | |
| | Ion-exchanged water | | - | (parts by mass) | 70.4 | 70.4 | 70.4 | 70.4 | 70.4 | 70.4 | 70.4 | 70.4 | 70.4 | 70.4 | 70.4 | 70.4 | 70.4 | |
| | Initiator | APS (aq) | 2% by mass | (parts by mass) | 7.5 | 7.5 | 7.5 | 7.5 | 7.5 | 7.5 | 7.5 | 7.5 | 7.5 | 7.5 | 7.5 | 7.5 | 7.5 | |
| | Acid monomer | MAA | 100% by mass | (parts by mass) | 1.0 | 1.0 | 1.0 | 1.0 | 1.0 | 1.0 | 1.0 | 1.0 | 1.0 | 1.0 | 1.0 | 1.0 | 1.0 | |
| | | AA | 100% by mass | (parts by mass) | 1.0 | 1.0 | 1.0 | 1.0 | 1.0 | 1.0 | 1.0 | 1.0 | 1.0 | 1.0 | 1.0 | 1.0 | 1.0 | |

(continued)

| | Type | Name or raw material | Ratio of active ingredient | Unit | Aqueous dispersion | | | | | | | | | | | | | |
|---|---|---|---|---|---|---|---|---|---|---|---|---|---|---|---|---|---|---|
| | | | | | A3 | A3-1 | A3-2 | A3-3 | A3-4 | A3-5 | A3-6 | A3-7 | A3-8 | A4 | A4-1 | A5 | A5-1 | A6 |
| Emulsified liquid | (Meth)ac-rylate | MMA | 100% by mass | (parts by mass) | 20.0 | 20.0 | 20.0 | 20.0 | 20.0 | 20.0 | 20.0 | 20.0 | 20.0 | 87.0 | 87.0 | 20.0 | 20.0 | PVdF-HFP |
| | | BA | 100% by mass | (parts by mass) | 0 | 0 | 0 | 0 | 0 | 0 | 0 | 0 | 0 | 0 | 0 | 0 | 0 | |
| | | BMA | 100% by mass | (parts by mass) | 0 | 0 | 0 | 0 | 0 | 0 | 0 | 0 | 0 | 0 | 0 | 0 | 0 | |
| | | EHA | 100% by mass | (parts by mass) | 0 | 0 | 0 | 0 | 0 | 0 | 0 | 0 | 0 | 0 | 0 | 0 | 0 | |
| | | CHMA | 100% by mass | (parts by mass) | 0 | 0 | 0 | 0 | 0 | 0 | 0 | 0 | 0 | 0 | 0 | 0 | 0 | |
| | Aromatic vinyl monomer | St | 100% by mass | (parts by mass) | 78 | 78 | 78 | 78 | 78 | 78 | 78 | 78 | 78 | 0 | 0 | 78 | 78 | |
| | Cyano group-containing monomer | AN | 100% by mass | (parts by mass) | 0 | 0 | 0 | 0 | 0 | 0 | 0 | 0 | 0 | 0 | 0 | 0 | 0 | |
| | Functional group-containing monomer | HEMA | 100% by mass | (parts by mass) | 0 | 0 | 0 | 0 | 0 | 0 | 0 | 0 | 0 | 0 | 0 | 0 | 0 | |
| | | AM | 100% by mass | (parts by mass) | 0 | 0 | 0 | 0 | 0 | 0 | 0 | 0 | 0 | 5 | 5 | 0 | 0 | |

(continued)

| | Type | Name or raw material | Ratio of active ingredient | Unit | Aqueous dispersion | | | | | | | | | | | | | |
|---|---|---|---|---|---|---|---|---|---|---|---|---|---|---|---|---|---|---|
| | | | | | A3 | A3-1 | A3-2 | A3-3 | A3-4 | A3-5 | A3-6 | A3-7 | A3-8 | A4 | A4-1 | A5 | A5-1 | A6 |
| | Cross-linkable monomer | GMA | 100% by mass | (parts by mass) | 0 | 0 | 0 | 0 | 0 | 0 | 0 | 0 | 0 | 0 | 0 | 0 | 0 | |
| | | A-TMPT | 100% by mass | (parts by mass) | 1.0 | 1.0 | 1.0 | 1.0 | 1.0 | 1.0 | 1.0 | 1.0 | 1.0 | 1.0 | 1.0 | 1.0 | 1.0 | |
| | | AcSi | 100% by mass | (parts by mass) | 0.5 | 0.5 | 0.5 | 0.5 | 0.5 | 0.5 | 0.5 | 0.5 | 0.5 | 0.5 | 0.5 | 0.5 | 0.5 | |
| | Emulsifier | KH1025 | 25% by mass | (parts by mass) | 2.0 | 2.0 | 2.0 | 2.0 | 2.0 | 2.0 | 2.0 | 2.0 | 2.0 | 2.0 | 2.0 | 2.0 | 2.0 | |
| | | SR1025 | 25% by mass | (parts by mass) | 0 | 0 | 0 | 0 | 0 | 0 | 0 | 0 | 0 | 0 | 0 | 0 | 0 | |
| | | NaSS | 100% by mass | (parts by mass) | 0 | 0 | 0 | 0 | 0 | 0 | 0 | 0 | 0 | 0 | 0 | 0 | 0 | |
| | Initiator | APS (aq) | 2% by mass | (parts by mass) | 7.5 | 7.5 | 7.5 | 7.5 | 7.5 | 7.5 | 7.5 | 7.5 | 7.5 | 7.5 | 7.5 | 7.5 | 7.5 | |
| | Ion-exchanged water | | --- | (parts by mass) | 52 | 52 | 52 | 52 | 52 | 52 | 52 | 52 | 52 | 52 | 52 | 52 | 52 | |
| Physical properties | Glass transition temperature (Tg) | | --- | (°C) | 95 | 95 | 95 | 95 | 95 | 95 | 95 | 95 | 95 | 105 | 105 | 95 | 95 | |
| | Volume-average particle size (D50) | | --- | (nm) | 131 | 1470 | 2010 | 2490 | 2970 | 3500 | 4980 | 7460 | 9960 | 127 | 3460 | 131 | 2020 | |
| Form of polymer after coating layer formation | | | --- | --- | particles | particles | particles | particles | particles | particles | particles | particles | particles | particles | particles | particles | particles | particles |
| Particle size of polymer after coating layer formation | | | --- | (nm) | - | 1480 | 2020 | 2500 | 2980 | 3510 | 4990 | 7480 | 9980 | - | 3470 | - | 2020 | 200/2030 |

(continued)

| | Type | Name or raw material | Ratio of active ingredient | Unit | Aqueous dispersion | | | | | | | | | | | | | |
|---|---|---|---|---|---|---|---|---|---|---|---|---|---|---|---|---|---|---|
| | | | | | A3 | A3-1 | A3-2 | A3-3 | A3-4 | A3-5 | A3-6 | A3-7 | A3-8 | A4 | A4-1 | A5 | A5-1 | A6 |
| Particle size distribution of polymer after coating layer formation | | | --- | --- | 1.12 | 1.08 | 1.02 | 1.04 | 1.08 | 1.03 | 1.04 | 1.14 | 1.31 | 1.11 | 1.06 | 1.12 | 1.08 | - |

<Description of Abbreviations>

• Emulsifiers

KH1025: "AQUALON KH1025" (registered trademark), manufactured by DKS Co., Ltd., 25% aqueous solution
SR1025: "ADEKA REASOAP SR1025" (registered trademark), manufactured by ADEKA Corporation, 25% aqueous solution
NaSS: sodium*p*-styrenesulfonate

• Initiator

APS (aq): ammonium persulfate (2% aqueous solution)

• Monomers

MAA: methacrylic acid
AA: acrylic acid
MMA: methyl methacrylate
BA: n-butyl acrylate
BMA: n-butyl methacrylate
EHA: 2-ethylhexyl acrylate
CHMA: cyclohexyl methacrylate
St: styrene
AN: acrylonitrile
HEMA: 2-hydroxyethyl methacrylate
AM: acrylamide
GMA: glycidyl methacrylate
A-TMPT: trimethylolpropane triacrylate
AcSi: $\gamma$-methacryloxypropyltrimethoxysilane

<<Separator Production Examples>>

<Example 1>

A pre-coating dispersion was obtained by mixing 0.3 parts by mass of an aqueous ammonium polycarboxylate solution (SN DISPERSANT 5468, manufactured by San Nopco Limited) and 100 parts by mass of aluminum hydroxide oxide (boehmite, average particle size: 450 nm) as an inorganic filler with respect to 100 parts by mass of water, and processing the resulting mixture using a bead mill. The thus obtained pre-coating dispersion was mixed with carboxymethylcellulose (CMC) as a water-soluble polymer component in an amount of 0.2 parts by mass with respect to 100 parts by mass of the inorganic filler, after which the resultant was further mixed with 4 parts by mass (in terms of solid content) of an acryl latex suspension (solid concentration: 40%, volume-average particle size: 150 nm, Tg: -10°C) as a resin binder and 10 parts by mass of the aqueous dispersion A3-5 and then uniformly dispersed, whereby a thermoplastic polymer-containing coating liquid (solid content: 40 parts by mass) was prepared.
Both sides of the polyolefin microporous membrane B1 were surface-treated by corona discharge treatment. Subsequently, using a gravure coater, the coating liquid was applied to one side of the polyolefin microporous membrane B1. It is noted here that the coating liquid in a supply tank was stirred using a Bernoulli flow stirrer BEAG (manufactured by MEDECH Co., Ltd., rotation speed: 650 rpm), and the shear rate provided by the gravure coater was 80,000 $sec^{-1}$. In this process, the coating area ratio of the resulting coating layer with respect to the polyolefin microporous membrane was 100%. Thereafter, the applied coating liquid was dried at 60°C to remove water. In this manner, a separator having a coating layer formed on one side of the polyolefin microporous membrane B1 was obtained.

<Examples 2 to 15 and Comparative Examples 1 to 5>

Separators of Examples and Comparative Examples were obtained in the same manner as in Example 1, except

that the polyolefin microporous membrane, the composition of the coating liquid, the coating conditions, and the like were changed as shown in Tables below. In Comparative Example 1, an inclined paddle stirrer was used for stirring the coating liquid.

In the separators of Examples 2 to 15 and Comparative Examples 1, 2 and 5, the particulate polymer was dispersed in the form of primary particles, while in the separator of Comparative Example 4, the particulate polymer was dispersed in the form of secondary particles.

[Table 3-1]

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Substrate | | B1 | B1 | B1 | B1 | B1 | B1 | B1 | B1 | B1 | B1 |
| Methylene chloride-soluble content of substrate (% by mass) | | 0.7 | 0.7 | 0.7 | 0.7 | 0.7 | 0.7 | 0.7 | 0.7 | 0.7 | 0.7 |
| Mass ratio of each component | Inorganic filler (parts by mass) | 100 | 100 | 100 | 100 | 100 | 100 | 100 | 100 | 100 | 100 |
| | Particulate polymer (parts by mass) | 10 | 10 | 10 | 10 | 10 | 5 | 15 | 30 | 10 | 10 |
| | Resin binder (parts by mass) | 4 | 4 | 4 | 4 | 4 | 4 | 4 | 4 | 4 | 4 |
| | Water-soluble polymer component (parts by mass) | 0.2 | 0.2 | 0.2 | 0.2 | 0.2 | 0.2 | 0.2 | 0.2 | 0.2 | 0.2 |
| Inorganic component | Type | boehmite | boehmite | boehmite | boehmite | boehmite | boehmite | boehmite | boehmite | boehmite | boehmite |
| | Average particle size (nm) | 450 | 450 | 450 | 450 | 450 | 450 | 450 | 450 | 450 | 450 |
| | Shape | block | block | block | block | block | block | block | block | block | block |
| | Aspect ratio | 1.8 | 1.8 | 1.8 | 1.8 | 1.8 | 1.8 | 1.8 | 1.8 | 1.8 | 1.8 |
| | Particle size distribution CV | 0.45 | 0.45 | 0.45 | 0.45 | 0.45 | 0.45 | 0.45 | 0.45 | 0.45 | 0.45 |
| Aqueous dispersion component | Type | A3-5 | A3-6 | A3-4 | A3-8 | A3-3 | A3-5 | A3-5 | A3-5 | A4-1 | A1-1 |
| | Average particle size (μm) | 3.5 | 5.0 | 3.0 | 10.0 | 2.5 | 3.5 | 3.5 | 3.5 | 3.5 | 3.5 |
| | Particle size distribution: MV/MN | 1.03 | 1.04 | 1.08 | 1.31 | 1.04 | 1.03 | 1.03 | 1.03 | 1.06 | 1.08 |
| Slurry B-type viscosity (mPa·s) | | 30 | 30 | 30 | 30 | 30 | 30 | 30 | 30 | 30 | 30 |
| Coefficient of variation of Voronoi regions | | 0.47 | 0.52 | 0.43 | 0.59 | 0.40 | 0.53 | 0.41 | 0.35 | 0.47 | 0.47 |
| Thickness of inorganic filler portion of coating layer, L1 (μm) | | 2.5 | 2.5 | 2.5 | 2.5 | 2.5 | 2.5 | 2.5 | 2.5 | 2.5 | 2.5 |

(continued)

| | Example 1 | Example 2 | Example 3 | Example 4 | Example 5 | Example 6 | Example 7 | Example 8 | Example 9 | Example 10 |
|---|---|---|---|---|---|---|---|---|---|---|
| Coating layer thickness: L2 (μm) | 3.1 | 3.9 | 2.7 | 5.7 | 2.6 | 3.2 | 3.1 | 3.0 | 3.0 | 3.0 |
| Maximum distance to outline of particulate polymer: L3 (μm) | 3.5 | 5.0 | 3.0 | 10.0 | 2.7 | 3.5 | 3.5 | 3.5 | 3.5 | 3.5 |
| Ratio of protrusion amount (L3 - L1)/L1 | 0.4 | 1.0 | 0.2 | 3.0 | 0.1 | 0.4 | 0.4 | 0.4 | 0.4 | 0.4 |
| Gradient of coating layer L2/L1 | 1.24 | 1.56 | 1.08 | 2.28 | 1.02 | 1.28 | 1.24 | 1.20 | 1.20 | 1.20 |
| Coverage ratio of protruding part (L2 - L1)/(L3 - L1) | 0.59 | 0.56 | 0.42 | 0.43 | 0.25 | 0.69 | 0.59 | 0.50 | 0.52 | 0.52 |
| Contact ratio between particulate polymer and substrate (%) | 66 | 72 | 61 | 87 | 33 | 71 | 68 | 73 | 68 | 63 |
| 180° peel strength (gf/cm) | 250 | 250 | 250 | 250 | 250 | 250 | 250 | 250 | 250 | 250 |
| Number ratio of protruding particulate polymer (%) | 73 | 88 | 56 | 98 | 51 | 77 | 72 | 81 | 70 | 71 |
| Metal cations (ppm) | 40 | 40 | 40 | 40 | 40 | 40 | 40 | 40 | 40 | 40 |
| TD shrinkage rate at 130°C (%) | <1.0 | <1.0 | <1.0 | <1.0 | <1.0 | <1.0 | <1.0 | <1.0 | <1.0 | <1.0 |
| TD shrinkage rate at 150°C (%) | <1.0 | <1.0 | <1.0 | <1.0 | <1.0 | <1.0 | <1.0 | 15.3 | <1.0 | <1.0 |
| Adhesive strength with electrode: before injection of electrolyte solution | A | A | B | A | C | B | A | A | B | A |
| Adhesive strength with electrode: after injection of electrolyte solution | A | A | A | B | B | B | A | A | A | B |
| Rate characteristic | A | A | A | A | A | A | B | B | A | A |
| Cycle characteristic | A | A | A | A | A | A | B | B | A | A |
| Flaking | A | A | A | B | A | A | A | B | A | A |

[Table 3-2]

| | | Example 11 | Example 12 | Example 13 | Example 14 | Example 15 | Comparative Example 1 | Comparative Example 2 | Comparative Example 3 | Comparative Example 4 | Comparative Example 5 |
|---|---|---|---|---|---|---|---|---|---|---|---|
| Substrate | | B2 | B2 | B2 | B2 | B2 | B1 | B1 | B1 | B1 | B1 |
| Methylene chloride-soluble content of substrate (% by mass) | | 0.5 | 0.5 | 0.5 | 0.5 | 0.5 | 0.7 | 0.7 | 0.7 | 0.7 | 0.7 |
| Mass ratio of each component | Inorganic filler (parts by mass) | 100 | 100 | 100 | 100 | 100 | 100 | 100 | 100 | 100 | 100 |
| | Particulate polymer (parts by mass) | 10 | 10 | 20 | 10 | 10 | 10 | 10 | 0 | 10 | 10 |
| | Resin binder (parts by mass) | 4 | 4 | 4 | 4 | 4 | 4 | 4 | 4 | 4 | 4 |
| | Water-soluble polymer component (parts by mass) | 0.2 | 0.2 | 0.2 | 0.2 | 0.2 | 0.5 | 0.5 | - | 2 | 1.5 |
| Inorganic component | Type | boehmite | boehmite | boehmite | alumina | barium sulfate | boehmite | boehmite | boehmite | boehmite | alumina |
| | Average particle size (nm) | 200 | 200 | 200 | 200 | 200 | 450 | 450 | 450 | 200 | 500 |
| | Shape | block | block | block | spherical | particulate | block | block | block | plate | spherical |
| | Aspect ratio | 1.7 | 1.7 | 1.7 | 1.3 | 1.4 | 1.8 | 1.8 | 1.8 | 2.5 | 1.3 |
| | Particle size distribution CV | 0.4 | 0.4 | 0.4 | 0.55 | 0.5 | 0.45 | 0.45 | 0.45 | 0.5 | 0.89 |

(continued)

| | | Example 11 | Example 12 | Example 13 | Example 14 | Example 15 | Comparative Example 1 | Comparative Example 2 | Comparative Example 3 | Comparative Example 4 | Comparative Example 5 |
|---|---|---|---|---|---|---|---|---|---|---|---|
| Aqueous dispersion component | Type | A2-1 | A3-1 | A3-1 | A3-1 | A3-1 | A3-6 | A3-2 | - | A6 | A3-6 |
| | Average particle size (μm) | 1.4 | 1.5 | 1.5 | 1.5 | 1.5 | 5.0 | 2.0 | - | 0.2 | 5.0 |
| | Particle size distribution: MV/MN | 1.06 | 1.08 | 1.08 | 1.08 | 1.08 | 1.04 | 1.02 | - | - | 1.04 |
| Slurry B-type viscosity (mPa·s) | | 30 | 50 | 50 | 40 | 30 | 60 | 60 | 60 | 300 | 220 |
| Coefficient of variation of Voronoi regions | | 0.40 | 0.39 | 0.39 | 0.35 | 0.30 | 0.74 | 0.89 | - | 0.84 | 0.62 |
| Thickness of inorganic filler portion of coating layer, L1 (μm) | | 1.0 | 1.0 | 1.0 | 1.0 | 1.0 | 2.5 | 2.5 | 2.5 | 1.5 | 2.0 |
| Coating layer thickness: L2 (μm) | | 1.2 | 1.3 | 1.3 | 1.2 | 1.2 | 4.0 | - | - | 1.5 | 2.1 |
| Maximum distance to outline of particulate polymer: L3 (μm) | | 1.4 | 1.5 | 1.5 | 1.5 | 1.5 | 5.0 | - | - | 2.0 | 6.1 |
| Ratio of protrusion amount (L3 - L1)/L1 | | 0.4 | 0.5 | 0.5 | 0.5 | 0.5 | 1.0 | - | - | 0.3 | 2.1 |
| Gradient of coating laver L2/L1 | | 1.20 | 1.25 | 1.25 | 1.23 | 1.20 | 1.60 | - | - | 1.00 | 1.05 |
| Coverage ratio of protruding part (L2 - L1)/(L3 - L1) | | 0.56 | 0.52 | 0.52 | 0.48 | 0.42 | 0.60 | - | - | 0.00 | 0.02 |
| Contact ratio between particulate polymer and substrate (%) | | 83 | 92 | 92 | 88 | 83 | 65 | 10 | - | <0.01 | 5 |
| 180° peel strength (gf/cm) | | 270 | 270 | 270 | 320 | 310 | 280 | 280 | 280 | 130 | 150 |

(continued)

| | Example 11 | Example 12 | Example 13 | Example 14 | Example 15 | Comparative Example 1 | Comparative Example 2 | Comparative Example 3 | Comparative Example 4 | Comparative Example 5 |
|---|---|---|---|---|---|---|---|---|---|---|
| Number ratio of protruding particulate polymer (%) | 98 | 96 | 95 | 93 | 95 | 82 | 18 | - | 4 | 81 |
| Metal cations (ppm) | 40 | 40 | 40 | 40 | 40 | 40 | 40 | 40 | 40 | 40 |
| TD shrinkage rate at 130°C (%) | <1.0 | <1.0 | <1.0 | <1.0 | <1.0 | <1.0 | <1.0 | <1.0 | 50.0< | 50.0< |
| TD shrinkage rate at 150°C (%) | 2.5 | <1.0 | 4.2 | <1.0 | <1.0 | 7.6 | 8.1 | <1.0 | 50.0< | 50.0< |
| Adhesive strength with electrode: before injection of electrolyte solution | A | B | A | B | B | B | D | D | C | C |
| Adhesive strength with electrode: after injection of electrolyte solution | B | B | A | B | B | B | D | D | C | C |
| Rate characteristic | B | A | A | A | A | B | C | A | C | B |
| Cycle characteristic | B | A | A | A | A | C | C | A | C | C |
| Flaking | A | A | A | A | A | B | A | A | C | C |

INDUSTRIAL APPLICABILITY

The separator for a power storage device according to the present disclosure can be preferably utilized in various power storage devices, preferably lithium ion secondary batteries.

REFERENCE SIGNS LIST

1: inorganic filler
2: particulate polymer
10: substrate (polyolefin microporous membrane)
20: coating layer

## Claims

**1.** A separator for a power storage device, comprising:

a substrate that is a polyolefin microporous membrane containing a polyolefin as a main component; and
a coating layer that is arranged on at least one surface of the substrate,
wherein
the coating layer contains an inorganic filler and a particulate polymer of a thermoplastic polymer,
the particulate polymer includes a particulate polymer protruding from the surface of the inorganic filler portion, and
in the surface observation of the coating layer, a coefficient of variation (cv) of the areas ($s_i$) of Voronoi polygons obtained by Voronoi tessellation using the protruding particulate polymer as a generator is 0.10 to 0.60.

**2.** The separator for a power storage device according to claim 1, wherein

the coating layer is formed in an inclined manner such that it increases in thickness toward the protruding particulate polymer, and
when the thickness of the inorganic filler portion is defined as L1 and a maximum distance from a substrate-coating layer boundary to the outer surface of the inorganic filler formed in the inclined manner is defined as L2, an average value of the gradient L2/L1 of the coating layer is 1.2 or more.

**3.** The separator for a power storage device according to claim 1, wherein

the coating layer is formed in an inclined manner such that it increases in thickness toward the protruding particulate polymer, and
when the thickness of the inorganic filler portion is defined as L1, a maximum distance from a substrate-coating layer boundary to the outer surface of the inorganic filler formed in the inclined manner is defined as L2, and a maximum distance from the substrate-coating layer boundary to the outline of the protruding particulate polymer is defined as L3, an average value of the coverage ratio (L2 - L1)/(L3 - L1) of the protruding particulate polymer is 0.4 or more.

**4.** The separator for a power storage device according to claim 1, wherein 20% or more of the protruding particulate polymer is in contact with the surface of the substrate.

**5.** The separator for a power storage device according to claim 1, wherein the coating layer has a 180° peel strength from the substrate of 200 gf/cm or more.

**6.** The separator for a power storage device according to claim 1, wherein the number of particles of the protruding particulate polymer is 50% or more of a total number of particles of the particulate polymer contained in the coating layer.

**7.** The separator for a power storage device according to claim 1, wherein the protruding particulate polymer is in the form of primary particles.

**8.** The separator for a power storage device according to claim 7, wherein the primary particles have an average particle size of 1 μm to 10 μm.

**9.** The separator for a power storage device according to claim 1, having a TD heat shrinkage rate at 130°C in 1 hour of 5% or less.

**10.** The separator for a power storage device according to claim 1, having a TD heat shrinkage rate at 150°C in 1 hour of 5% or less.

**11.** A power storage device, comprising the separator for a power storage device according to any one of claims 1 to 10.

Fig. 1

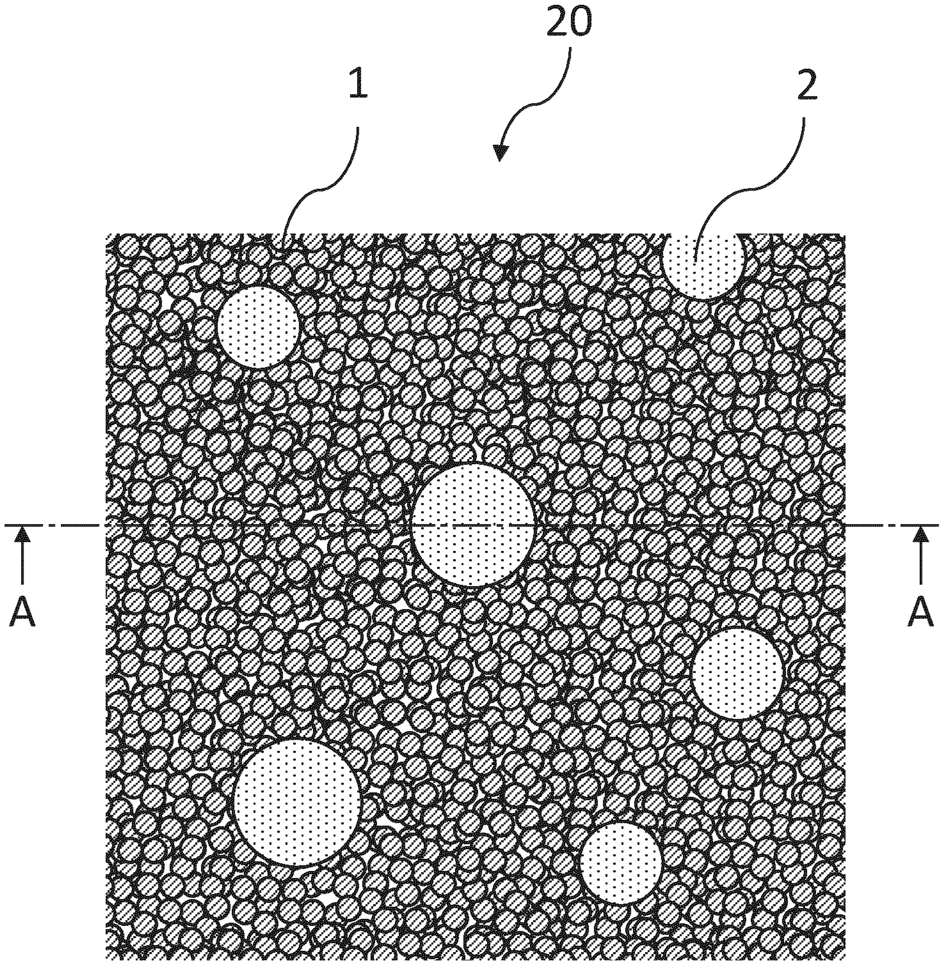

Fig. 2

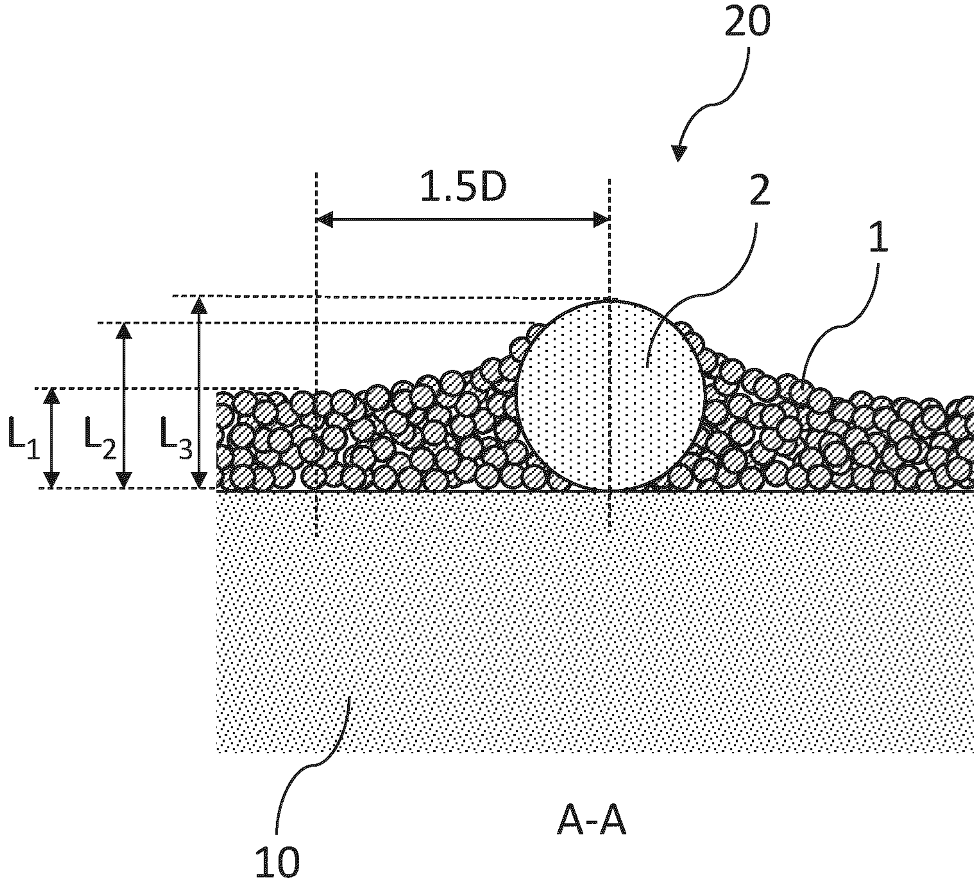


A-A

Fig. 3

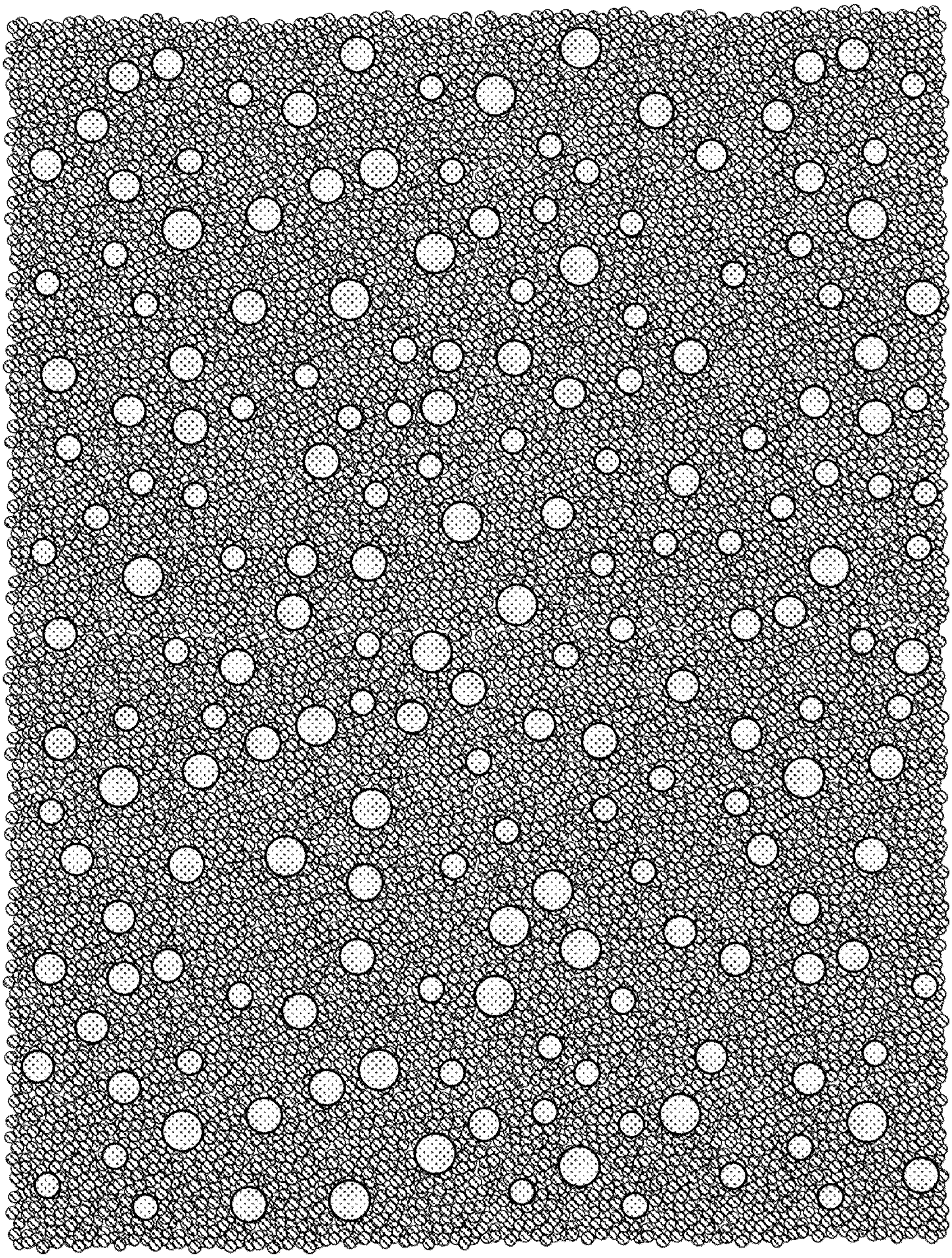

Fig. 4

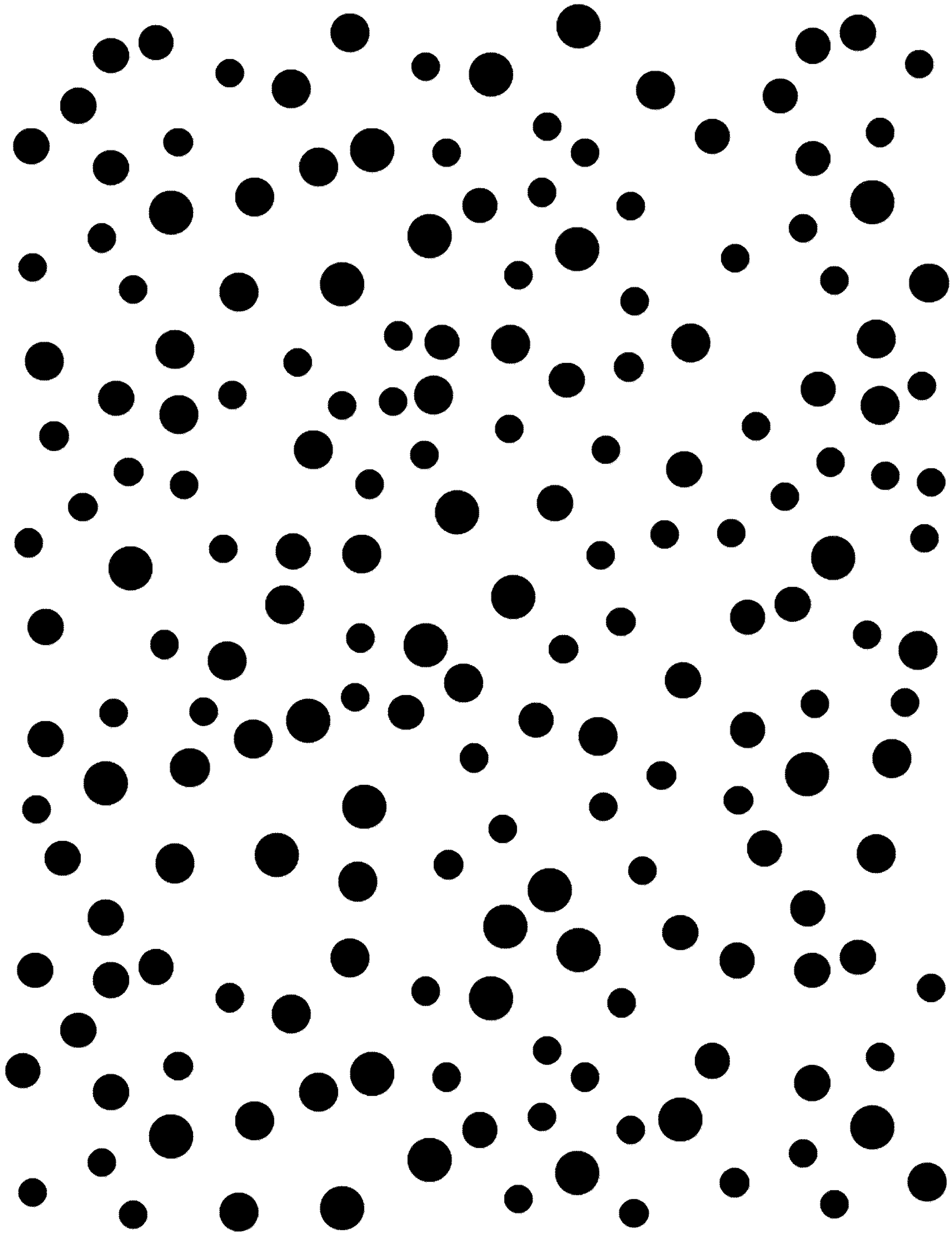

Fig. 5

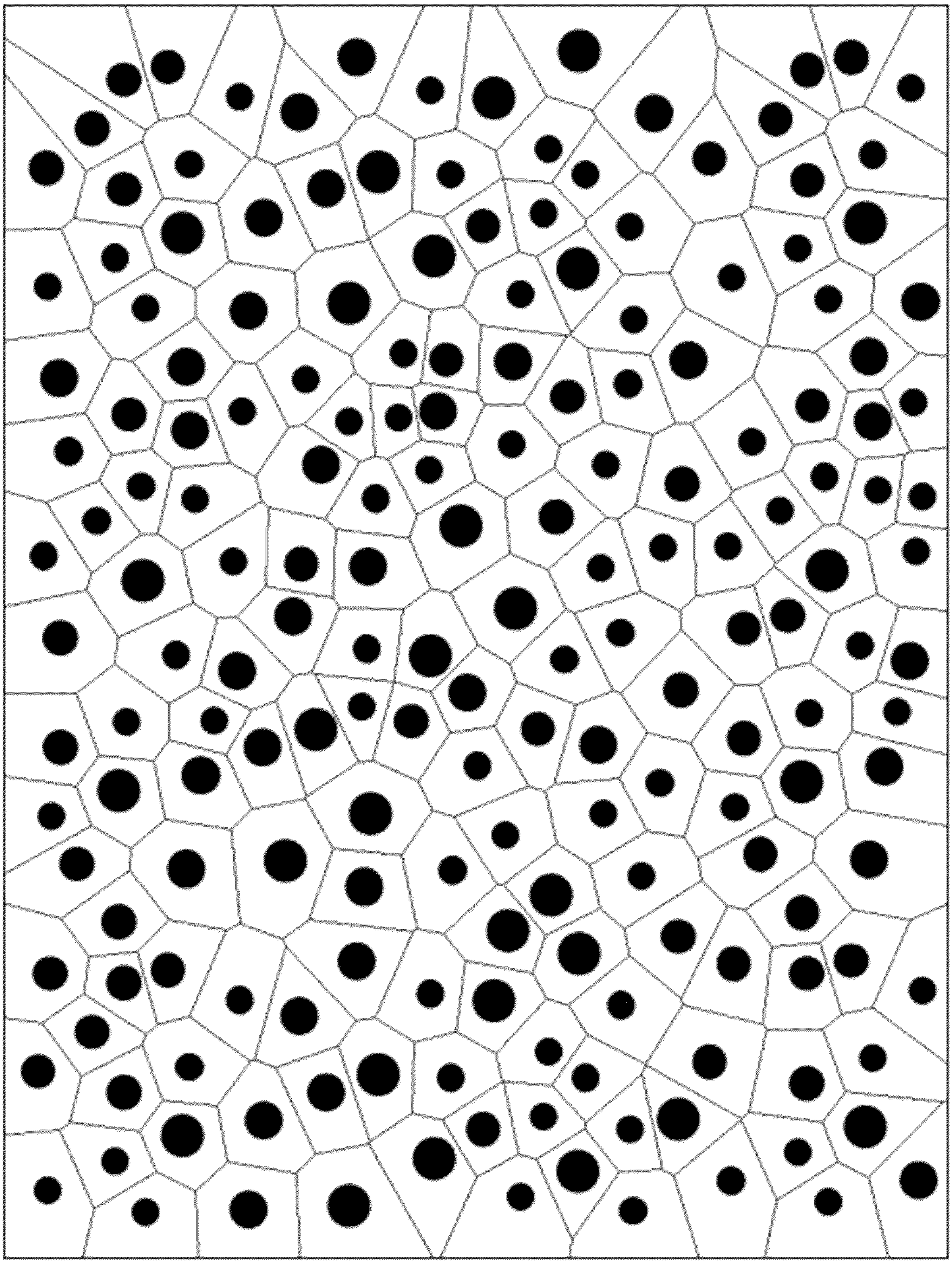

Fig. 6

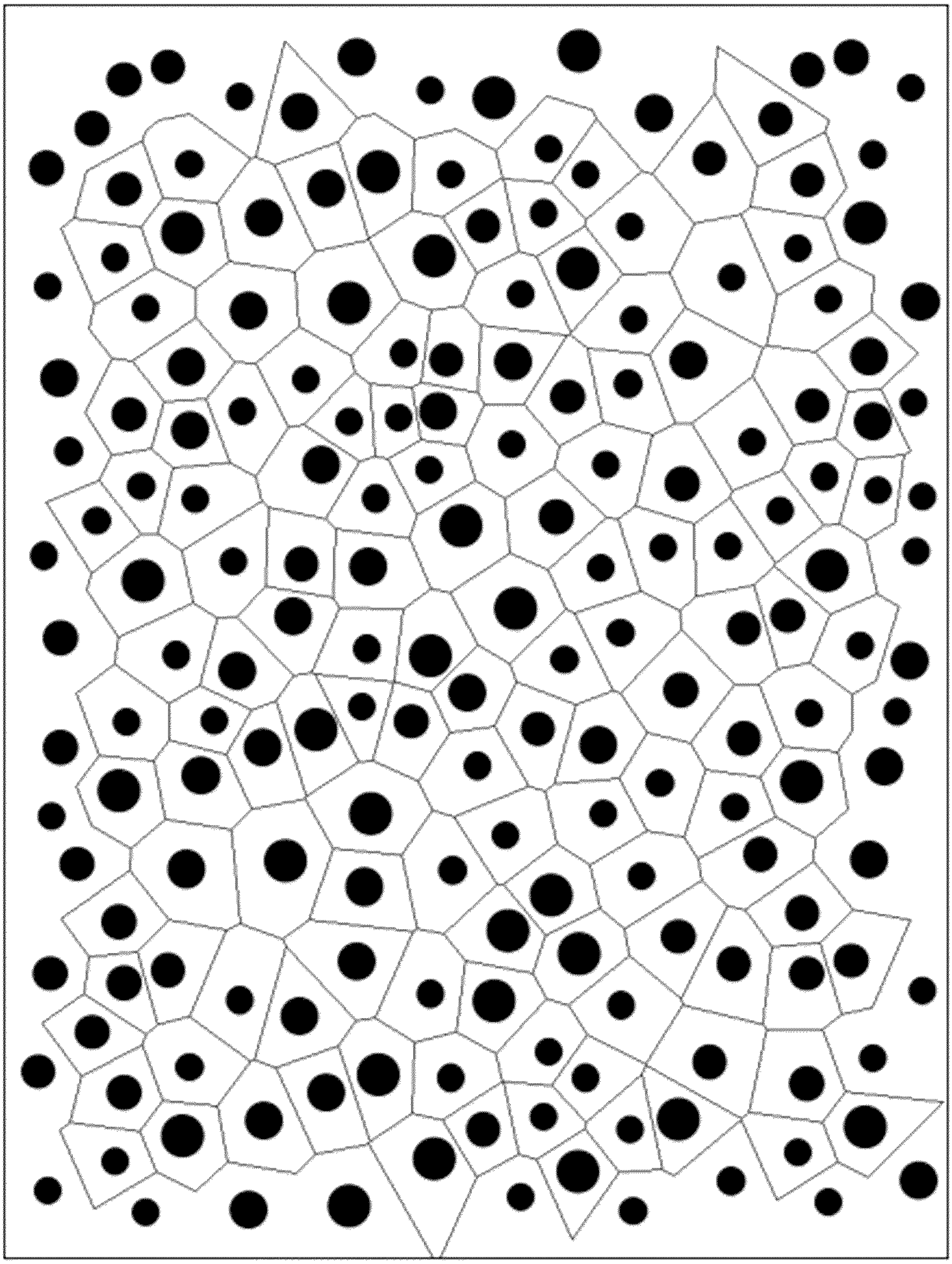

Fig. 7

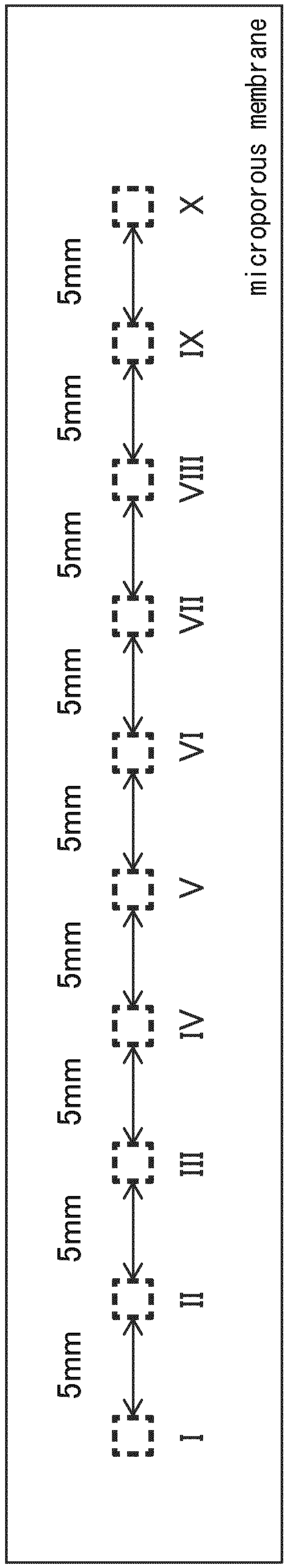
microporous membrane
I
II
III
IV
V
VI
VII
VIII
IX
X
5mm
5mm
5mm
5mm
5mm
5mm
5mm
5mm
5mm

**INTERNATIONAL SEARCH REPORT**

International application No.
**PCT/JP2023/019757**

**A. CLASSIFICATION OF SUBJECT MATTER**

***H01M 50/451***(2021.01)i; ***B32B 5/18***(2006.01)i; ***B32B 27/18***(2006.01)i; ***B32B 27/32***(2006.01)i; ***H01G 11/52***(2013.01)i; ***H01M 50/414***(2021.01)i; ***H01M 50/417***(2021.01)i; ***H01M 50/434***(2021.01)i; ***H01M 50/437***(2021.01)i; ***H01M 50/443***(2021.01)i; ***H01M 50/446***(2021.01)i; ***H01M 50/463***(2021.01)i; ***H01M 50/489***(2021.01)i

FI: H01M50/451; H01M50/417; H01M50/434; H01M50/437; H01M50/446; H01M50/443 B; H01M50/443 E; H01M50/414; H01M50/463 A; H01M50/489; B32B5/18; B32B27/32; B32B27/18 Z; H01G11/52; H01M50/443 M

According to International Patent Classification (IPC) or to both national classification and IPC

**B. FIELDS SEARCHED**

Minimum documentation searched (classification system followed by classification symbols)

H01M50/451; B32B5/18; B32B27/18; B32B27/32; H01G11/52; H01M50/414; H01M50/417; H01M50/434; H01M50/437; H01M50/443; H01M50/446; H01M50/463; H01M50/489

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2016/152026 A1 (ZEON CORPORATION) 29 September 2016 (2016-09-29) paragraph [0086], examples, claims | 1-3, 5-11 |
| X | CN 111668427 A (CANGZHOU MINGZHU LITHIUM ION BATTERY SEPARATOR CO., LTD.) 15 September 2020 (2020-09-15) claims, paragraph [0023], examples | 1-11 |
| A | WO 2020/175079 A1 (ZEON CORPORATION) 03 September 2020 (2020-09-03) entire text | 1-11 |
| A | CN 112940650 A (SHENZHEN HAODIAN TECHNOLOGY CO., LTD.) 11 June 2021 (2021-06-11) entire text | 1-11 |
| A | KR 10-2016-0118979 A (LG CHEM, LTD.) 12 October 2016 (2016-10-12) entire text | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 August 2023** | **15 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/019757**

| Patent document cited in search report | Publication date (day/month/year) | Patent family member(s) | Publication date (day/month/year) |
|---|---|---|---|
| WO 2016/152026 A1 | 29 September 2016 | US 2018/0053963 A1<br>paragraph [0153], examples, claims<br>EP 3273506 A1<br>CN 107431169 A<br>KR 10-2017-0129125 A | |
| CN 111668427 A | 15 September 2020 | (Family: none) | |
| WO 2020/175079 A1 | 03 September 2020 | US 2022/0190439 A1<br>entire text<br>EP 3933958 A1<br>CN 112956072 A<br>KR 10-2021-0132000 A | |
| CN 112940650 A | 11 June 2021 | (Family: none) | |
| KR 10-2016-0118979 A | 12 October 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020160118979
- WO 2020175079 A
- WO 2021085144 A
- WO 2016047165 A

### Non-patent literature cited in the description

- Polymer Handbook. Wiley-Interscience